# EUROPEAN PATENT SPECIFICATION

(11) **EP 3 130 650 B1**
(45) Date of publication and mention of the grant of the patent: **04.07.2018**
(21) Application number: 16001562.4
(22) Date of filing: 14.07.2016
(51) Int. Cl.: C09K 19/06, C09K 19/30, C09K 19/46, C09K 19/34

(54) **LIQUID-CRYSTALLINE MEDIUM**
FLÜSSIGKRISTALLINES MEDIUM
MILIEU À BASE DE CRISTAUX LIQUIDES

(30) Priority: 10.08.2015 EP 15002376
(43) Date of publication of application: 15.02.2017
(73) Proprietor: Merck Patent GmbH, 64293 Darmstadt (DE)
(72) Inventor: Akihiro, Kojima, Atsugi-shi, Kanagawa, 243-0813 (JP); Fumio, Shimano, Miura-shi, Kanagawa, 238-0111 (JP)

(56) References cited:
- EP-A1- 2 883 934
- EP-A1- 2 985 334

## Description

The invention relates to a liquid-crystalline medium which comprises at least one compound of the formula I, 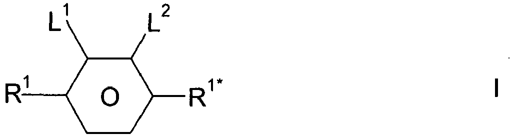 and
at least one compound of the formula 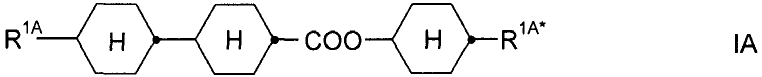 in which
- R¹, R^{1*} , R^{1A} and R^{1A*}: each, independently of one another, denote an alkyl or alkoxy radical having 1 to 15 C atoms, where, in addition, one or more CH₂ groups in these radicals may each be replaced, independently of one another, by -C≡C-, -CF₂O-, -CH=CH-, 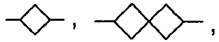 -O-, -CO-O-, -O-CO- in such a way that O atoms are not linked directly to one another, and in which, in addition, one or more H atoms may be replaced by halogen, and
- L¹ and L²: each, independently of one another, denote F, Cl, CF₃ or CHF₂,
and
additionally comprises one or more compounds selected from the group of compounds of the formula BC, CR, PH-1, PH-2, BF and BS, 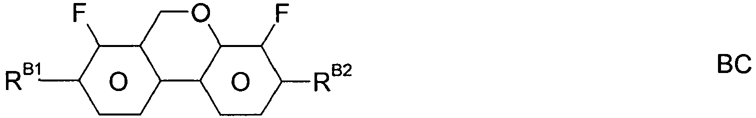 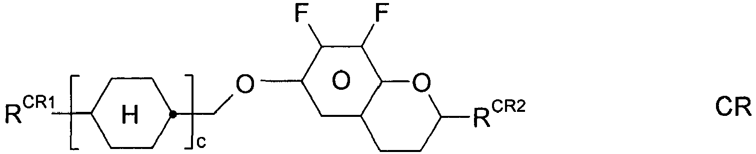 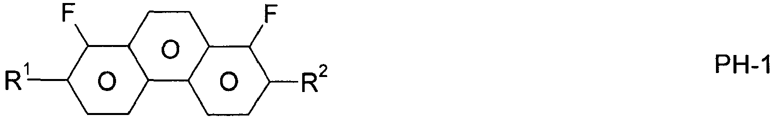 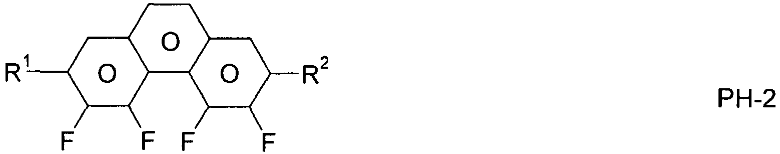 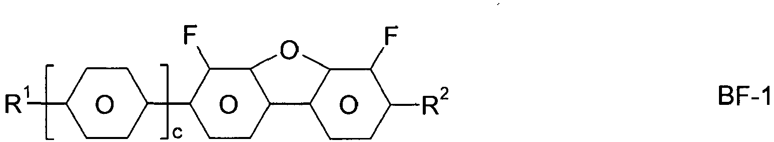 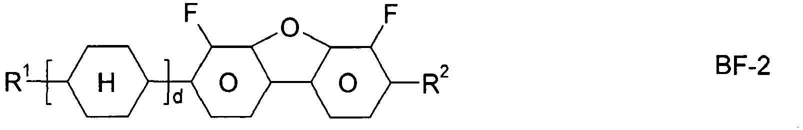 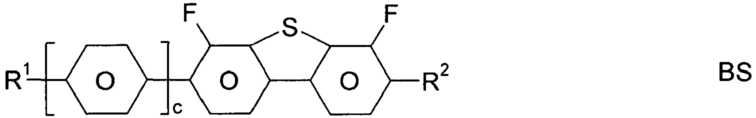 in which
- R^{B1}, R^{B2}, R^{CR1}, R^{CR2}, R¹, R²: each, independently of one another, have the meaning of R^{2A} in Claim 6,
- c: denotes 0, 1 or 2, and
- d: denotes 1 or 2.

Media of this type can be used, in particular, for electro-optical displays having active-matrix addressing based on the ECB effect and for IPS (in-plane switching) displays or FFS (fringe field switching) displays.

The principle of electrically controlled birefringence, the ECB effect or also DAP (deformation of aligned phases) effect, was described for the first time in 1971 (M.F. Schieckel and K. Fahrenschon, "Deformation of nematic liquid crystals with vertical orientation in electrical fields", Appl. Phys. Lett. 19 (1971), 3912). This was followed by papers by J.F. Kahn (Appl. Phys. Lett. 20 (1972), 1193) and G. Labrunie and J. Robert (J. Appl. Phys. 44 (1973), 4869).

The papers by J. Robert and F. Clerc (SID 80 Digest Techn. Papers (1980), 30), J. Duchene (Displays 7 (1986), 3) and H. Schad (SID 82 Digest Techn. Papers (1982), 244) showed that liquid-crystalline phases must have high values for the ratio of the elastic constants K₃/K₁, high values for the optical anisotropy Δn and values for the dielectric anisotropy of Δε ≤ -0.5 in order to be suitable for use in high-information display elements based on the ECB effect. Electro-optical display elements based on the ECB effect have a homeotropic edge alignment (VA technology = vertically aligned). Dielectrically negative liquid-crystal media can also be used in displays which use the so-called IPS or FFS effect.

Displays which use the ECB effect, as so-called VAN (vertically aligned nematic) displays, for example in the MVA (multi-domain vertical alignment, for example: Yoshide, H. et al., paper 3.1: "MVA LCD for Notebook or Mobile PCs ...", SID 2004 International Symposium, Digest of Technical Papers, XXXV, Book I, pp. 6 to 9, and Liu, C.T. et al., paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, paper 15.4: "Super PVA Sets New State-of-the-Art for LCD-TV", SID 2004 International Symposium, Digest of Technical Papers, XXXV, Book II, pp. 760 to 763), ASV (advanced super view, for example: Shigeta, Mitzuhiro and Fukuoka, Hirofumi, paper 15.2: "Development of High Quality LCDTV", SID 2004 International Symposium, Digest of Technical Papers, XXXV, Book II, pp. 754 to 757) modes, have established themselves as one of the three more recent types of liquid-crystal display that are currently the most important, in particular for television applications, besides IPS (in-plane switching) displays (for example: Yeo, S.D., paper 15.3: "An LC Display for the TV Application", SID 2004 International Symposium, Digest of Technical Papers, XXXV, Book II, pp. 758 & 759) and the long-known TN (twisted nematic) displays. The technologies are compared in general form, for example, in Souk, Jun, SID Seminar 2004, seminar M-6: "Recent Advances in LCD Technology", Seminar Lecture Notes, M-6/1 to M-6/26, and Miller, Ian, SID Seminar 2004, seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular on switching of grey shades, is still a problem which has not yet been satisfactorily solved.

Industrial application of this effect in electro-optical display elements requires LC phases, which have to satisfy a multiplicity of requirements. Particularly important here are chemical resistance to moisture, air and physical influences, such as heat, infrared, visible and ultraviolet radiation and direct and alternating electric fields.

Furthermore, industrially usable LC phases are required to have a liquid-crystalline mesophase in a suitable temperature range and low viscosity.

None of the hitherto-disclosed series of compounds having a liquid-crystalline mesophase includes a single compound which meets all these requirements. Mixtures of two to 25, preferably three to 18, compounds are therefore generally prepared in order to obtain substances which can be used as LC phases. However, it has not been possible to prepare optimum phases easily in this way since no liquid-crystal materials having significantly negative dielectric anisotropy and adequate long-term stability were hitherto available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate
2. thin-film transistors (TFTs) on a glass plate as substrate.

In the case of type 1, the electro-optical effect used is usually dynamic scattering or the guest-host effect. The use of single-crystal silicon as substrate material restricts the display size, since even modular assembly of various part-displays results in problems at the joints.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The term MLC displays here covers any matrix display with integrated non-linear elements, i.e. besides the active matrix, also displays with passive elements, such as varistors or diodes (MIM = metal-insulator-metal).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORI-MACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

There thus continues to be a great demand for MLC displays having very high specific resistance at the same time as a large working-temperature range, short response times and a low threshold voltage with the aid of which various grey shades can be produced.

The disadvantage of the frequently-used MLC-TN displays is due to their comparatively low contrast, the relatively high viewing-angle dependence and the difficulty of generating grey shades in these displays.

VA displays have significantly better viewing-angle dependencies and are therefore principally used for televisions and monitors. However, there continues to be a need here to improve the response times, in particular with respect to the use of televisions having frame rates (image change frequency/repetition rates) of greater than 60 Hz. At the same time, however, the properties, such as, for example, the low-temperature stability, must not be impaired.

The invention is based on the object of providing liquid-crystal mixtures, in particular for monitor and TV applications, which are based on the ECB effect or on the IPS or FFS effect, which do not have the above-mentioned disadvantages or only do so to a reduced extent. In particular, it must be ensured for monitors and televisions that they also operate at extremely high and extremely low temperatures and at the same time have short response times and at the same time have improved reliability behaviour, in particular have no or significantly reduced image sticking after long operating times.

Surprisingly, it is possible to improve the rotational viscosities and thus the response times if polar compounds of the general formula I are used in liquid-crystal mixtures, in particular in LC mixtures having negative dielectric anisotropy, preferably for VA displays.

So-called monocyclic compounds (compounds having one ring) which are known from EP 2 985 334 A1 and EP 2 883 934 A1 generally cannot be used in nematic liquid-crystal mixtures owing to their poor phase properties and low clearing points. However, the compounds of the formula I have, surprisingly, simultaneously very low rotational viscosities and high absolute values of the dielectric anisotropy. It is therefore possible to prepare liquid-crystal mixtures, preferably VA mixtures, which have short response times, at the same time good phase properties and good low-temperature behaviour.

The invention thus relates to a liquid-crystalline medium according to Claim 1 which comprises at least one compound of the formula I and at least one compound of the formula IA and additionally one or more compounds selected from the group of compounds of the formula BC, CR, PH-1, PH-2, BF and BS. The liquid-crystalline medium according to the present invention is in particular suitable for VA, PS (= polymer stabilized)-VA, MVA, PVA, PALC, IPS, PS-IPS, FFS, UB-FFS, PS-FFS, and in particular for passive matrix applications.

The mixtures according to the invention preferably exhibit very broad nematic phase ranges having clearing points ≥ 70°C, preferably ≥ 75°C, in particular ≥ 80°C, very favourable values for the capacitive threshold, relatively high values for the holding ratio and at the same time very good low-temperature stabilities at -20°C and -30°C, as well as very low rotational viscosities and short response times. The mixtures according to the invention are furthermore distinguished by the fact that, in addition to the im provement in the rotational viscosity γ1, relatively high values of the elastic constant K₃₃ for improving the response times can be observed.

Some preferred embodiments of the mixtures according to the invention are indicated below.

In the compounds of the formula I, R¹ and R¹* each, independently of one another, preferably denote straight-chain alkoxy, in particular OC₂H₅, OC₃H₇, OC₄H₉, OC₅H₁₁, OC₆H₁₃, furthermore alkenyloxy, in particular OCH₂CH=CH₂, OCH₂CH=CHCH₃, OCH₂CH=CHC₂H₅, furthermore alkyl, in particular n-C₃H₇, n-C₄H₉, n-C₅H₁₁, n-C₆H₁₃.

Preferred compounds of the formula I are the compounds of the formulae I-1 to I-10, 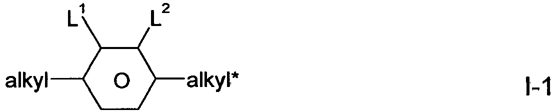 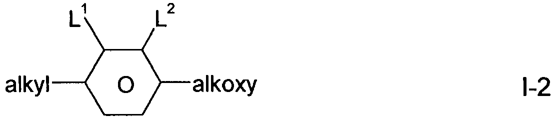 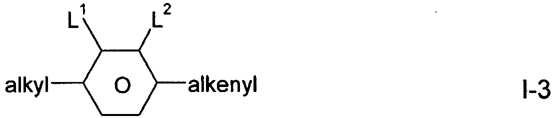 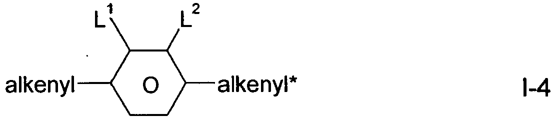 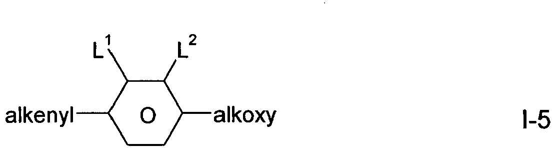 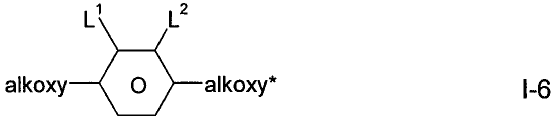 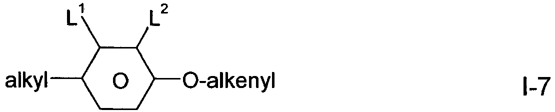 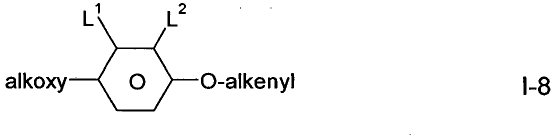 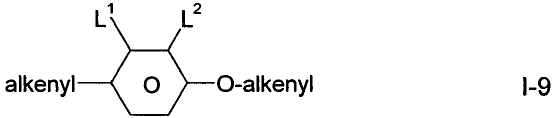 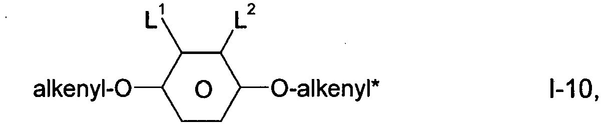 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-8 C atoms, and L¹ and L² each, independently of one another, denote F or Cl.

In the compounds of the formulae I-1 to I-10, L¹ and L² each, independently of one another, preferably denote F or Cl, in particular F. Particular preference is given to the compounds of the formula I-6. In the formula I-6, preferably L¹ = L² = F.

The mixture according to the invention very particularly preferably comprises at least one compound of the formula I-6A or I-6B:

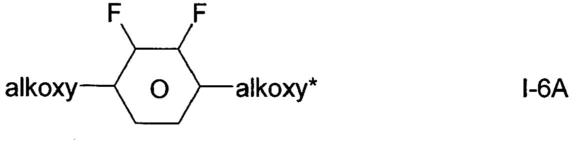

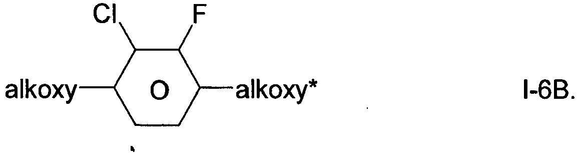

The mixtures according to the invention very particularly preferably comprise at least one compound from the following group:

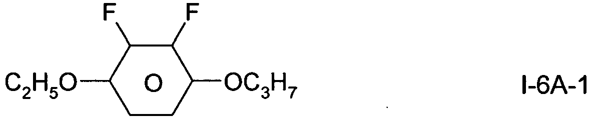

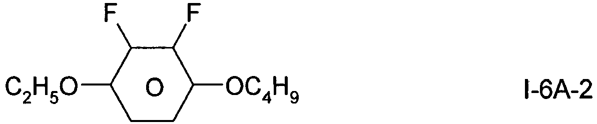

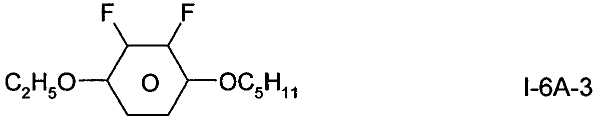

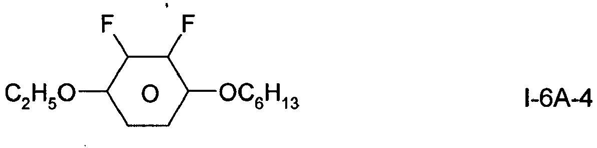

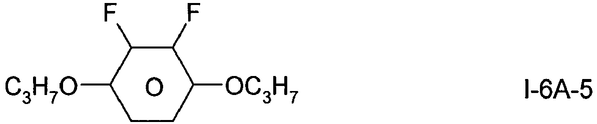

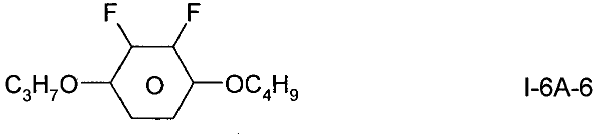

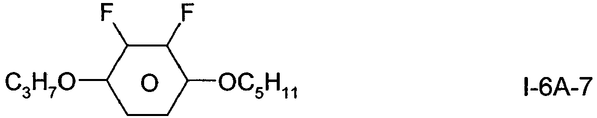

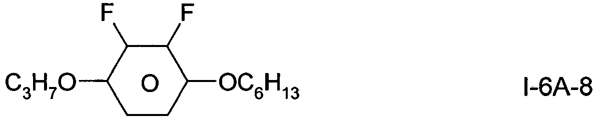

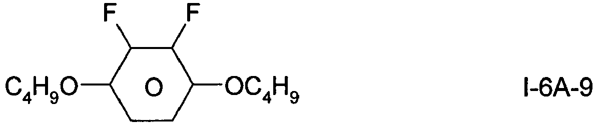

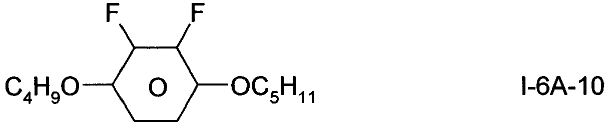

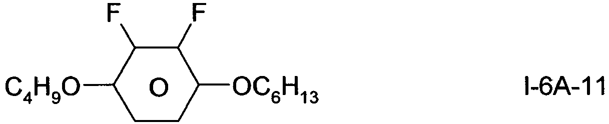

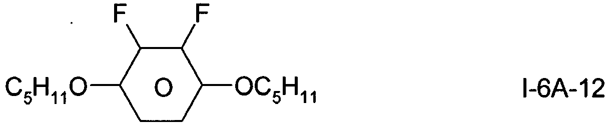

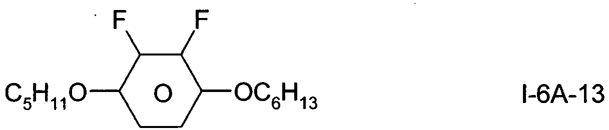

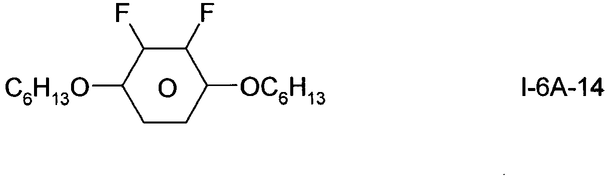

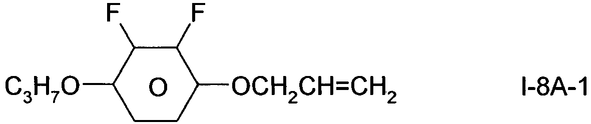

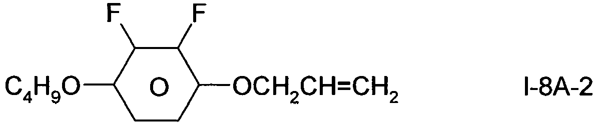

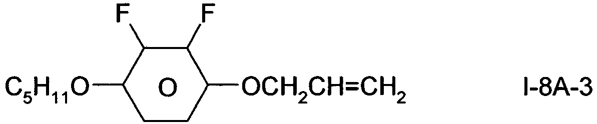

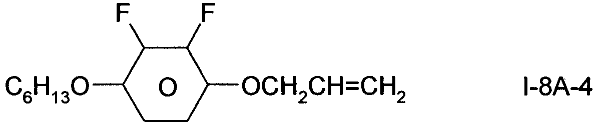

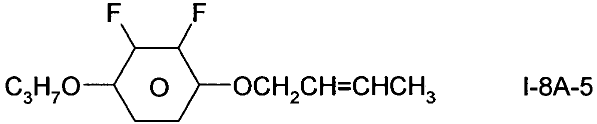

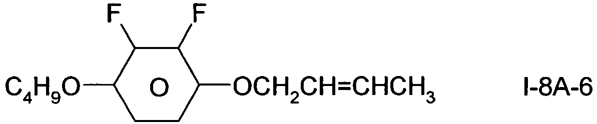

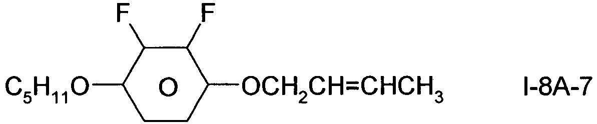

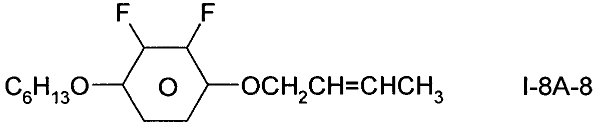

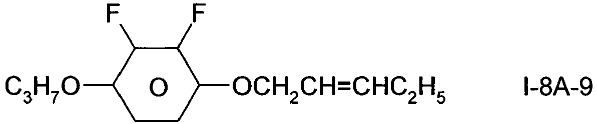

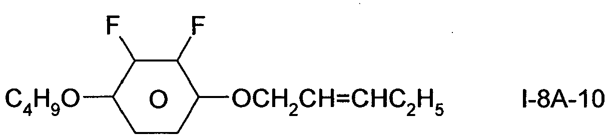

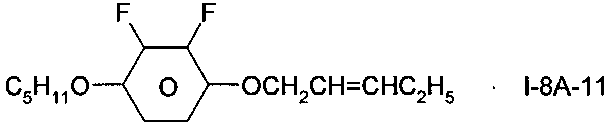

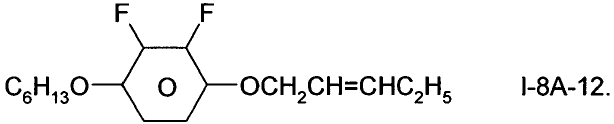

In the compounds of the formula I and the sub-formulae, L¹ and L² each, independently of one another, preferably denote F or Cl, in particular F. R¹ and R^{1*} preferably both denote alkoxy.

The compounds of the formula I can be prepared, for example, as follows:

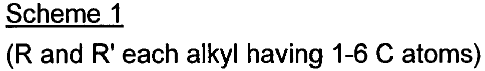

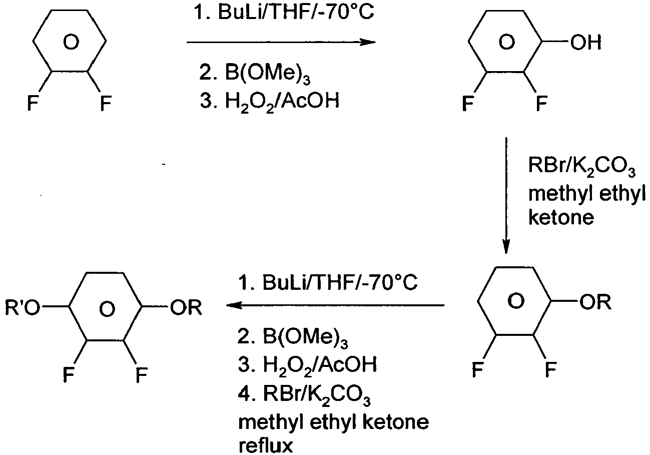

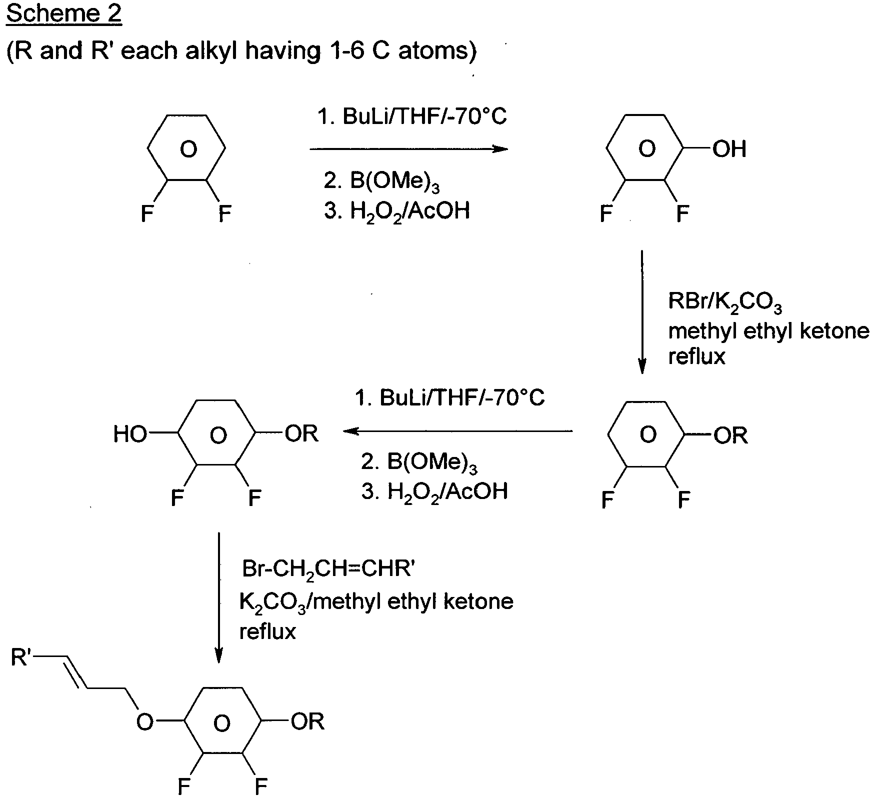

Preferred LC media contain one, two, three, four or more, preferably one, two or three, compounds of the formula I in particular at least one compound of the formula I-6A-1 to I-6A-14 and I-8A-1 to I-8A-12.

The compounds of the formula I are preferably employed in the liquid-crystalline medium in amounts of ≥ 1% by weight, preferably ≥ 5% by weight, based on the mixture as a whole. Particular preference is given to liquid-crystalline media which comprise 2 - 15% by weight of one or more compounds of the formula I.

In the compounds of the formula IA R¹ and R¹* each, independently of one another, preferably denote straight-chain alkyl, in particular C₂H₅, C₃H₇, C₄H₉, C₅H₁₁, C₆H₁₃, furthermore alkenyloxy, in particular OCH₂CH=CH₂, OCH₂CH=CHCH₃, OCH₂CH=CHC₂H₅.

Preferred compounds of the formula IA are the compounds of the formulae IA-1 to IA-8,

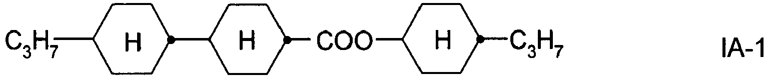

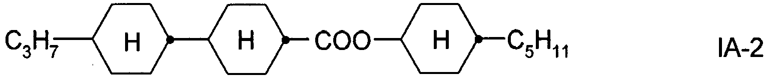

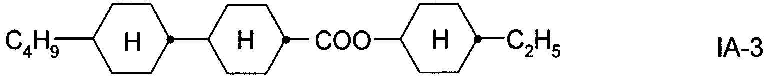

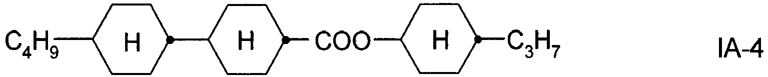

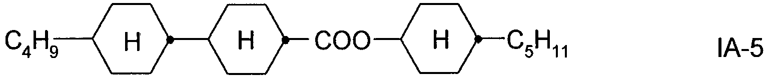

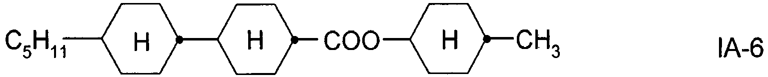

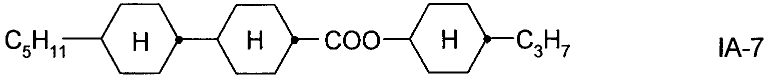

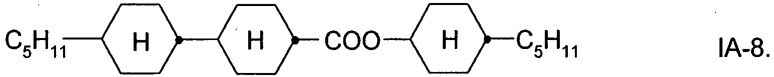

Especially preferred are the compounds of the formula IA-1, IA-2, IA-4, and IA-5.

The media according to the invention preferably comprise one, two, three, four or more, preferably two or three, compounds of the formula IA.

The compounds of the formula IA are preferably employed in the liquid-crystalline medium in amounts of 1-25 % by weight, preferably 2-20 % by weight, based on the mixture as a whole. Particular preference is given to liquid-crystalline media which comprise 2-15 % by weight of one or more compounds of the formula IA.

Preferred embodiments of the liquid-crystalline medium according to the invention are indicated below:
a) Liquid-crystalline medium which additionally comprises one or more compounds selected from the group of the compounds of the formulae IIA, IIB and IIC: 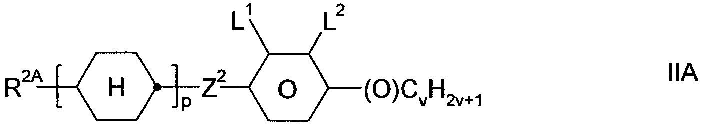 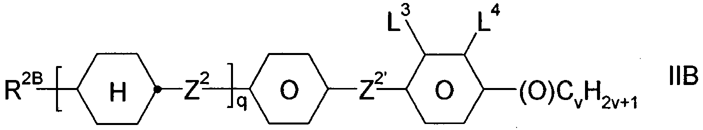 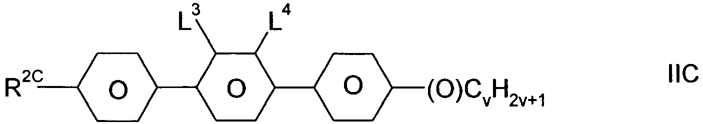 in which
   - R^{2A}, R^{2B} and R^{2C}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 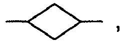 -C≡C-, -CF₂O-, -OCF₂-, -OC-O- or -O-CO- in such a way that O atoms are not linked directly to one another,
   - L¹⁻⁴: each, independently of one another, denote F, Cl, CF₃ or CHF2,
   - Z² and Z^{2'}: each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: denotes 1 or 2,
   - q: denotes 0 or 1, and
   - v: denotes 1 to 6.

In the compounds of the formulae IIA and IIB, Z² may have identical or different meanings. In the compounds of the formula IIB, Z² and Z^{2'} may have identical or different meanings.

In the compounds of the formulae IIA, IIB and IIC, R^{2A}, R^{2B} and R^{2C} each preferably denote alkyl having 1-6 C atoms, in particular CH₃, C₂H₅, n-C₃H₇, n-C₄H₉, n-C₅H₁₁. and further alkenyl having 2-6 C atoms, in particular CH₂=CH, CH₃CH=CH₂, CH₃CH₂CH=CH₂, CH₃CH=CH₂CH₂CH₂, CH₂=CHCH₂CH₂.

In the compounds of the formulae IIA and IIB, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z²' in the formulae IIA and IIB preferably each, independently of one another, denote a single bond, furthermore a -C₂H₄- bridge. If in the formula IIB Z² = -C₂H₄-, Z^{2'} is preferably a single bond or, if Z^{2'} = -C₂H₄-, Z² is preferably a single bond. In the compounds of the formulae IIA and IIB, (O)CᵥH₂ᵥ₊₁ preferably denotes OCᵥH₂ᵥ₊₁, furthermore CᵥH₂ᵥ₊₁. In the compounds of the formula IIC, (O)CᵥH₂ᵥ₊₁ preferably denotes CᵥH₂ᵥ₊₁. In the compounds of the formula IIC, L³ and L⁴ preferably each denote F.

Preferred compounds of the formulae IIA, IIB and IIC are indicated below:

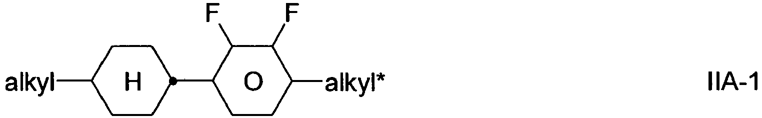

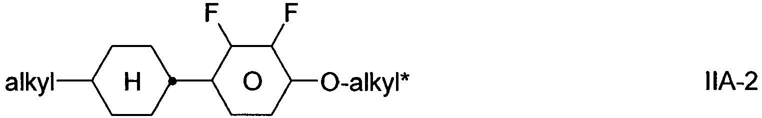

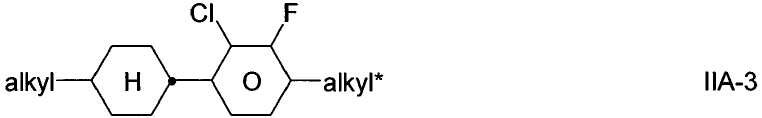

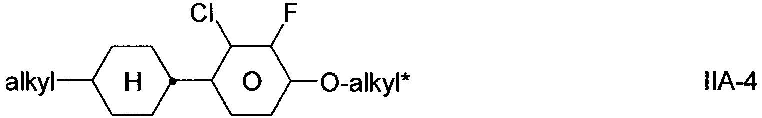

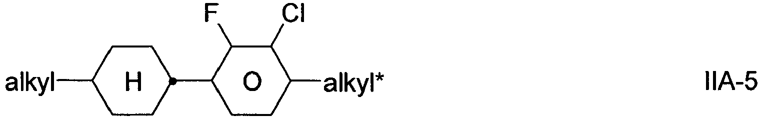

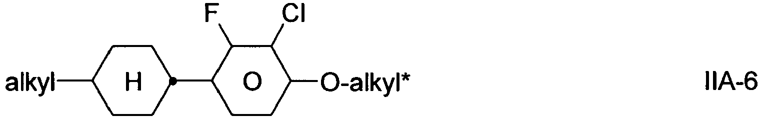

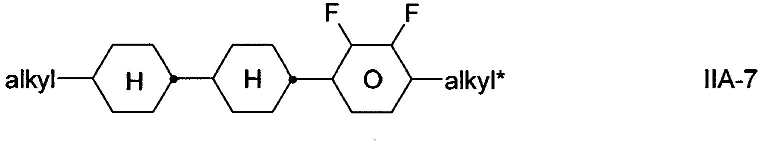

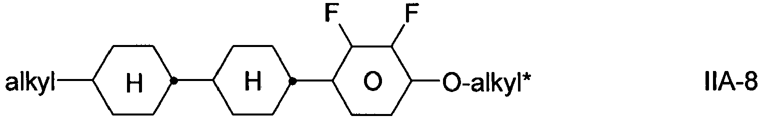

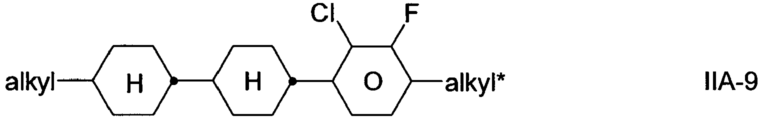

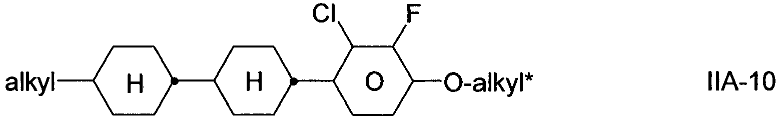

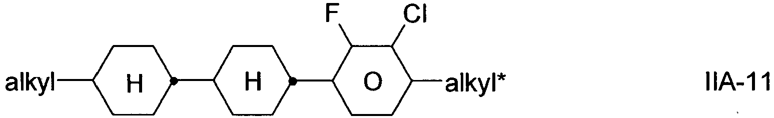

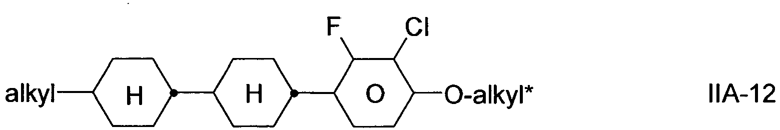

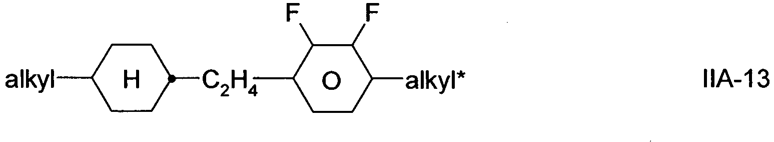

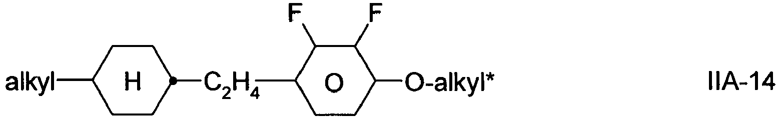

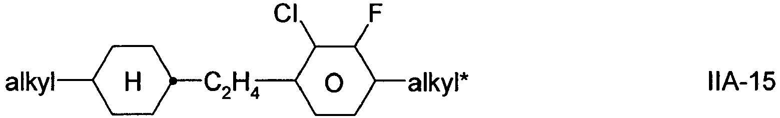

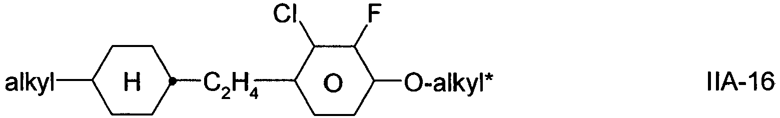

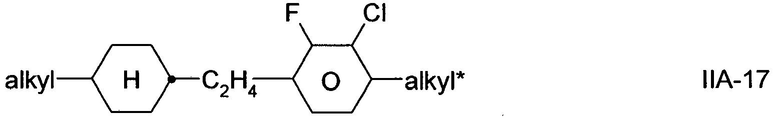

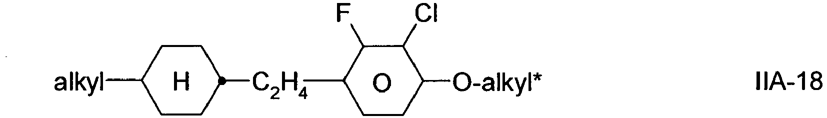

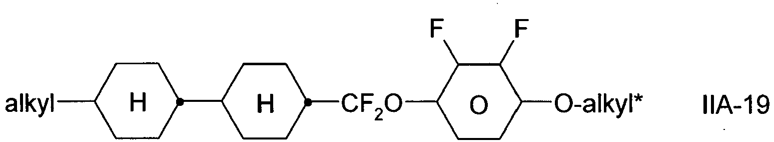

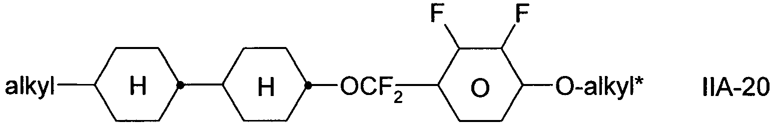

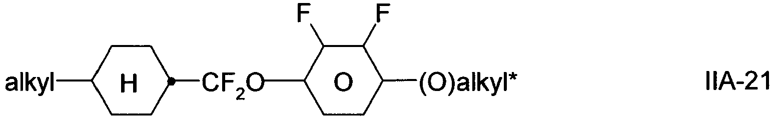

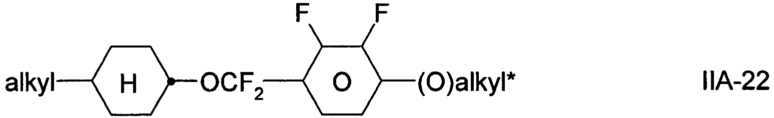

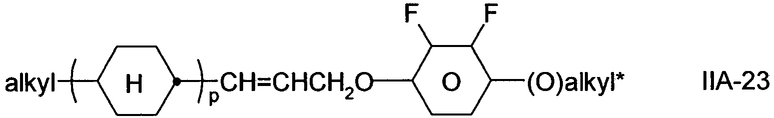

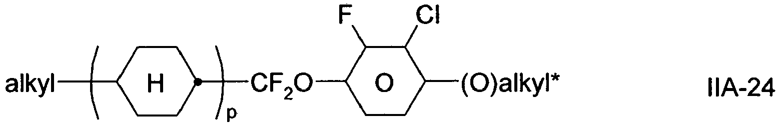

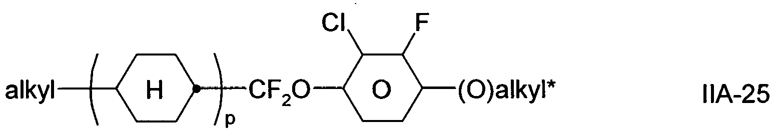

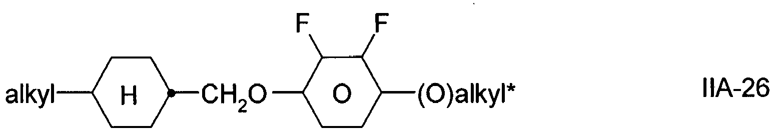

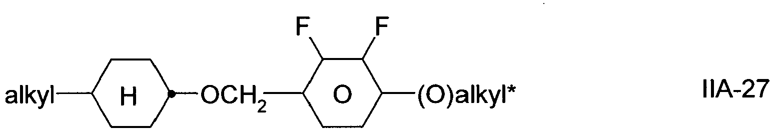

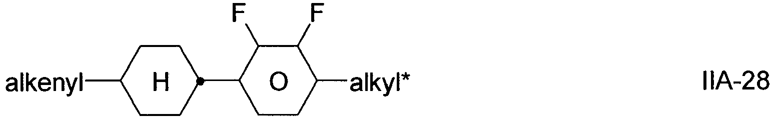

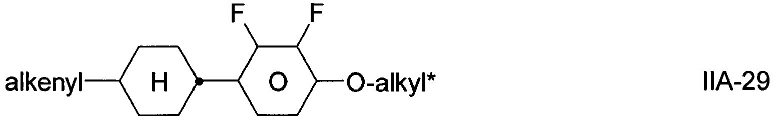

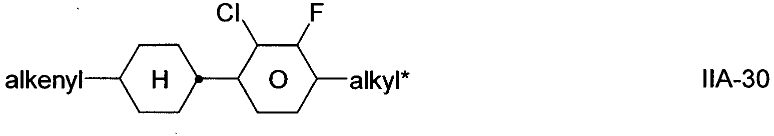

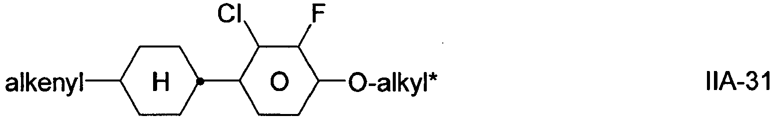

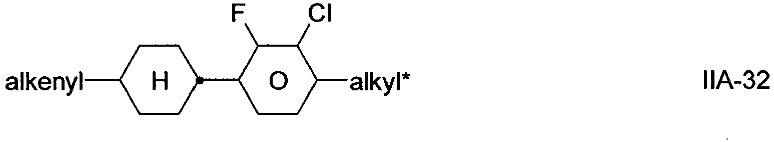

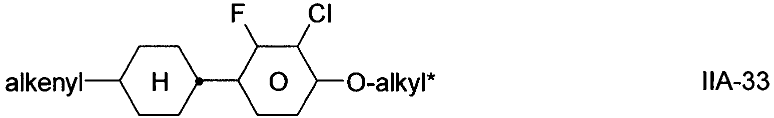

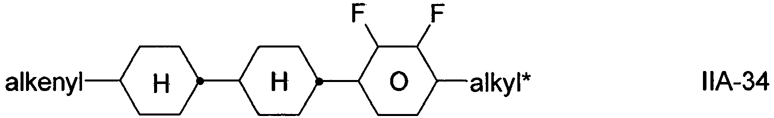

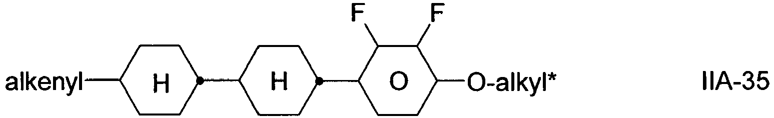

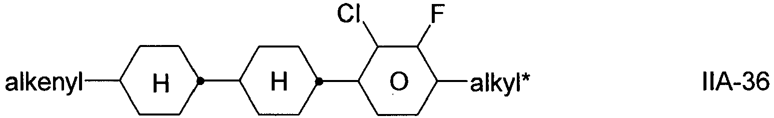

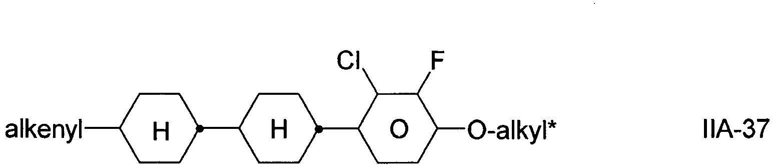

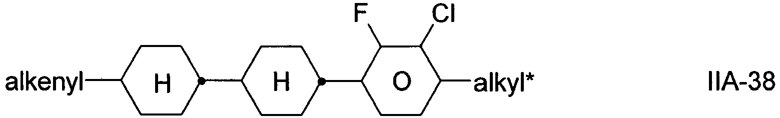

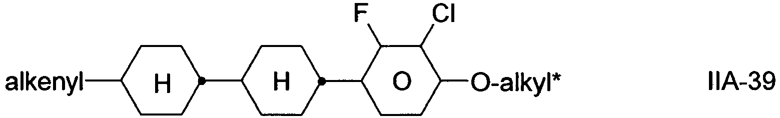

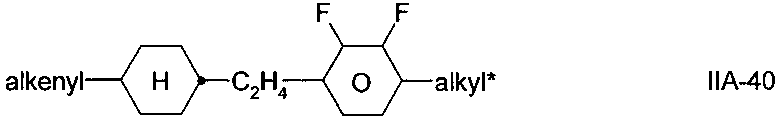

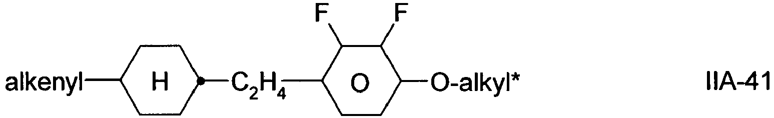

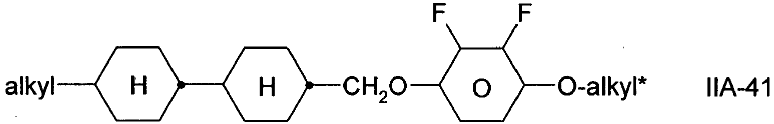

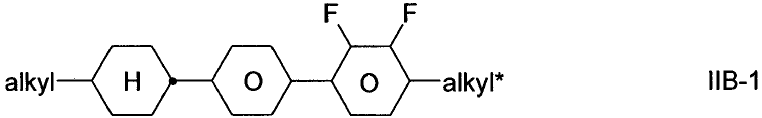

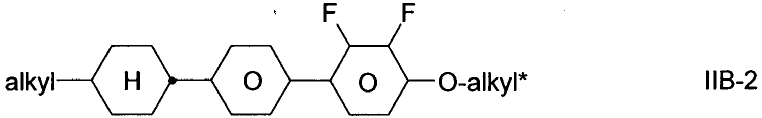

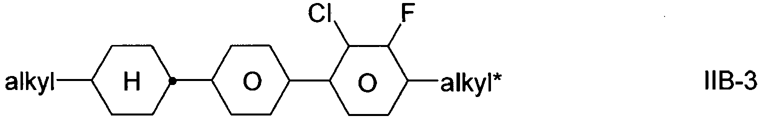

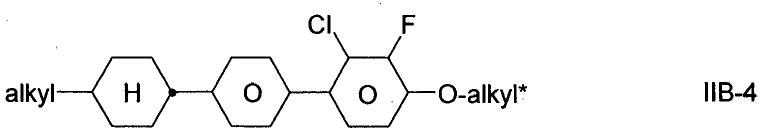

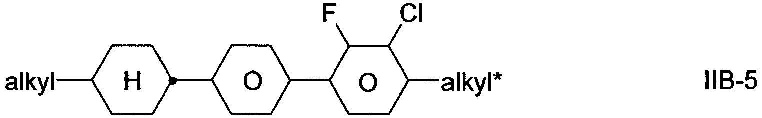

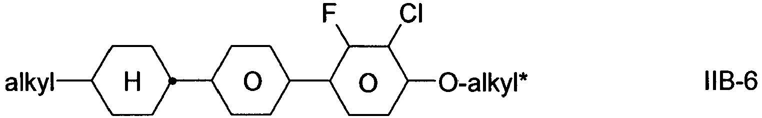

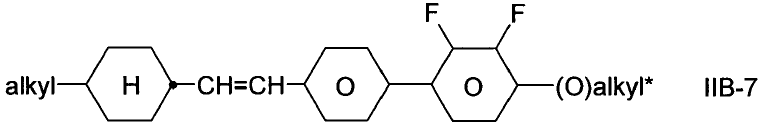

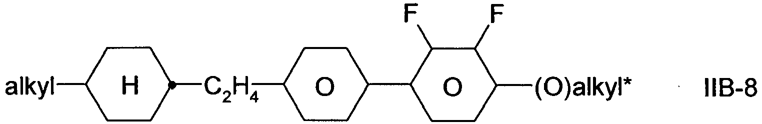

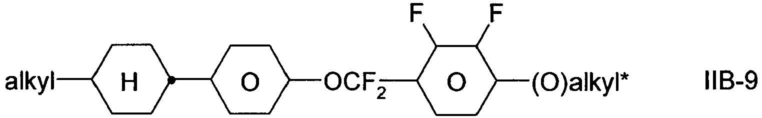

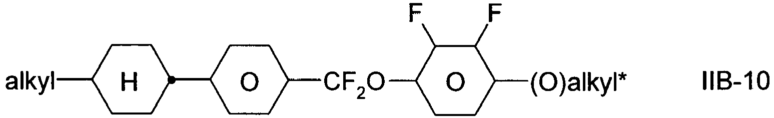

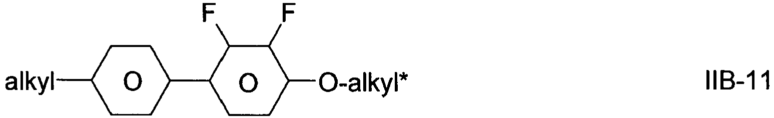

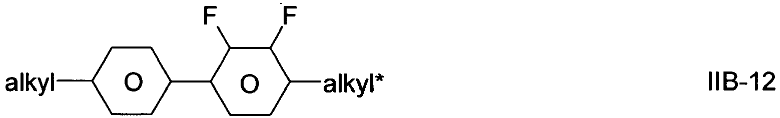

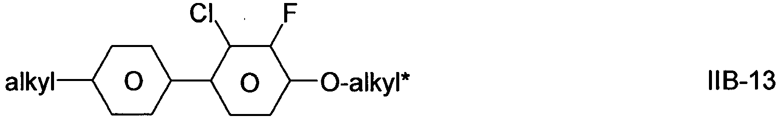

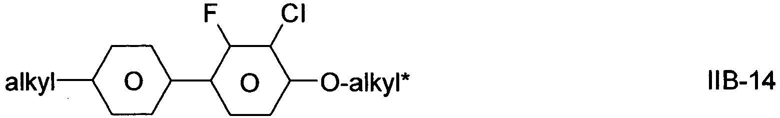

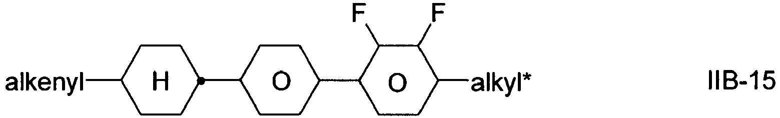

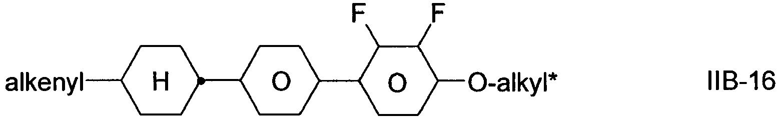

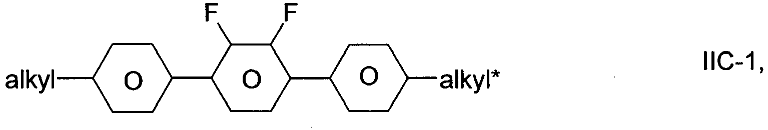

in which alkyl and alkyl* each, independently of one another, denote a straight-chain alkyl radical having 1-6 C atoms and alkenyl denotes a straight-chain alkenyl radical having 2-6 C atoms.

Particularly preferred mixtures according to the invention comprise one or more compounds of the formulae IIA-2, IIA-8, IIA-14, IIA-29, IIA-35, IIA-41, IIB-2, IIB-11, IIB-16 and IIC-1.

The proportion of compounds of the formulae IIA and/or IIB in the mixture as a whole is preferably at least 20% by weight.

Particularly preferred media according to the invention comprise at least one compound of the formula IIC-1, 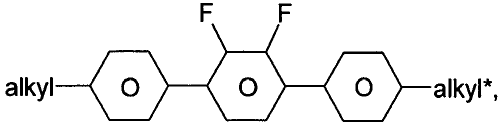 in which alkyl and alkyl* have the meanings indicated above, preferably in amounts of > 3% by weight, in particular > 5% by weight and particularly preferably 5-25% by weight.
b) Liquid-crystalline medium which additionally comprises one or more compounds of the formula III, 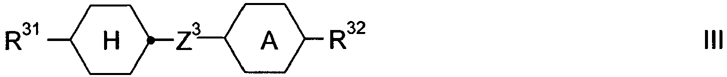 in which
   - R³¹ and R³²: each, independently of one another, denote a straight-chain alkyl, alkoxyalkyl or alkoxy radical having up to 12 C atoms, and 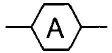 denotes 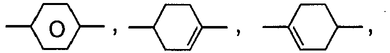 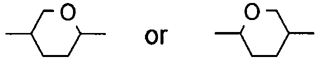
   - Z³: denotes a single bond, -CH₂CH₂-, -CH=CH-, -CF₂O-, -OCF₂-, -CH₂O-, -OCH₂-, -COO-, -OCO-, -C₂F₄-, -C₄H₈-, -CF=CF-.

Preferred compounds of the formula III are indicated below: 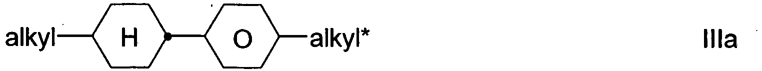 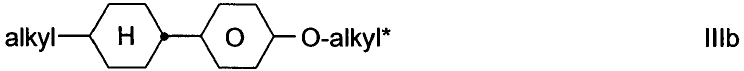 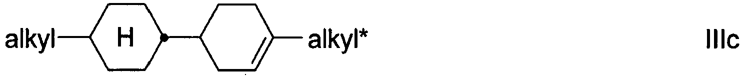 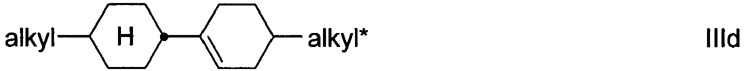 in which
alkyl and
- alkyl*: each, independently of one another, denote a straight-chain alkyl radical having 1-6 C atoms.

The medium according to the invention preferably comprises at least one compound of the formula IIIa and/or formula IIIb.

The proportion of compounds of the formula III in the mixture as a whole is preferably at least 5% by weight.
c) Liquid-crystalline medium additionally comprising a compound of the formula 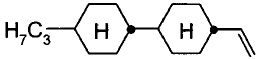 and / or 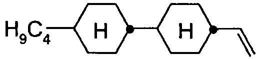 and / or 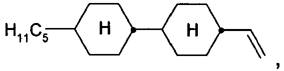
preferably in total amounts of ≥ 5% by weight, in particular ≥ 10% by weight.

Preference is furthermore given to mixtures according to the invention comprising the compounds 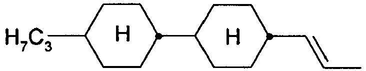 and/or 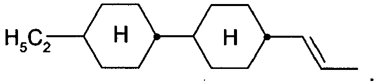
d) Liquid-crystalline medium which additionally comprises one or more tetracyclic compounds of the formulae 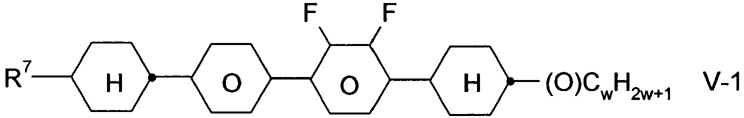 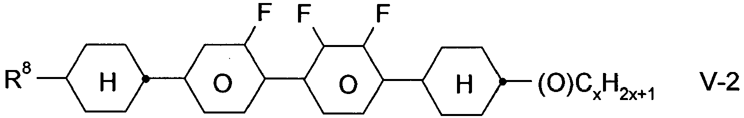 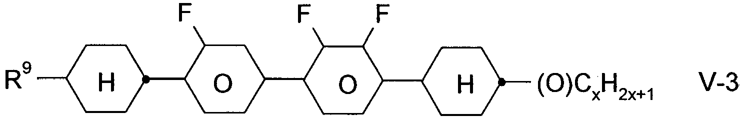 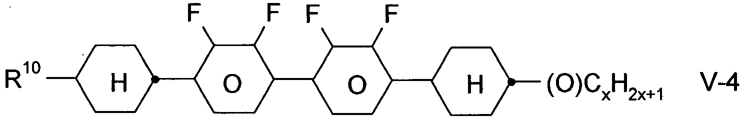 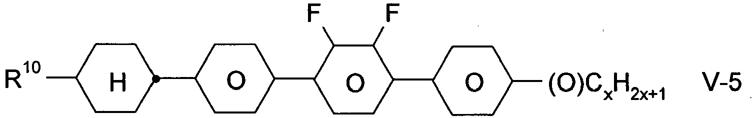 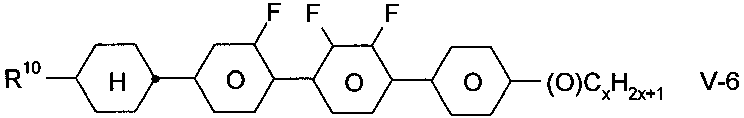 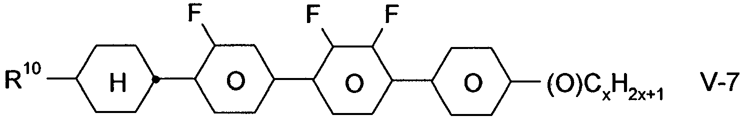 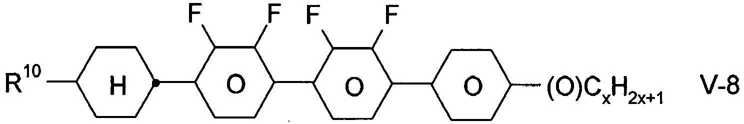 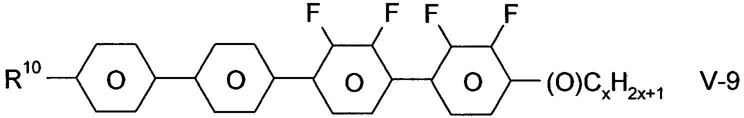 in which
   - R⁷⁻¹⁰: each, independently of one another, have one of the meanings indicated for R^{2A} in Claim 6, and
   - w and x: each, independently of one another, denote 1 to 6.

Particular preference is given to mixtures comprising at least one compound of the formula V-9.
e) Liquid-crystalline medium which additionally comprises one or more compounds of the formulae Y-1 to Y-6, 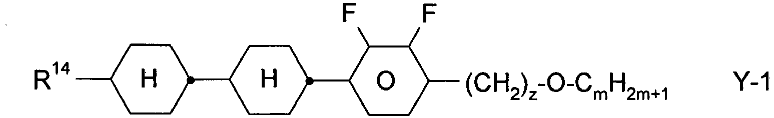 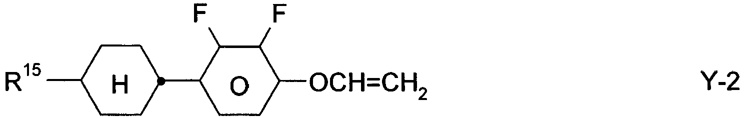 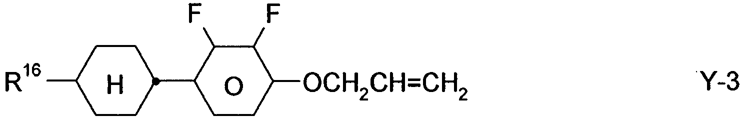 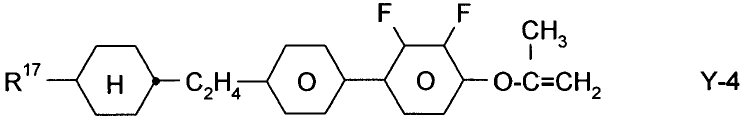 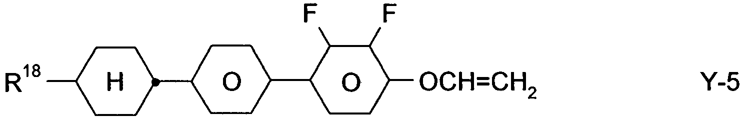 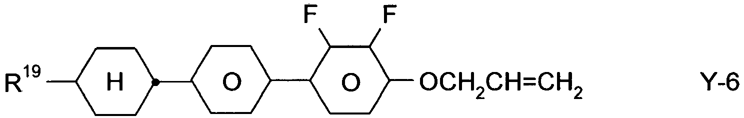
in which R¹⁴-R¹⁹ each, independently of one another, denote an alkyl or alkoxy radical having 1-6 C atoms; z and m each, independently of one another, denote 1-6; x denotes 0, 1, 2 or 3.

The medium according to the invention particularly preferably comprises one or more compounds of the formulae Y-1 to Y-6, preferably in amounts of ≥ 5% by weight.
f) Liquid-crystalline medium additionally comprising one or more fluorinated terphenyls of the formulae T-1 to T-21, 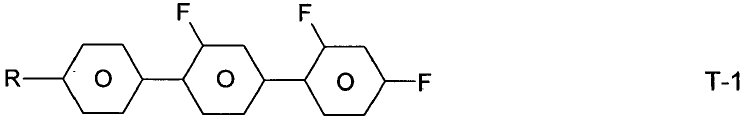 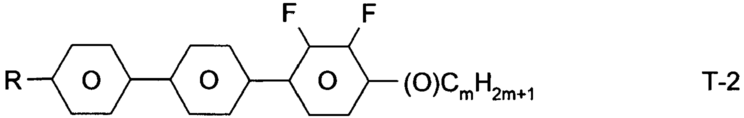 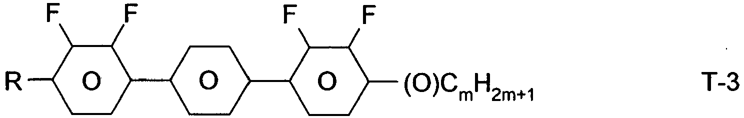 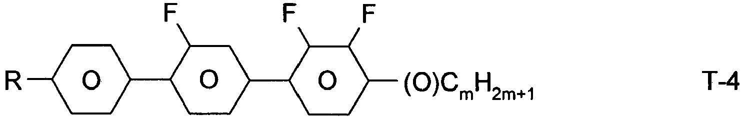 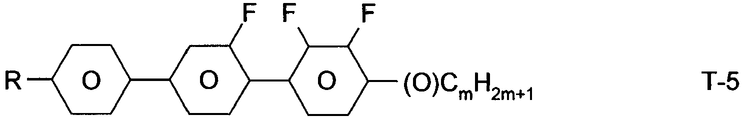 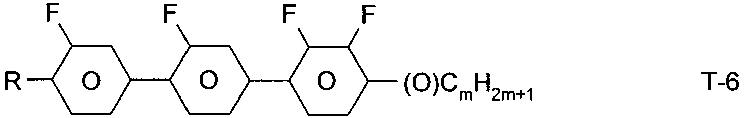 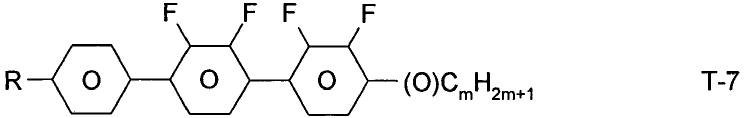 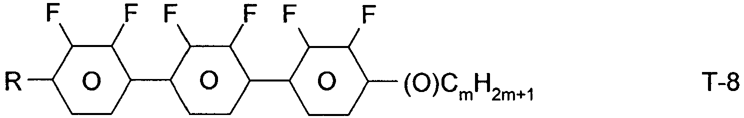 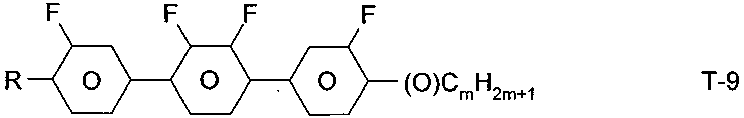 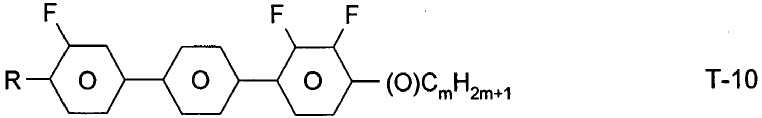 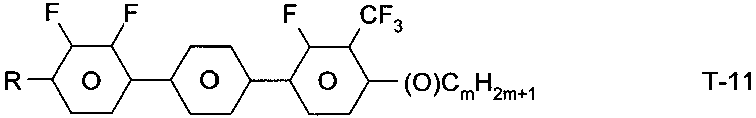 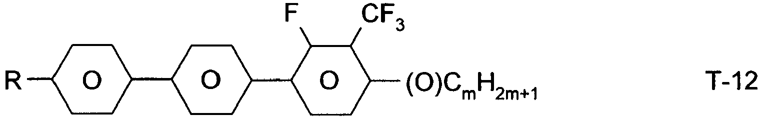 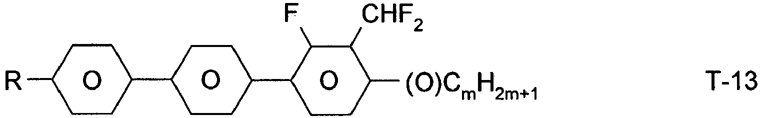 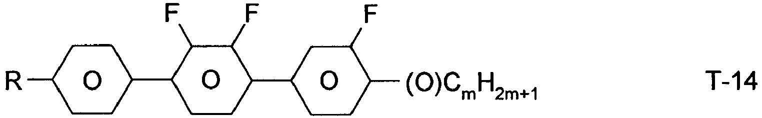 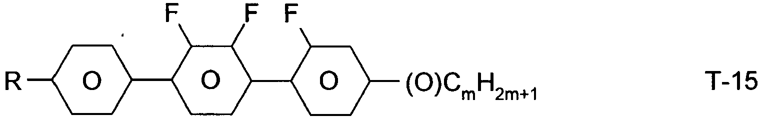 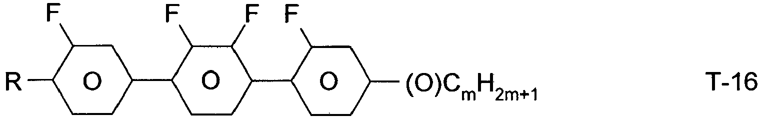 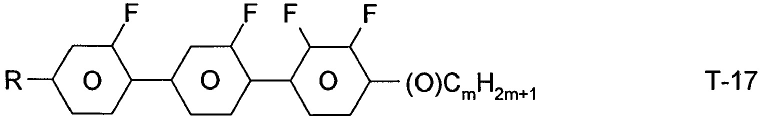 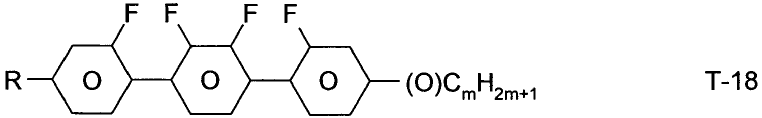 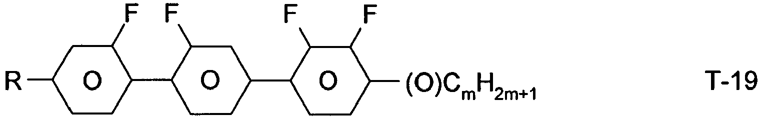 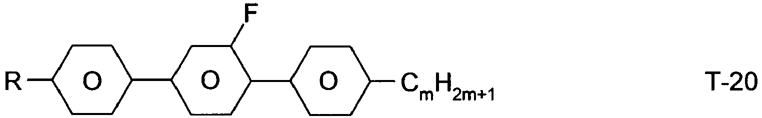 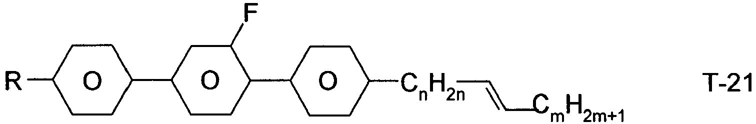 in which
   R denotes a straight-chain alkyl or alkoxy radical having 1-7 C atoms, and m = 0, 1, 2, 3, 4, 5 or 6 and n denotes 0, 1, 2, 3 or 4.
   R preferably denotes methyl, ethyl, propyl, butyl, pentyl, hexyl, methoxy, ethoxy, propoxy, butoxy, pentoxy.

The medium according to the invention preferably comprises the terphenyls of the formulae T-1 to T-21 in amounts of 2-30% by weight, in particular 5-20% by weight.

Particular preference is given to compounds of the formulae T-1, T-2, T-20 and T-21. In these compounds, R preferably denotes alkyl, furthermore alkoxy, each having 1-5 C atoms. In the compounds of the formula T-20, R preferably denotes alkyl or alkenyl, in particular alkyl. In the compound of the formula T-21, R preferably denotes alkyl.

The terphenyls are preferably employed in the mixtures according to the invention if the Δn value of the mixture is to be ≥ 0.1. Preferred mixtures comprise 2-20% by weight of one or more terphenyl compounds selected from the group of the compounds T-1 to T-21.
g) Liquid-crystalline medium additionally comprising one or more biphenyls of the formulae B-1 to B-3, 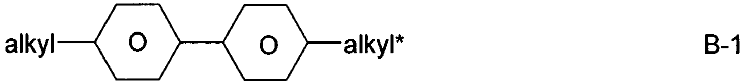 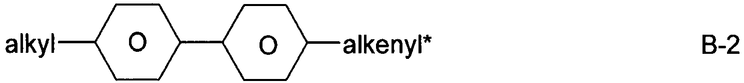 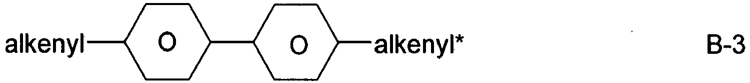 in which
   - alkyl and alkyl*: each, independently of one another, denote a straight-chain alkyl radical having 1-6 C atoms, and
   - alkenyl and alkenyl*: each, independently of one another, denote a straight-chain alkenyl radical having 2-6 C atoms.

The proportion of the biphenyls of the formulae B-1 to B-3 in the mixture as a whole is preferably at least 3% by weight, in particular ≥ 5% by weight.

Of the compounds of the formulae B-1 to B-3, the compounds of the formula B-2 are particularly preferred.

Particularly preferred biphenyls are 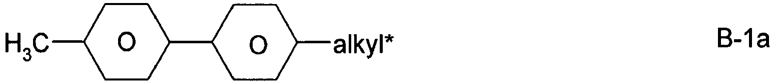 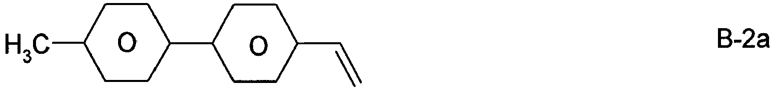 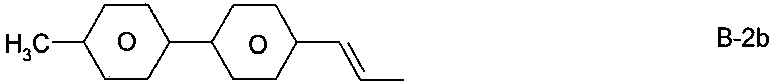 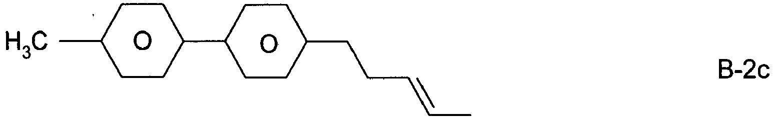 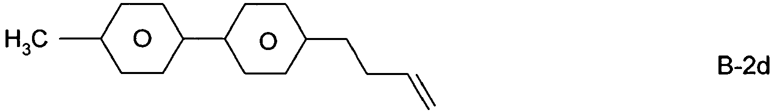 in which alkyl* denotes an alkyl radical having 1-6 C atoms, preferably n-C₃H₇, n-C₄H₉, n-C₅H₁₁. The medium according to the invention particularly preferably comprises one or more compounds of the formulae B-1a, B-2c and/or B-2d.
h) Liquid-crystalline medium comprising at least one compound of the formulae Z-1 to Z-7, 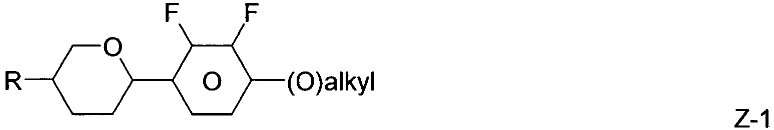 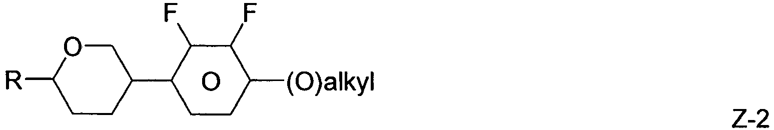 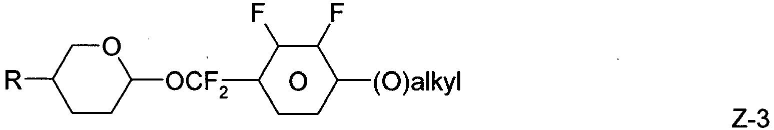 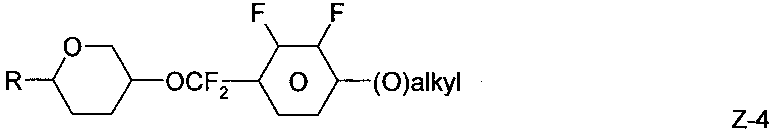 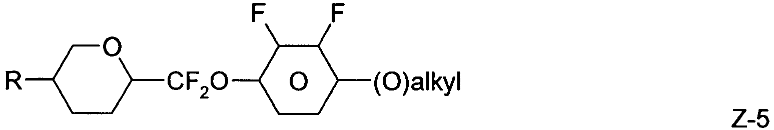 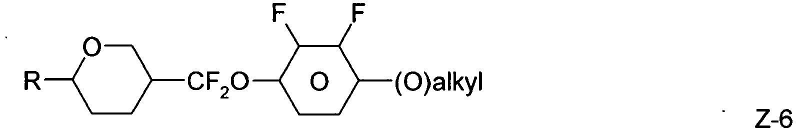 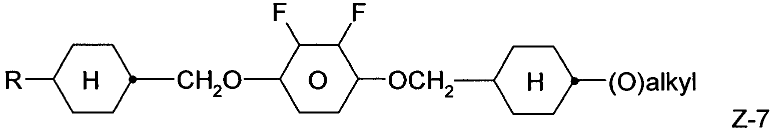 in which R and alkyl have the meanings indicated above.
i) Liquid-crystalline medium comprising at least one compound of the formulae O-1 to 0-16, 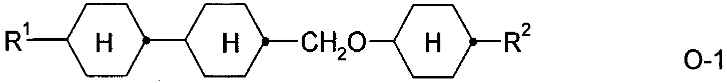 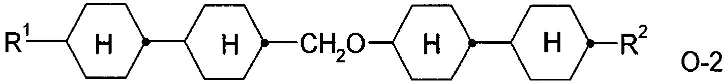 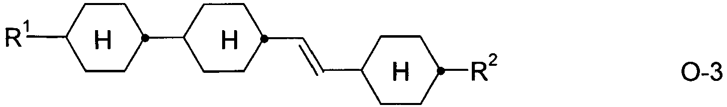 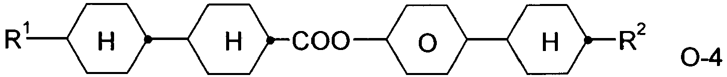 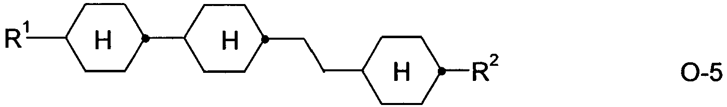 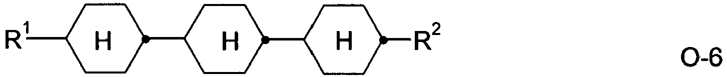 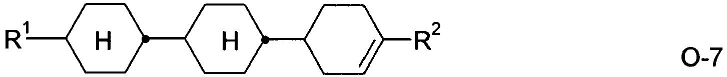 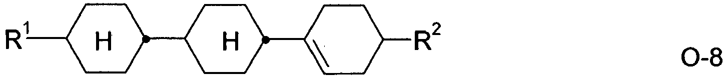 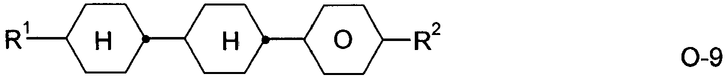 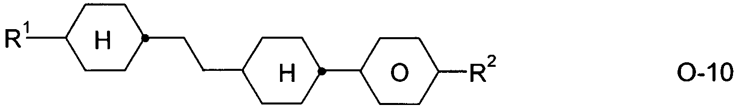 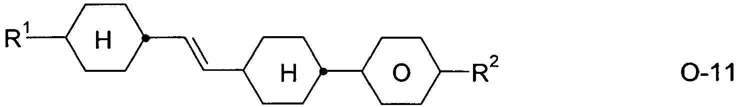 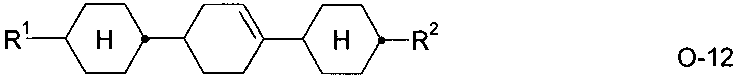 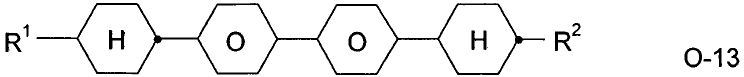 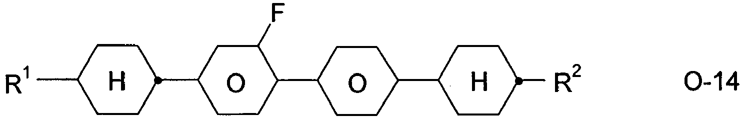 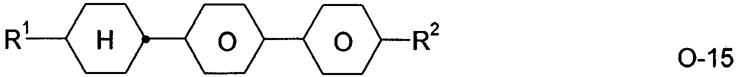 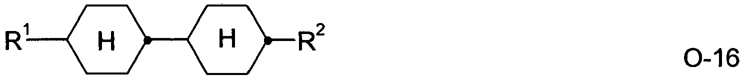
in which R¹ and R² have the meanings indicated for R^{2A}. R¹ and R² preferably each, independently of one another, denote straight-chain alkyl.

Preferred media comprise one or more compounds of the formulae O-1, O-3, O-4, O-5, O-9, 0-13, 0-14, O-15 and/or 0-16.

Mixtures according to the invention very particularly preferably comprise the compounds of the formula O-9, 0-15 and/or 0-16, in particular in amounts of 5-30%.

Preferred compounds of the formulae 0-15 and 0-16 are indicated below:

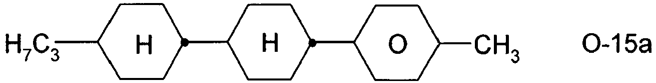

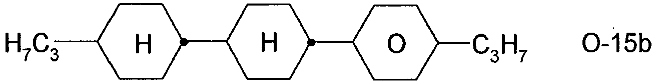

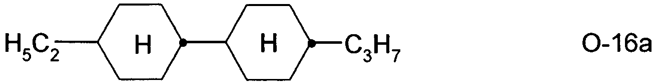

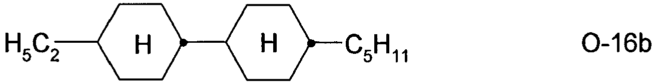

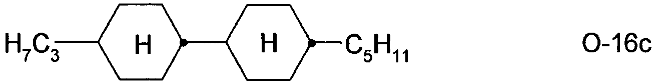

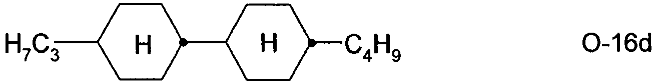

The medium according to the invention particularly preferably comprises the tricyclic compounds of the formula O-15a and/or of the formula O-15b in combination with one or more bicyclic compounds of the formulae O-16a to 0-16d. The total proportion of the compounds of the formulae O-15a and/or O-15b in combination with one or more compounds selected from the bicyclic compounds of the formulae O-16a to O-16d is 5-40%, very particularly preferably 15-35%.

Very particularly preferred mixtures comprise compounds O-15a and O-16a:

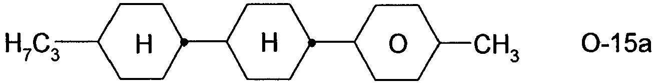

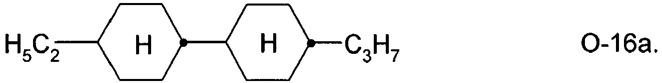

Compounds O-15a and O-16a are preferably present in the mixture in a concentration of 15-35%, particularly preferably 15-25% and especially preferably 18-22%, based on the mixture as a whole.

Very particularly preferred mixtures comprise compounds O-15b and O-16a:

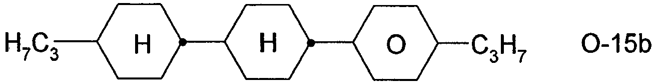

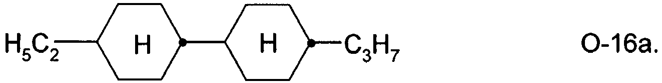

Compounds O-15b and O-16a are preferably present in the mixture in a concentration of 15-35%, particularly preferably 15-25% and especially preferably 18-22%, based on the mixture as a whole.

Very particularly preferred mixtures comprise the following three compounds:

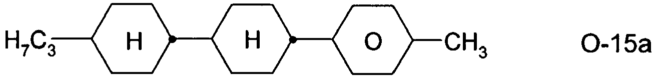

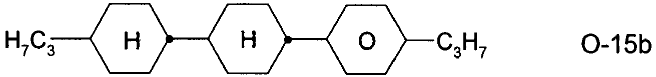

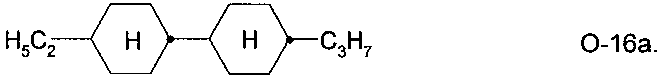

Compounds O-15a, O-15b and O-16a are preferably present in the mixture in a concentration of 15-35%, particularly preferably 15-25% and especially preferably 18-22%, based on the mixture as a whole.
j) Preferred liquid-crystalline media according to the invention comprise one or more substances which contain a tetrahydronaphthyl or naphthyl unit, such as, for example, the compounds of the formulae N-1 to N-5, 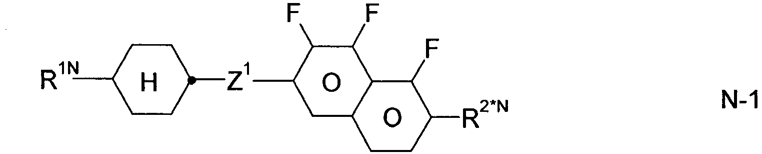 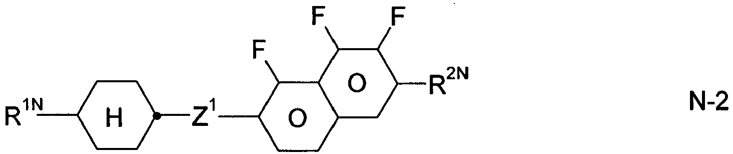 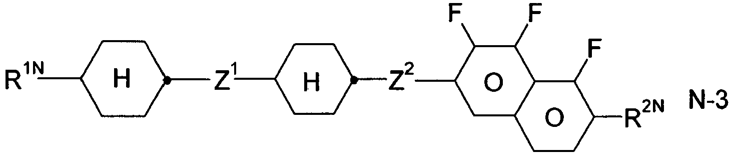 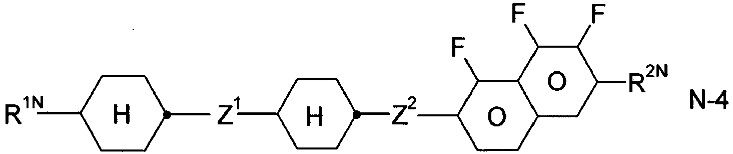 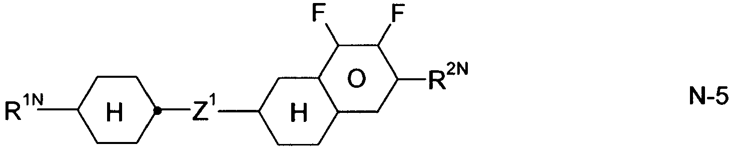 in which R^{1N} and R^{2N} each, independently of one another, have the meanings indicated for R^{2A}, preferably denote straight-chain alkyl, straight-chain alkoxy or straight-chain alkenyl, and
   - Z¹ and Z²: each, independently of one another, denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- or a single bond.
k) The mixtures comprise one or more compounds selected from the group of compounds of the formula BC, CR, PH-1, PH-2, BF-1, BF-2 and BS, 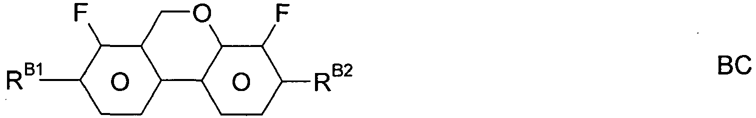 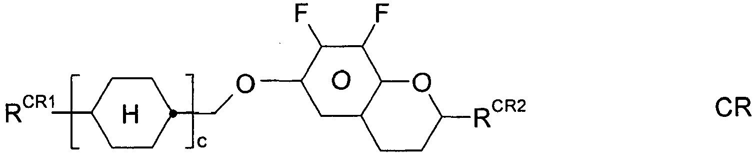 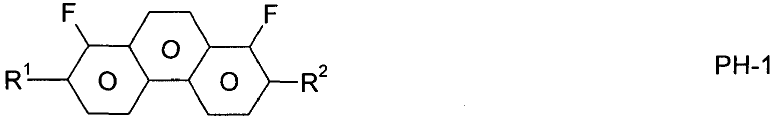 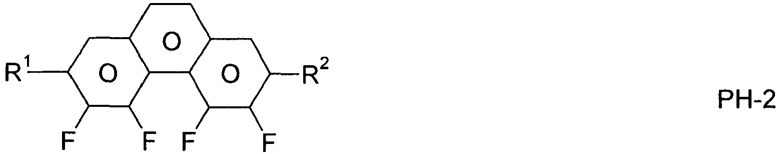 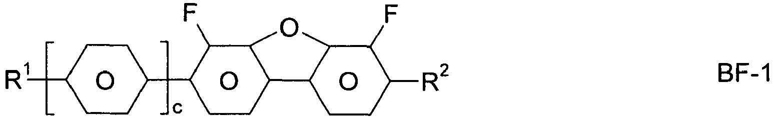 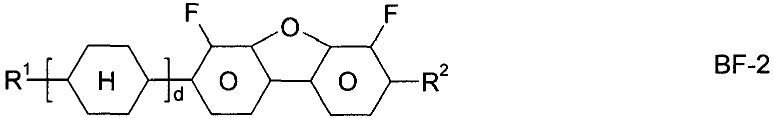 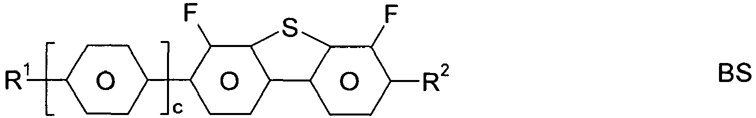 in which
   R^{B1}, R^{B2}, R^{CR1}, R^{CR2}, R¹, R² each, independently of one another, have the meaning of R^{2A}. c denotes 0, 1 or 2. d denotes 1 or 2.

The mixtures according to the invention preferably comprise the compounds of the formulae BC, CR, PH-1, PH-2, BF-1, BF-2 and/or BS in amounts of 3 to 20% by weight, in particular in amounts of 3 to 15% by weight.

Particularly preferred compounds of the formulae BC, CR, BF, BS are the compounds BC-1 to BC-7, CR-1 to CR-5, BF-1-a to BF-1-c and BS-1 to BS-3, 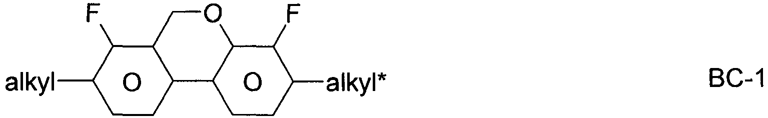 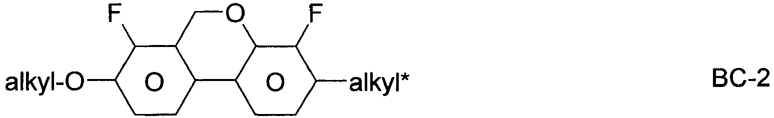 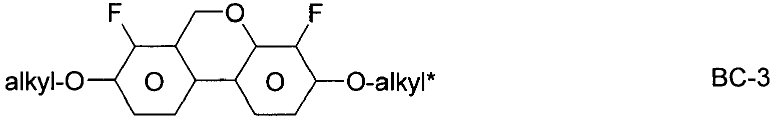 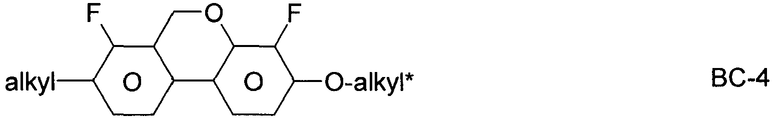 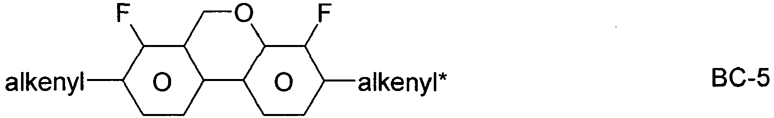 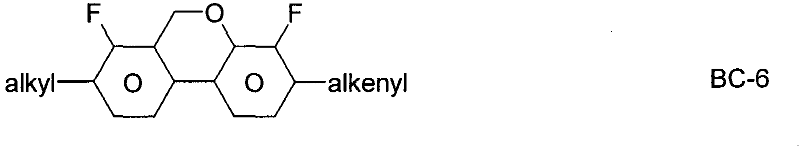 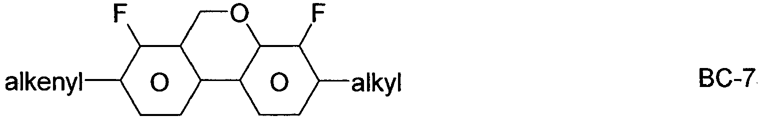 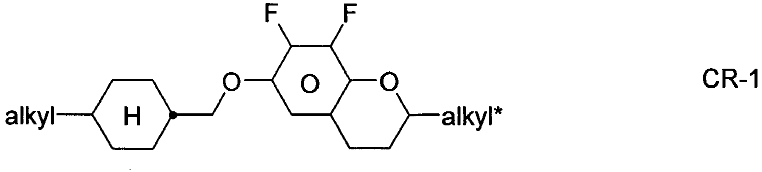 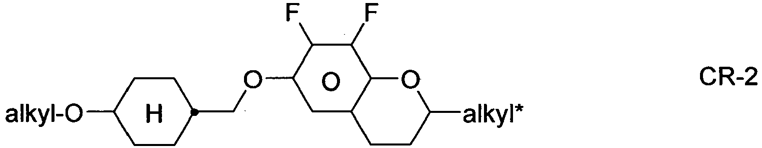 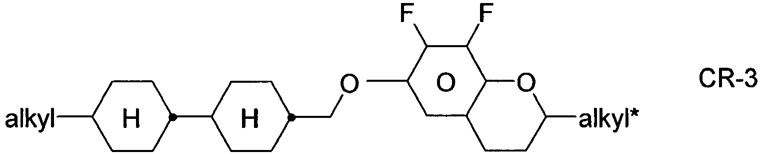 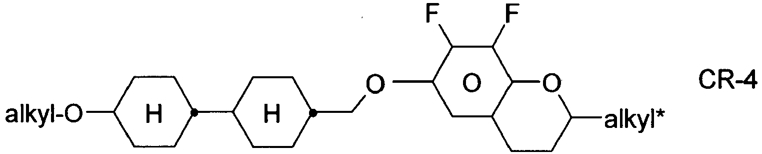 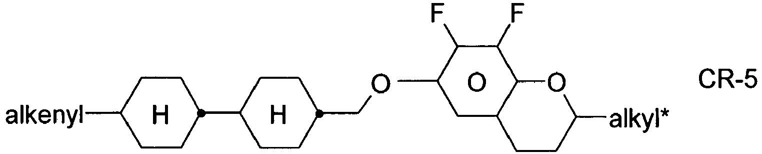 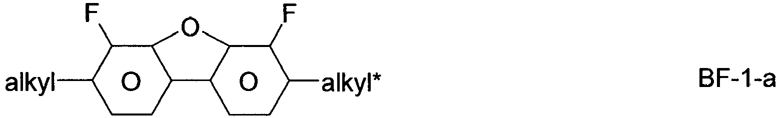 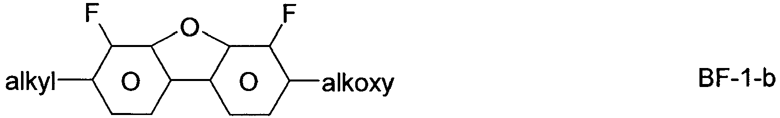 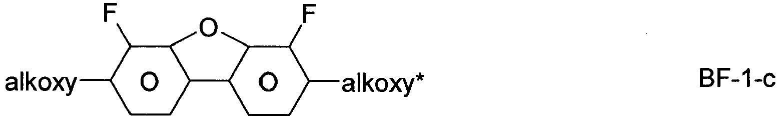 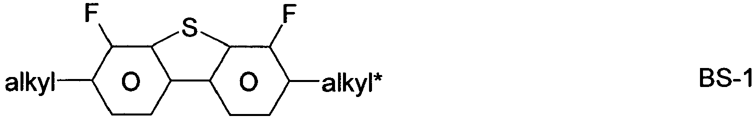 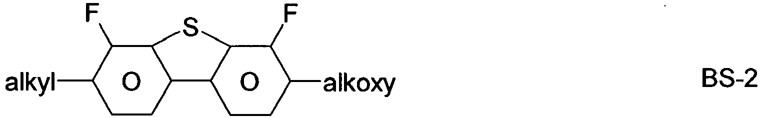 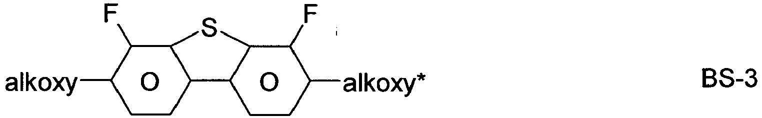 in which
- alkyl and alkyl*: each, independently of one another, denote a straight-chain alkyl radical having 1-6 C atoms,
- alkoxy and alkoxy*: each, independently of one another, denote a straight-chain alkoxy radical having 1-6 C atoms,
- alkenyl and alkenyl*: each, independently of one another, denote a straight-chain alkenyl radical having 2-6 C atoms.

Very particular preference is given to mixtures comprising one, two or three compounds of the formula BC-2, BF-1-b, BF-1-c and BS-3.
l) Preferred mixtures comprise one or more indane compounds of the formula In, 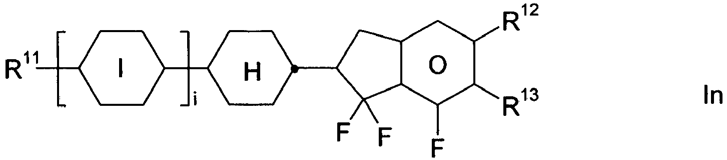 in which
   - R¹¹, R¹², R¹³: each, independently of one another, denote a straight-chain alkyl, alkoxy, alkoxyalkyl or alkenyl radical having 1-6 C atoms,
   - R¹² and R¹³: additionally denote halogen, preferably F, 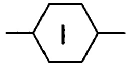 denotes 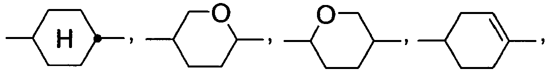 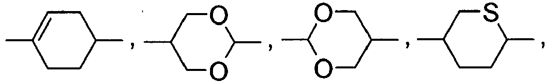 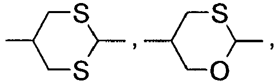
   - i: denotes 0, 1 or 2.

Preferred compounds of the formula In are the compounds of the formulae In-1 to In-16 indicated below:

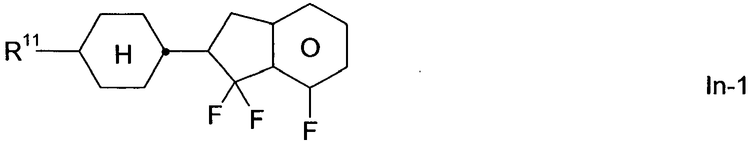

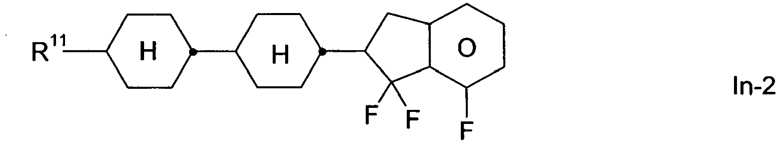

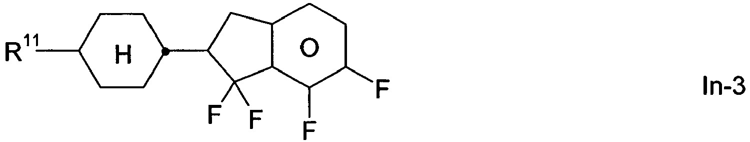

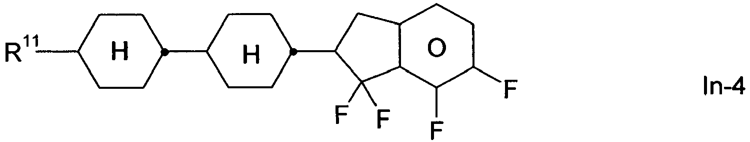

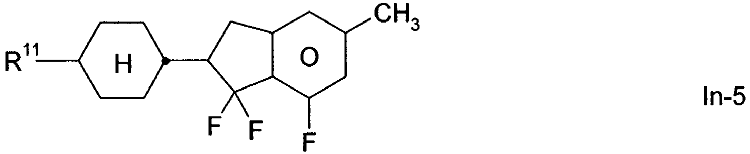

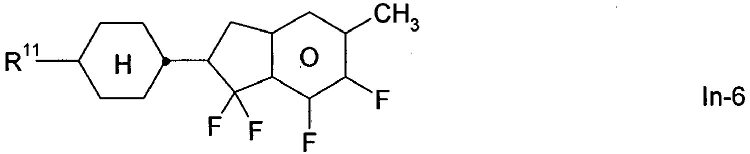

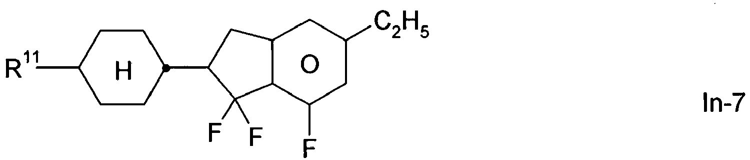

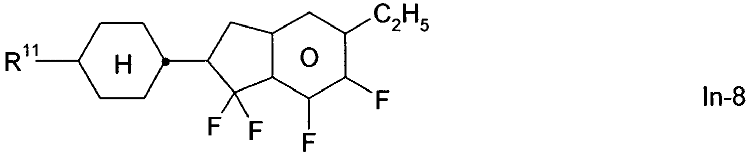

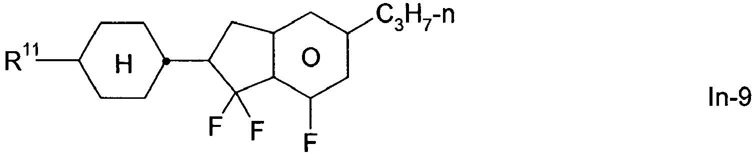

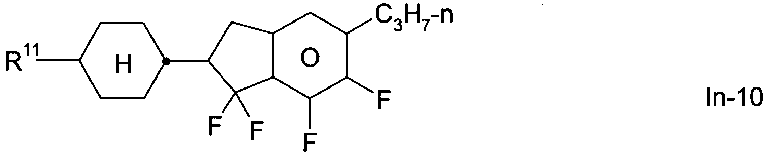

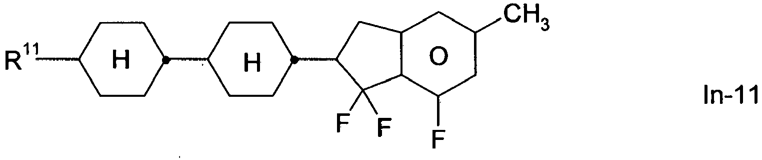

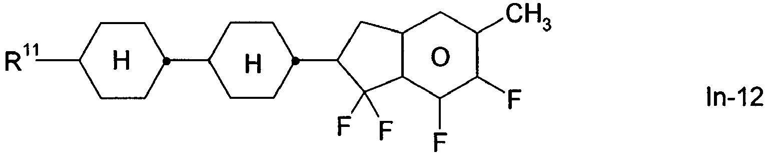

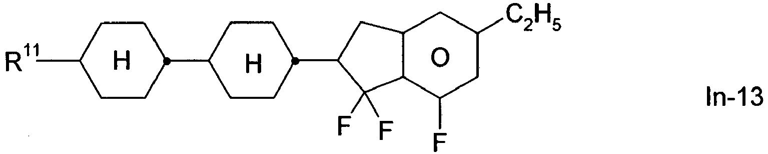

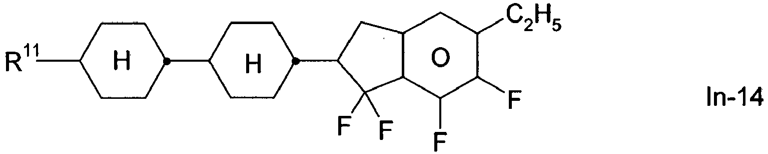

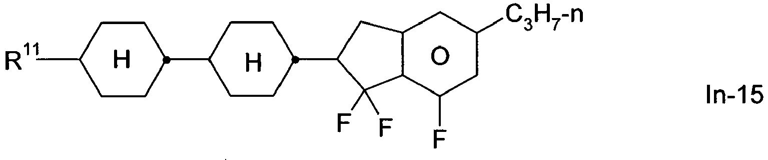

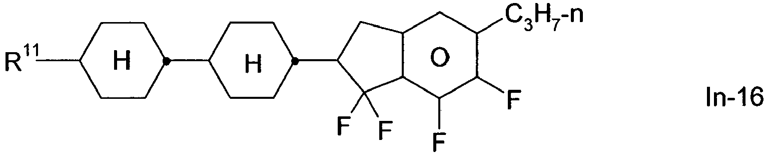

Particular preference is given to the compounds of the formulae In-1, In-2, In-3 and In-4.

The compounds of the formula In and the sub-formulae In-1 to In-16 are preferably employed in the mixtures according to the invention in concentrations ≥ 5% by weight, in particular 5 - 30% by weight and very particularly preferably 5 - 25% by weight.
m) Preferred mixtures additionally comprise one or more compounds of the formulae L-1 to L-11, 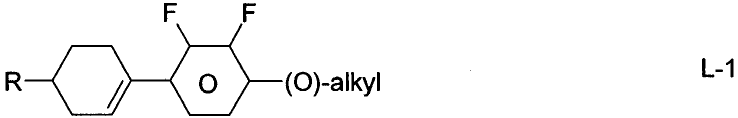 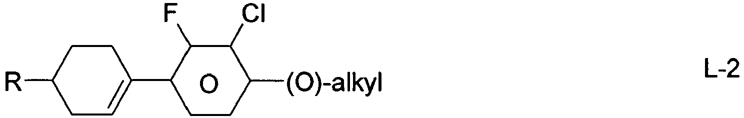 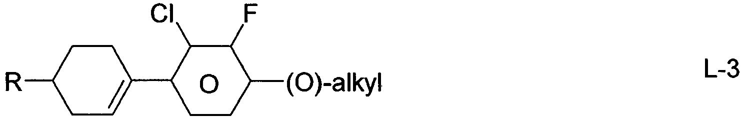 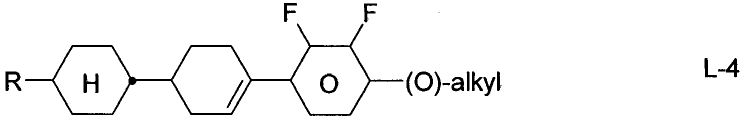 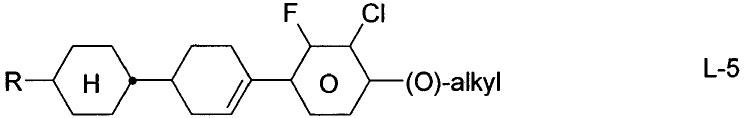 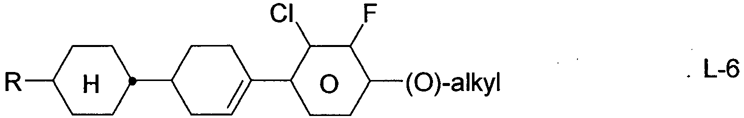 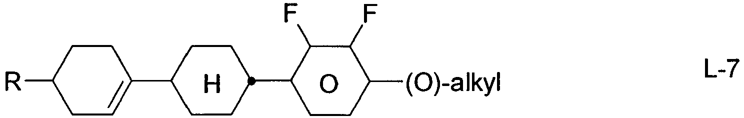 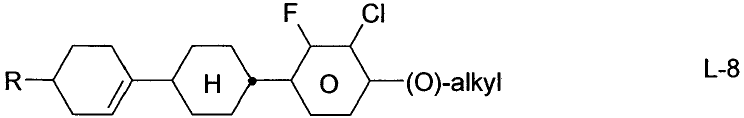 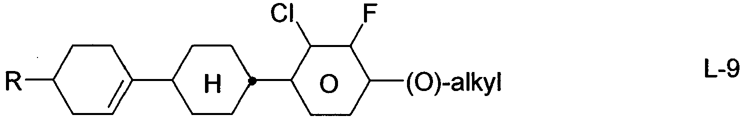 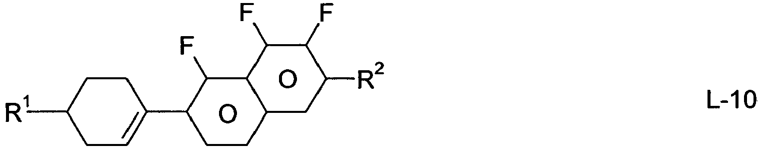 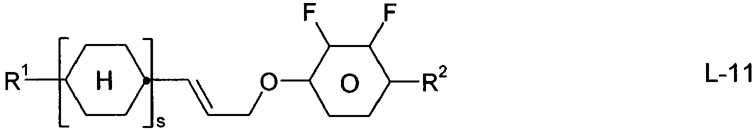 in which
   R, R¹ and R² each, independently of one another, have the meanings indicated for R^{2A} in Claim 6, and alkyl denotes an alkyl radical having 1-6 C atoms. s denotes 1 or 2.

Particular preference is given to the compounds of the formulae L-1 and L-4, in particular L-4.

The compounds of the formulae L-1 to L-11 are preferably employed in concentrations of 5 - 50% by weight, in particular 5 - 40% by weight and very particularly preferably 10 - 40% by weight.

Particularly preferred mixture concepts are indicated below: (the acronyms used are explained in Table A. n and m here each denote, independently of one another, 1-6).

The mixtures according to the invention preferably comprise
- the compound of the formula I in which L¹ = L² = F and R¹ = R^{1*} = alkoxy,
   and/or
- CPY-n-Om, in particular CPY-2-O2, CPY-3-O2 and/or CPY-5-O2, preferably in concentrations > 5%, in particular 10-30%, based on the mixture as a whole,
   and/or
- CPY-V-Om, CPY-V2-Om, CPY-1V2-Om and/r CPY-3V-Om, in particular CPY-V-O2, CPY-V2-O2 and/or CPY-1V2-O2, preferably in concentrations > 5%, in particular 10-30%, based on the mixture as a whole,
   and/or
- CY-n-Om, preferably CY-3-O2, CY-3-O4, CY-5-O2 and/or CY-5-O4, preferably in concentrations > 5%, in particular 15-50%, based on the mixture as a whole,
   and/or
- CY-V2-Om, CY-1V2-Om, CY-2V-Om, preferably CY-V2-O2, CY-V2-O4, CY-1V2-O2 and/or CY-2V-O2, preferably in concentrations > 5%, in particular 15-50%, based on the mixture as a whole,
   and/or
- CCY-n-Om, preferably CCY-4-O2, CCY-3-O2, CCY-3-O3, CCY-3-O1 and/or CCY-5-O2, preferably in concentrations > 5%, in particular 10-30%, based on the mixture as a whole,
   and/or
- CCY-V2-Om, CCY-1V2-Om, CCY-V-Om, CCY-2V-Om, preferably CCY-V2-O2, CCY-1V2-O2, CCY-V-O2, CCY-2V-O2, preferably in concentrations > 5%, in particular 10-30%, based on the mixture as a whole,
   and/or
- CLY-n-Om, preferably CLY-2-O4, CLY-3-O2 and/or CLY-3-O3, preferably in concentrations > 5%, in particular 10-30%, based on the mixture as a whole,
   and/or
- CK-n-F, preferably CK-3-F, CK-4-F and/or CK-5-F, preferably in concentrations of > 5%, in particular 5-25%, based on the mixture as a whole.

Preference is furthermore given to mixtures according to the invention which comprise the following mixture concepts:
(n and m each denote, independently of one another, 1-6.)
- CPY-n-Om and CY-n-Om, preferably in concentrations of 10-80%, based on the mixture as a whole,
   and/or
- CPY-n-Om and CK-n-F, preferably in concentrations of 10-70%, based on the mixture as a whole,
   and/or
- CPY-n-Om and CLY-n-Om, preferably in concentrations of 10-80%, based on the mixture as a whole
   and/or
- B-nO-Om, preferably in concentrations of 0.1-20%, based on the mixture as a whole
   and/or
- at least 5 compounds of CY-n-Om and CCY-n-Om, based on the mixture as a whole
   and/or
- at least 6 compounds of CY-n-Om and CCY-n-Om and CPY-n-Om based on the mixture as a whole.

The invention furthermore relates to an electro-optical display having active-matrix addressing based on the ECB, VA, PS-VA, IPS or FFS effect, characterised in that it contains, as dielectric, a liquid-crystalline medium according to one or more of Claims 1 to 14. The mixtures according to the present invention are highly suitable for passive matrix applications, preferable passive VA applications.

The liquid-crystalline medium according to the invention preferably has a nematic phase from ≤ -20°C to ≥ 70°C, particularly preferably from ≤ -30°C to ≥ 80°C, very particularly preferably from ≤ -40°C to ≥ 90°C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity ν₂₀ of at most 30 mm² · s⁻¹ at 20°C.

The values of the birefringence Δn in the liquid-crystal mixture are generally between 0.07 and 0.16, preferably between 0.08 and 0.12.

The liquid-crystal mixture according to the invention has a Δε of -0.5 to -8.0, in particular -2.5 to -6.0, where Δε denotes the dielectric anisotropy. The rotational viscosity γ₁ at 20°C is preferably ≤ 165 mPa·s, in particular ≤ 140 mPa·s.

The liquid-crystal media according to the invention have relatively low values for the threshold voltage (V₀). They are preferably in the range from 1.7 V to 3.0 V, particularly preferably ≤ 2.5 V and very particularly preferably ≤ 2.3 V.

For the present invention, the term "threshold voltage" relates to the capacitive threshold (V₀), also known as the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10% of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA), IPS (in-plane switching), PS-IPS, FFS (fringe field switching), PS-FFS, UB (ultra bright)-FFS applications. The mixtures according to the present invention are particular suitable for passive matrix VA displays. Preferred mixtures of the present invention are characterized by a negative dielectric anisotropy Δε.

The nematic liquid-crystal mixtures in the displays according to the invention generally comprise two components A and B, which themselves consist of one or more individual compounds.

Component A has significantly negative dielectric anisotropy and gives the nematic phase a dielectric anisotropy of ≤ -0.5. Besides one or more compounds of the formula I and of the formula IA, it preferably comprises the compounds of the formulae IIA, IIB and/or IIC, furthermore compounds of the formula III.

The proportion of component A is preferably between 45 and 100%, in particular between 60 and 100%.

For component A, one (or more) individual compound(s) which has (have) a value of Δε ≤ -0.8 is (are) preferably selected. This value must be more negative, the smaller the proportion A in the mixture as a whole.

Component B has pronounced nematogeneity and a flow viscosity of not greater than 30 mm² · s⁻¹, preferably not greater than 25 mm² · s⁻¹, at 20°C.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has no smectic phases and is able to prevent the occurrence of smectic phases down to very low temperatures in liquid-crystal mixtures. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20% by weight, based on the mixture as a whole.

A multiplicity of suitable materials is known to the person skilled in the art from the literature. Particular preference is given to compounds of the formula III.

In addition, these liquid-crystal phases may also comprise more than 18 components, preferably 18 to 25 components.

Besides one or more compounds of the formula I and IA, the phases preferably comprise 4 to 15, in particular 5 to 12, and particularly preferably < 10, compounds of the formulae IIA, IIB and/or IIC and optionally III.

Besides compounds of the formula I and IA and the compounds of the formulae IIA, IIB and/or IIC and optionally III, other constituents may also be present, for example in an amount of up to 45% of the mixture as a whole, but preferably up to 35%, in particular up to 10%.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclohexylnaphthalenes, 1,4-biscyclohexylbiphenyls or cyclohexylpyrimidines, phenyl- or cyclohexyldioxanes, optionally halogenated stilbenes, benzyl phenyl ethers, tolans and substituted cinnamic acid esters.

The most important compounds which are suitable as constituents of liquid-crystal phases of this type can be characterised by the formula IV

R²⁰-L-G-E-R²¹ IV

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

| | | |
|---|---|---|
| G denotes | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

or a C-C single bond, Q denotes halogen, preferably chlorine, or -CN, and R²⁰ and R²¹ each denote alkyl, alkenyl, alkoxy, alkoxyalkyl or alkoxycarbonyloxy having up to 18, preferably up to 8, carbon atoms, or one of these radicals alternatively denotes CN, NC, NO₂, NCS, CF₃, SF₅, OCF₃, F, Cl or Br.

In most of these compounds, R²⁰ and R²¹ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N, O, Cl and F have been replaced by the corresponding isotopes.

Polymerisable compounds, so-called reactive mesogens (RMs), for example as disclosed in U.S. 6,861,107, may furthermore be added to the mixtures according to the invention in concentrations of preferably 0.12 - 5% by weight, particularly preferably 0.2 - 2% by weight, based on the mixture. These mixtures may optionally also comprise an initiator, as described, for example, in U.S. 6,781,665. The initiator, for example Irganox-1076 from Ciba, is preferably added to the mixture comprising polymerisable compounds in amounts of 0-1%. Mixtures of this type can be used for so-called polymer-stabilised VA modes (PS-VA) or PSA (polymer sustained VA), in which polymerisation of the reactive mesogens is intended to take place in the liquid-crystalline mixture. The prerequisite for this is that the liquid-crystal mixture does not itself comprise any polymerisable components.

In a preferred embodiment of the invention, the polymerisable compounds are selected from the compounds of the formula M,

R^{Ma}-A^{M1}-(Z^{M1}-A^{M2}₎ₘ₁₋R^{Mb} M

in which the individual radicals have the following meanings:
- R^{Ma} and R^{Mb}: each, independently of one another, denote P, P-Sp-, H, halogen, SF₅, NO₂, an alkyl, alkenyl or alkynyl group, where at least one of the radicals R^{Ma} and R^{Mb} preferably denotes or contains a group P or P-Sp-,
- P: denotes a polymerisable group,
- Sp: denotes a spacer group or a single bond,
- A^{M1} and A^{M2}: each, independently of one another, denote an aromatic, heteroaromatic, alicyclic or heterocyclic group, preferably having 4 to 25 ring atoms, preferably C atoms, which may also
- L: encompass or contain fused rings, and which may optionally be mono- or polysubstituted by L, denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-, preferably P, P-Sp-, H, OH, CH₂OH, halogen, SF₅, NO₂, an alkyl, alkenyl or alkynyl group,
- Y¹: denotes halogen,
- Z^{M1}: denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C=C-, -CH=CH-, -COO-, -OCO-CH=CH-, CR⁰R⁰⁰ or a single bond,
- R⁰ and R⁰⁰: each, independently of one another, denote H or alkyl having 1 to 12 C atoms,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
- m1: denotes 0, 1, 2, 3 or 4, and
- n1: denotes 1, 2, 3 or 4,
where at least one, preferably one, two or three, particularly preferably one or two, from the group R^{Ma}, R^{Mb} and the substituents L present denotes a group P or P-Sp- or contains at least one group P or P-Sp-.

Particularly preferred compounds of the formula M are those in which
- R^{Ma} and R^{Mb}: each, independently of one another, denote P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)- -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where at least one of the radicals R^{Ma} and R^{Mb} preferably denotes or contains a group P or P-Sp-,
- A^{M1} and A^{M2}: each, independently of one another, denote 1,4-phenylene, naphthalene-1,4-diyl, naphthalene-2,6-diyl, phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]-pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
- L: denotes P, P-Sp-, OH, CH₂OH, F, Cl, Br, I, -CN, -NO₂, -NCO, -NCS, -OCN, -SCN, -C(=O)N(R^{x})z, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- P: denotes a polymerisable group,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Very particular preference is given to compounds of the formula M in which one of R^{Ma} and R^{Mb} or both denote(s) P or P-Sp-.

Suitable and preferred RMs for use in liquid-crystalline media and PS-VA displays or PSA displays according to the invention are selected, for example, from the following formulae: 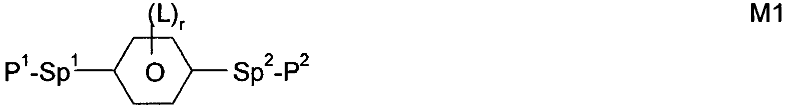 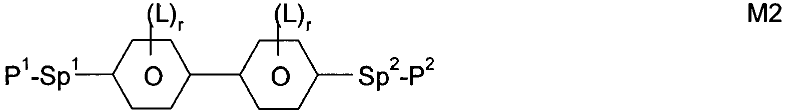 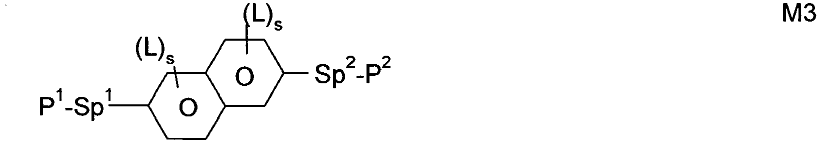 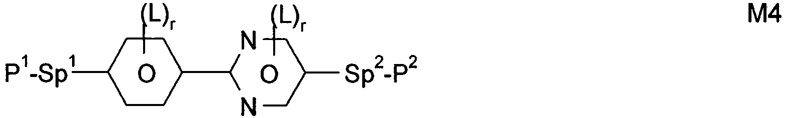 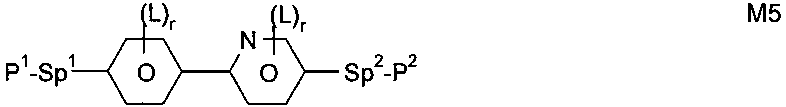 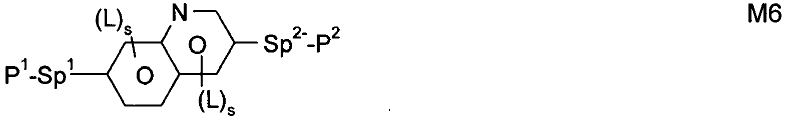 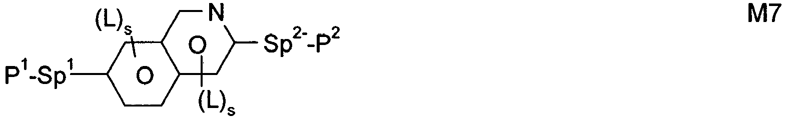 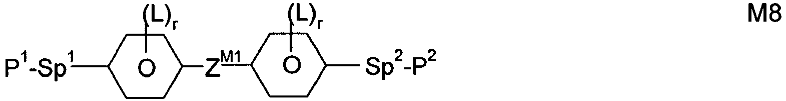 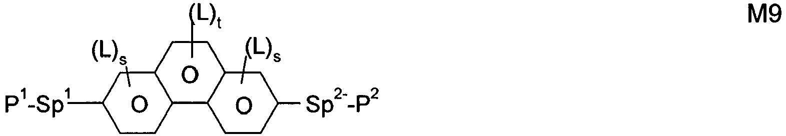 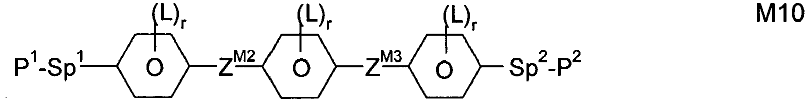 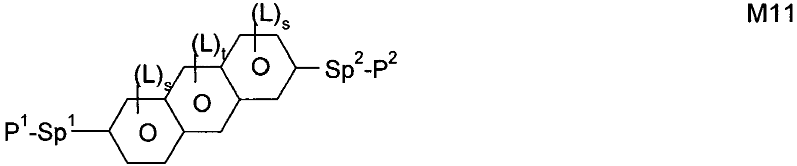 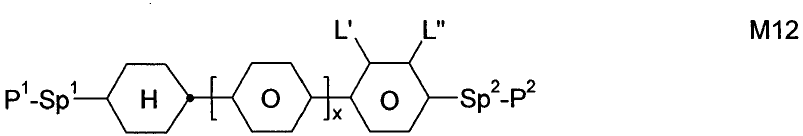 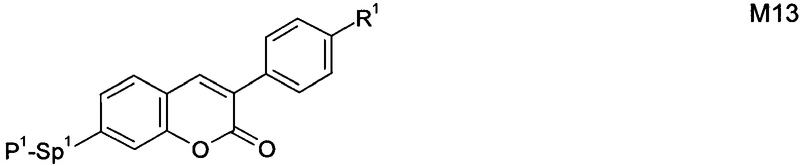 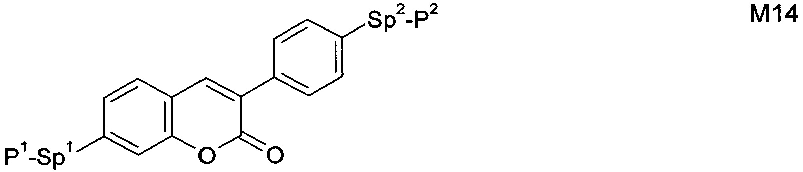 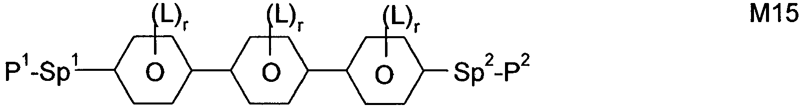 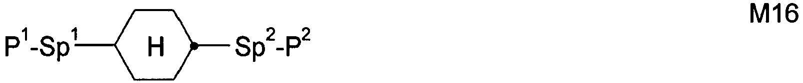 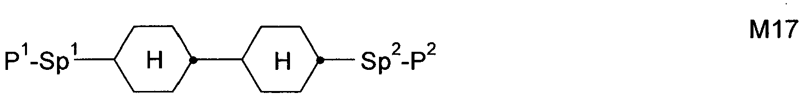 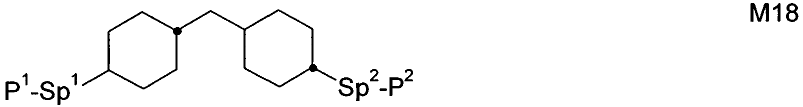 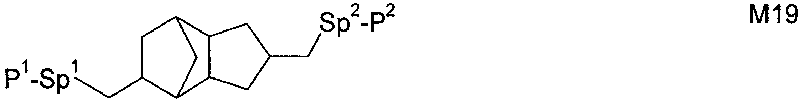 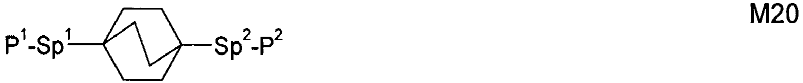 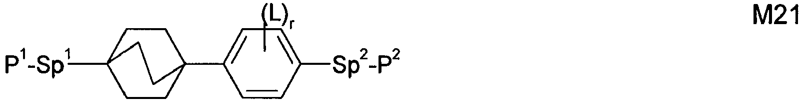 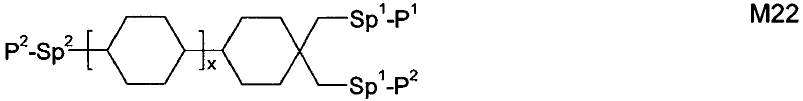 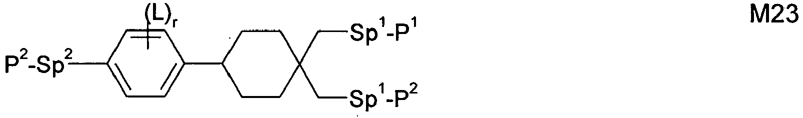 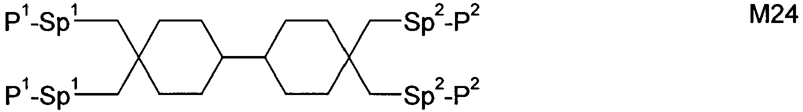 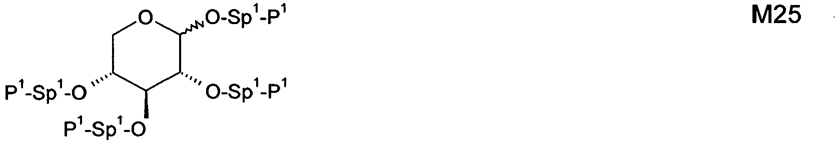 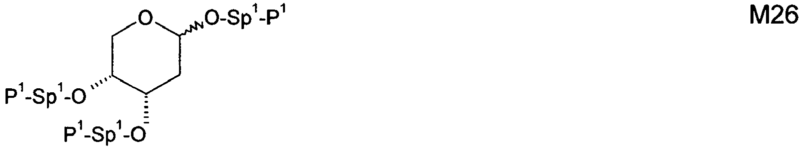 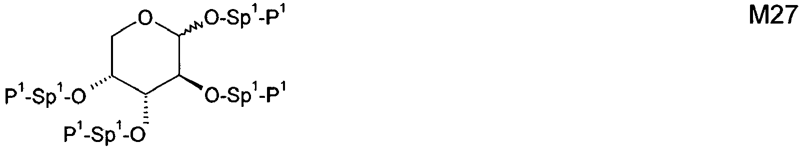 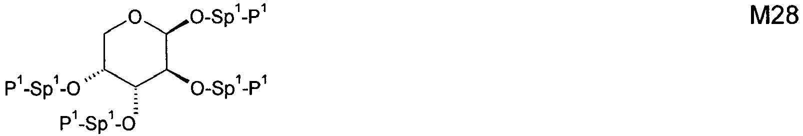 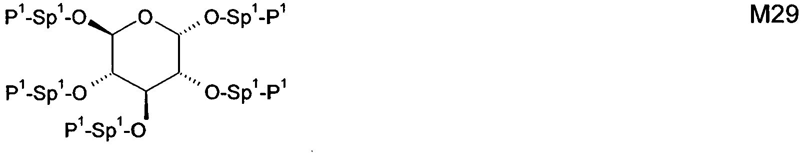 in which the individual radicals have the following meanings:
- P¹ and P²: each, independently of one another, denote a polymerisable group, preferably having one of the meanings indicated above and below for P, particularly preferably an acrylate, methacrylate, fluoroacrylate, oxetane, vinyloxy or epoxy group,
- Sp¹ and Sp²: each, independently of one another, denote a single bond or a spacer group, preferably having one of the meanings indicated above and below for Sp, and particularly preferably -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where the linking of the last-mentioned groups to the adjacent ring takes place via the O atom, where one of the radicals P¹-Sp¹- and P²-Sp²- may also denote R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl or alkylcarbonyloxy having 1 to 12 C atoms (where the alkenyl and alkynyl radicals have at least two C atoms and the branched radicals have at least three C atoms),
- R⁰, R⁰⁰: each, independently of one another and on each occurrence identically or differently, denote H or alkyl having 1 to 12 C atoms,
- R^{y} and R^{z}: each, independently of one another, denote H, F, CH₃ or CF₃,
- Z^{M1}: denotes -O-, -CO-, -C(R^{y}R^{z})- or -CF₂CF₂-,
- Z^{M2} and Z^{M3}: each, independently of one another, denote -CO-O-, -O-CO-, -CH₂O-, -OCH₂-, -CF₂O-, -OCF₂- or -(CH₂)ₙ-, where n is 2, 3 or 4,
- L: on each occurrence, identically or differently, denotes F, Cl, CN, or straight-chain or branched, optionally mono- or polyfluorinated alkyl, alkoxy, alkenyl, alkynyl, alkylcarbonyl, alkoxycarbonyl or alkylcarbonyloxy having 1 to 12 C atoms, preferably F,
- L' and L": each, independently of one another, denote H, F or Cl,
- r: denotes 0, 1, 2, 3 or 4,
- s: denotes 0, 1, 2 or 3,
- t: denotes 0, 1 or 2, and
- x: denotes 0 or 1.

Suitable polymerisable compounds are listed, for example, in Table D.

The liquid-crystalline media in accordance with the present application preferably comprise in total 0.1 to 10%, preferably 0.2 to 4.0%, particularly preferably 0.2 to 2.0%, of polymerisable compounds.

Particular preference is given to the polymerisable compounds of the formula M.

The mixtures according to the invention may furthermore comprise conventional additives, such as, for example, stabilisers, antioxidants, UV absorbers, nanoparticles, microparticles, etc.

The structure of the liquid-crystal displays according to the invention corresponds to the usual geometry, as described, for example, in EP-A 0 240 379.

The following examples are intended to explain the invention without limiting it. Above and below, per cent data denote per cent by weight; all temperatures are indicated in degrees Celsius.

Throughout the patent application, 1,4-cyclohexylene rings and 1,4-phenylene rings are depicted as follows:

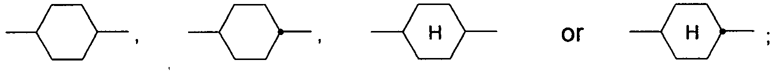

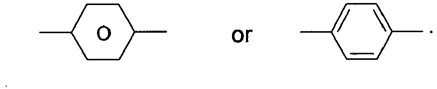

Throughout the patent application and in the working examples, the structures of the liquid-crystalline compounds are indicated by means of acronyms. Unless indicated otherwise, the transformation into chemical formulae is carried out in accordance with Tables 1-3. All radicals CₙH₂ₙ₊₁, CₘH₂ₘ₊₁ and C_{m'}H_{2m'+1} or CₙH₂ₙ and CₘH₂ₘ are straight-chain alkyl radicals or alkylene radicals in each case having n, m, m' or z C atoms respectively. n, m, m', z each denote, independently of one another, 1, 2, 3, 4, 5, 6, 7, 8, 9, 10, 11 or 12, preferably 1, 2, 3, 4, 5 or 6. In Table 1 the ring elements of the respective compound are coded, in Table 2 the bridging members are listed and in Table 3 the meanings of the symbols for the left-hand or right-hand side chains of the compounds are indicated.

**Table 1: Ring elements**

| | |
|---|---|
| 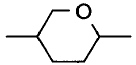 | 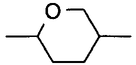 |
| **A** | **AI** |
| 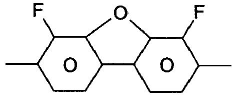 | 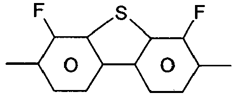 |
| **B** | **B(S)** |
| 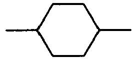 | |
| **C** | |
| 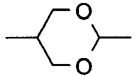 | 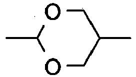 |
| **D** | **DI** |
| 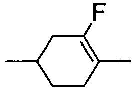 | 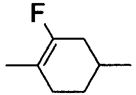 |
| **F** | **FI** |
| 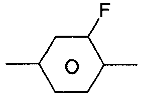 | 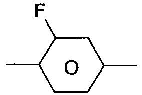 |
| **G** | **GI** |
| 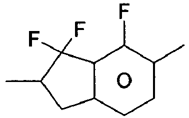 | |
| **K** | |
| 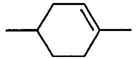 | 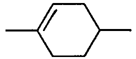 |
| **L** | **LI** |
| 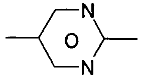 | 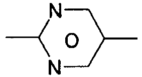 |
| M | **MI** |
| 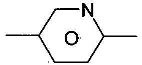 | 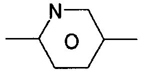 |
| N | **NI** |
| 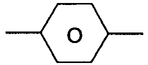 | |
| **P** | |
| 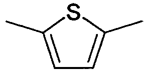 | |
| **S** | |
| 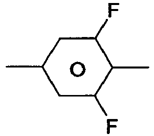 | 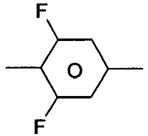 |
| **U** | **UI** |
| 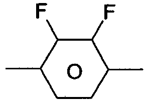 | |
| **Y** | |
| 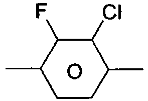 | 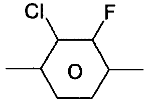 |
| **Y(F,Cl)** | **Y(Cl,F)** |

**Table 2: Bridging members**

| | | | |
|---|---|---|---|
| **E** | -CH2CH2- | | |
| **V** | -CH=CH- | | |
| **T** | -C≡C- | | |
| **W** | -CF2CF2- | | |
| **Z** | -COO- | **ZI** | -OCO- |
| **O** | -CH₂O- | **OI** | -OCH₂- |
| **Q** | -CF₂O- | **QI** | -OCF₂- |

**Table 3: Side chains**

| Left-hand side chain | | Right-hand side chain | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH- CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | -CₙH₂ₙ-CH=CH-CₘH₂ₘ₊₁ |
| **N-** | N≡C- | **-N** | -C≡N |
| **F-** | F- | **-F** | -F |
| **Cl-** | Cl- | **-Cl** | -Cl |
| **M-** | CFH₂- | **-M** | -CFH2 |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF3 |
| **A-** | H-C≡C- | **-A** | -C≡C-H |

Besides the compounds of the formulae I and IA the mixtures according to the invention preferably contain one or more of the compounds from Table A indicated below.

**Table A**

| |
|---|
| The following abbreviations are used: |
| (n, m, m', z: each, independently of one another, 1, 2, 3, 4, 5 or 6; (O)CₘH₂ₘ₊₁ denotes OCₘH₂ₘ₊₁ or CₘH₂ₘ₊₁) |
| 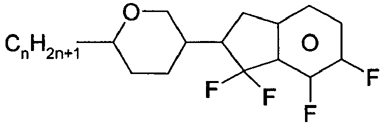 |
| **AIK-n-F** |
| 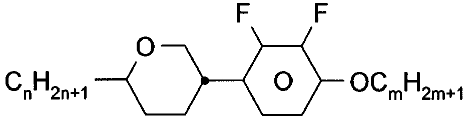 |
| **AIY-n-Om** |
| 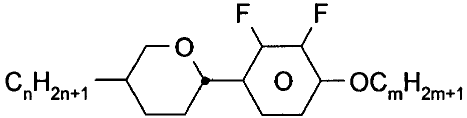 |
| **AY-n-Om** |
| 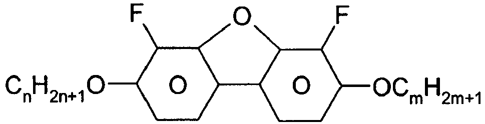 |
| **B-nO-Om** |
| 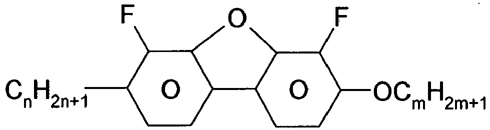 |
| **B-n-Om** |
| 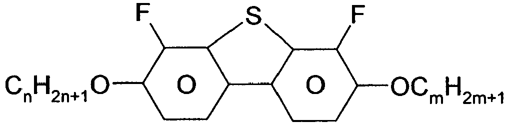 |
| **B(S)-nO-Om** |
| 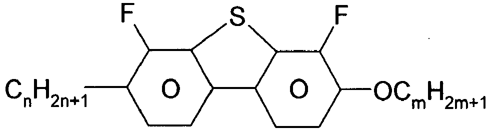 |
| **B(S)-n-Om** |
| 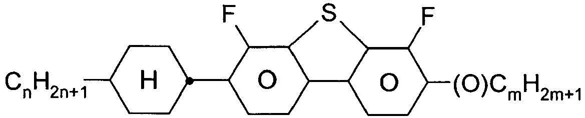 |
| **CB(S)-n-(O)m** |
| 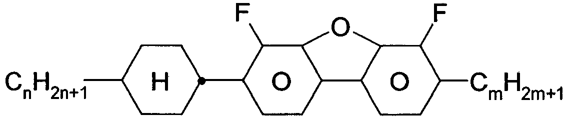 |
| **CB-n-m** |
| 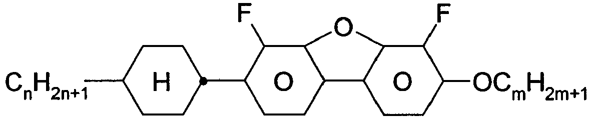 |
| **CB-n-Om** |
| 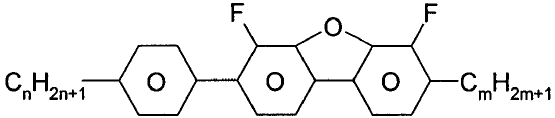 |
| **PB-n-m** |
| 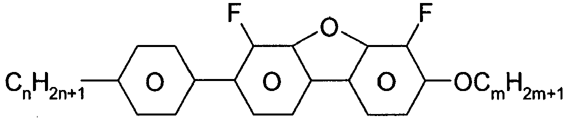 |
| **PB-n-Om** |
| 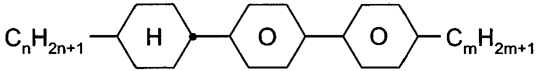 |
| **BCH-nm** |
| 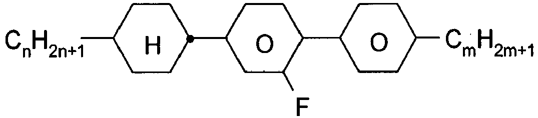 |
| **BCH-nmF** |
| 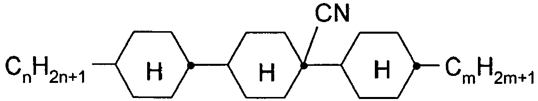 |
| 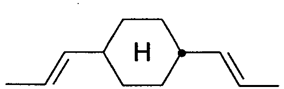 **BCN-nm** |
| **C-1V-V1** |
| 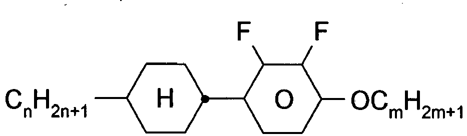 |
| **CY-n-Om** |
| 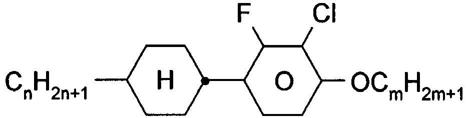 |
| **CY(F,Cl)-n-Om** |
| 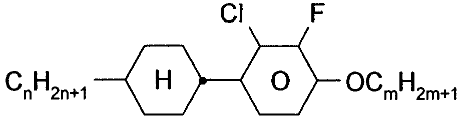 |
| **CY(Cl,F)-n-Om** |
| 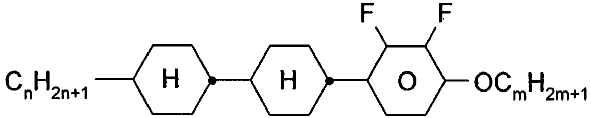 |
| **CCY-n-Om** |
| 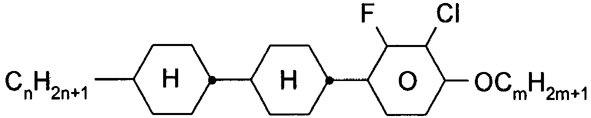 |
| **CCY(F,Cl)-n-Om** |
| 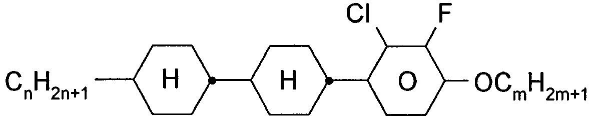 |
| **CCY(Cl,F)-n-Om** |
| 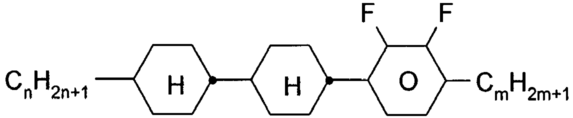 |
| **CCY-n-m** |
| 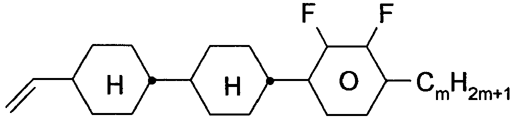 |
| **CCY-V-m** |
| 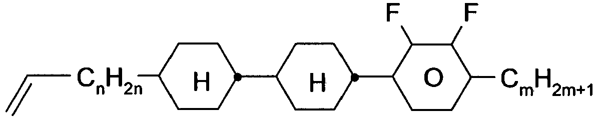 |
| **CCY-Vn-m** |
| 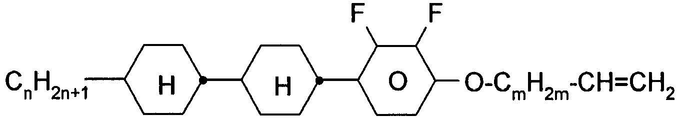 |
| **CCY-n-OmV** |
| 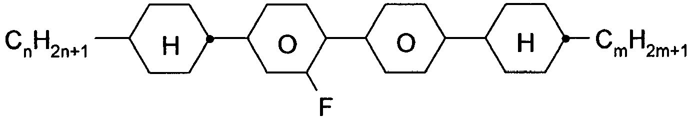 |
| **CBC-nmF** |
| 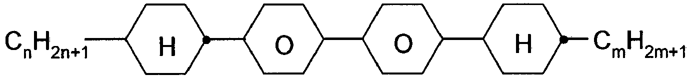 |
| **CBC-nm** |
| 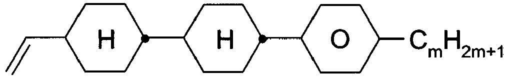 |
| **CCP-V-m** |
| 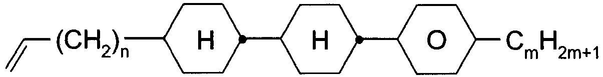 |
| **CCP-Vn-m** |
| 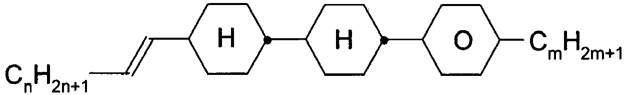 |
| **CCP-nV-m** |
| 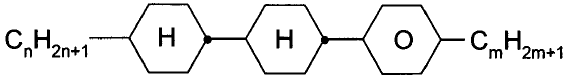 |
| **CCP-n-m** |
| 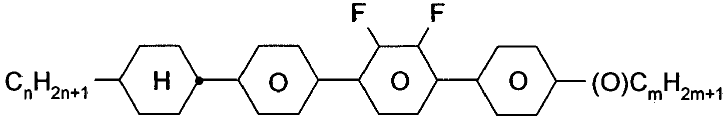 |
| **CPYP-n-(O)m** |
| 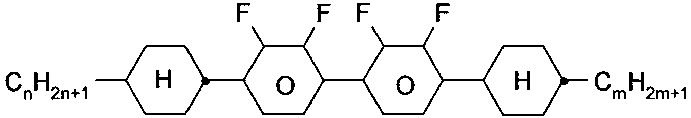 |
| **CYYC-n-m** |
| 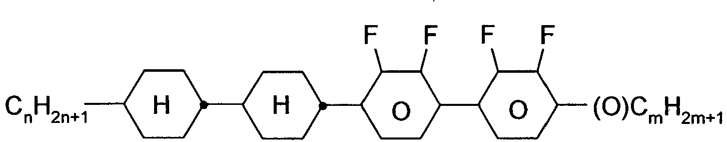 |
| **CCYY-n-(O)m** |
| 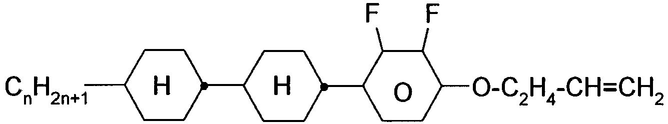 |
| **CCY -n-O2V** |
| 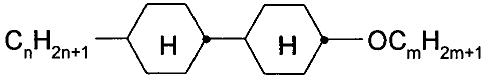 |
| **CCH-nOm** |
| 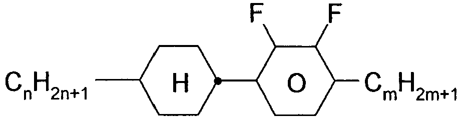 |
| **CY-n-m** |
| 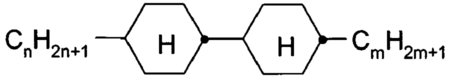 |
| **CCH-nm** |
| 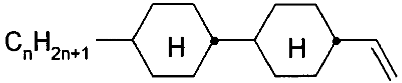 |
| **CC-n-V** |
| 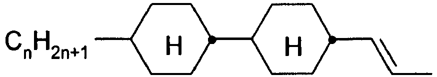 |
| **CC-n-V1** |
| 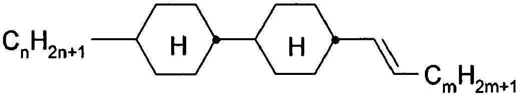 |
| **CC-n-Vm** |
| 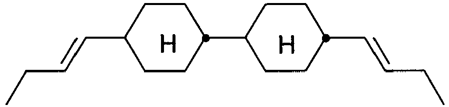 |
| **CC-2V-V2** |
| 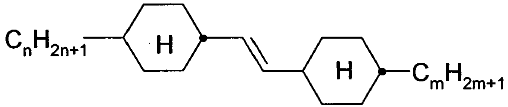 |
| **CVC-n-m** |
| 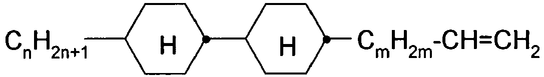 |
| **CC-n-mV** |
| 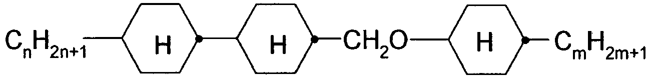 |
| **CCOC-n-m** |
| 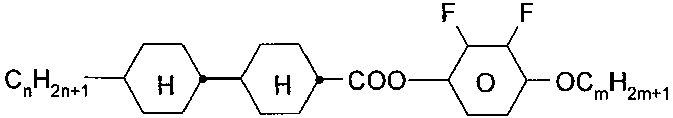 |
| **CP-nOmFF** |
| 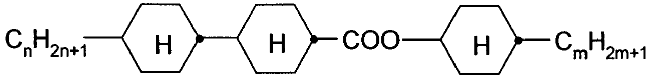 |
| **CH-nm** |
| 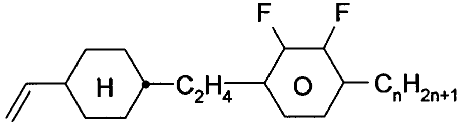 |
| **CEY-V-n** |
| 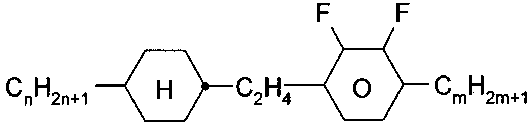 |
| **CEY-n-m** |
| 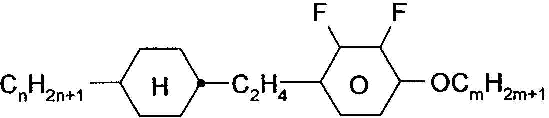 |
| **CEY-n-Om** |
| 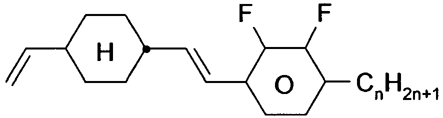 |
| **CVY-V-n** |
| 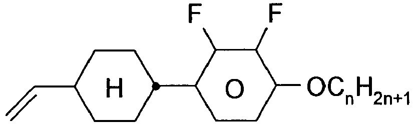 |
| **CY-V-On** |
| 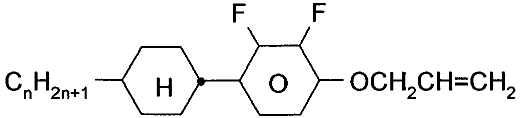 |
| **CY-n-O1V** |
| 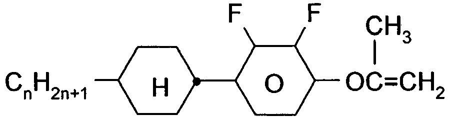 |
| **CY-n-OC(CH₃)=CH₂** |
| 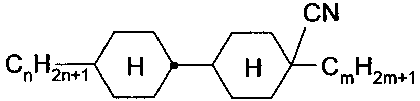 |
| **CCN-nm** |
| 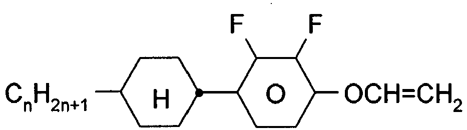 |
| **CY-n-OV** |
| 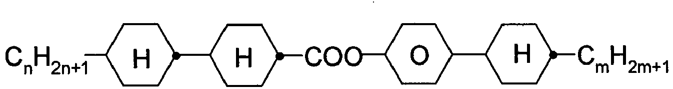 |
| **CCPC-nm** |
| 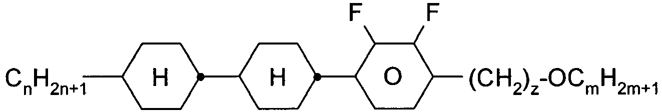 |
| **CCY -n-zOm** |
| 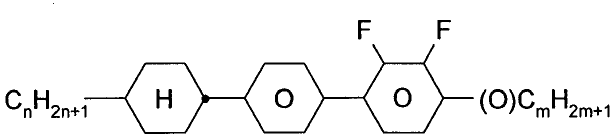 |
| **CPY-n-(O)m** |
| 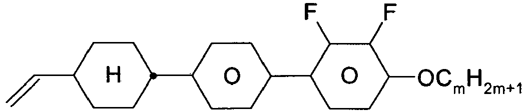 |
| **CPY-V-Om** |
| 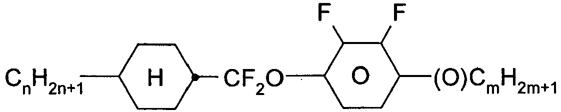 |
| **CQY -n-m** |
| 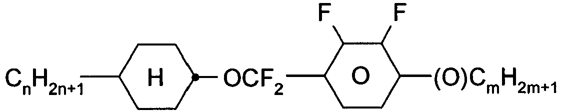 |
| **CQIY-n-(O)m** |
| 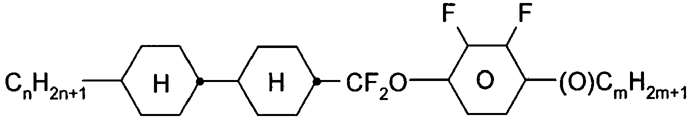 |
| **CCQY-n-(O)m** |
| 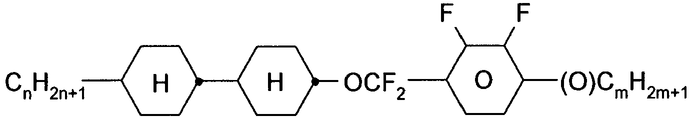 |
| **CCQIY-n-(O)m** |
| 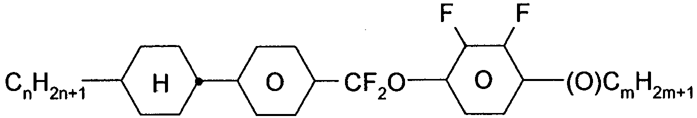 |
| **CPQY-n-(O)m** |
| 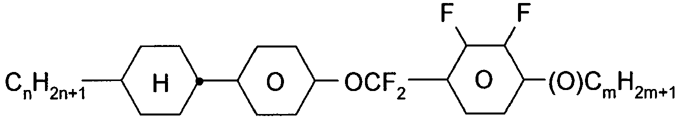 |
| **CPQIY-n-(O)m** |
| 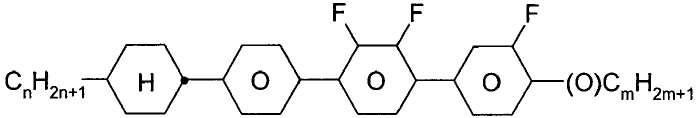 |
| **CPYG-n-(O)m** |
| 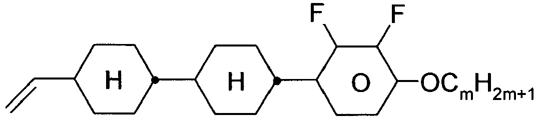 |
| **CCY-V-Om** |
| 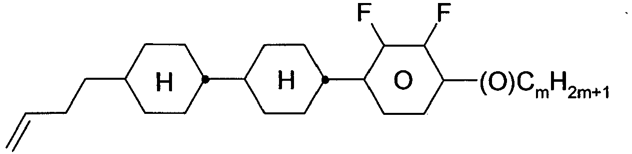 |
| **CCY-V2-(O)m** |
| 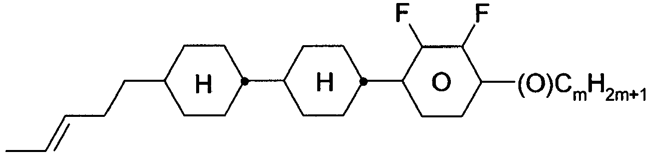 |
| **CCY-1V2-(O)m** |
| 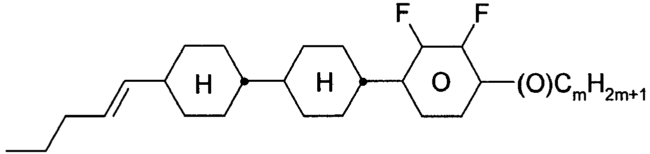 |
| **CCY-3V-(O)m** |
| 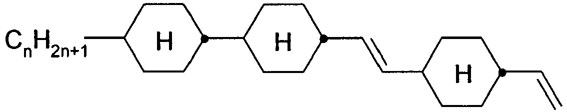 |
| **CCVC-n-V** |
| 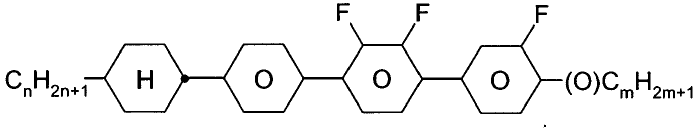 |
| **CPYG-n-(O)m** |
| 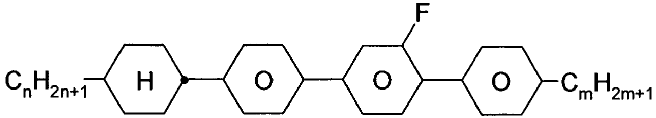 |
| **CPGP-n-m** |
| 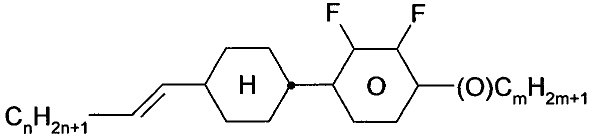 |
| **CY-nV-(O)m** |
| 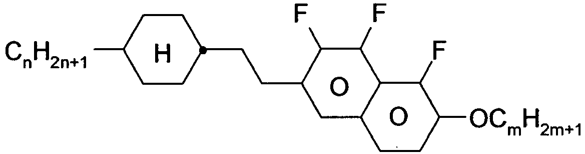 |
| **CENaph-n-Om** |
| 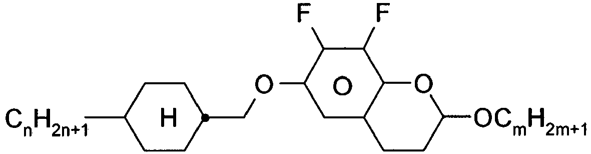 |
| **COChrom-n-Om** |
| 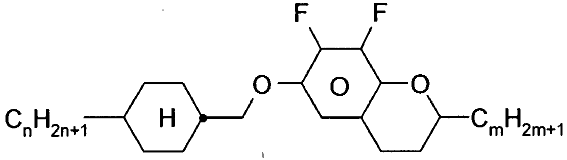 |
| **COChrom-n-m** |
| 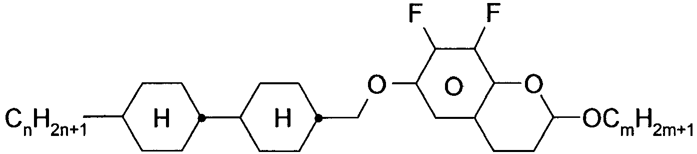 |
| **CCOChrom-n-Om** |
| 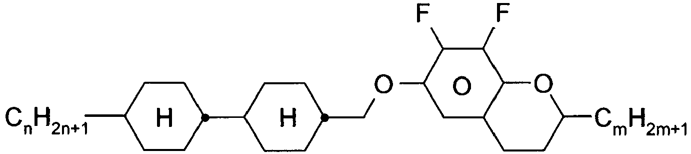 |
| **CCOChrom-n-m** |
| 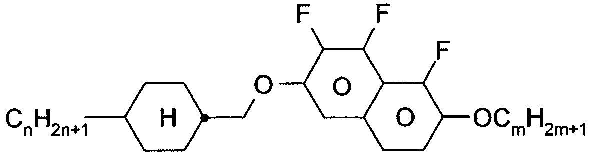 |
| **CONaph-n-Om** |
| 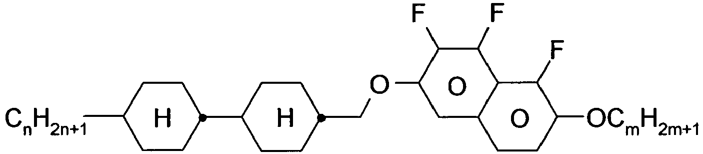 |
| **CCONaph-n-Om** |
| 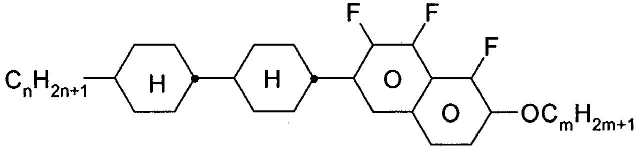 |
| **CCNaph-n-Om** |
| 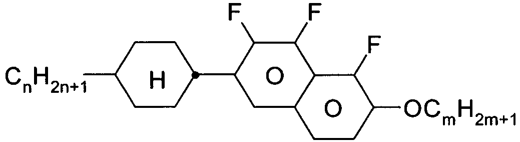 |
| **CNaph-n-Om** |
| 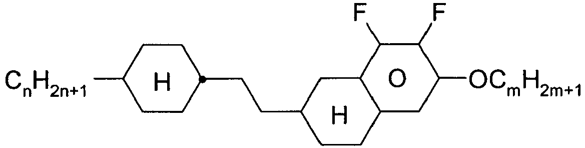 |
| **CETNaph-n-Om** |
| 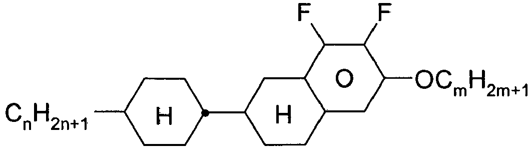 |
| **CTNaph-n-Om** |
| 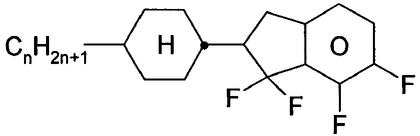 |
| **CK-n-F** |
| 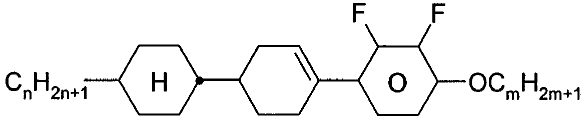 |
| **CLY-n-Om** |
| 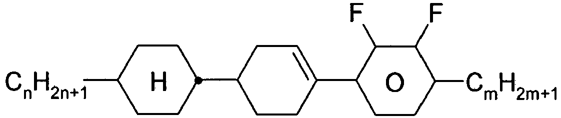 |
| **CLY-n-m** |
| 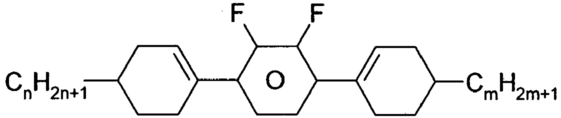 |
| **LYLI-n-m** |
| 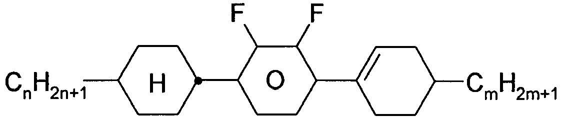 |
| **CYLI-n-m** |
| 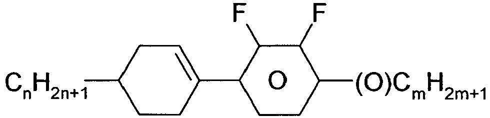 |
| **LY-n-(O)m** |
| 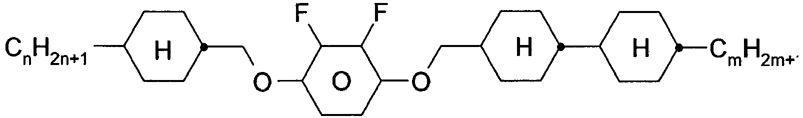 |
| **COYOICC-n-m** |
| 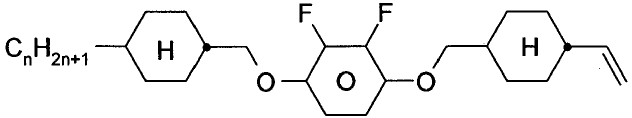 |
| **COYOIC-n-V** |
| 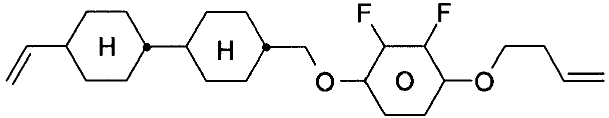 |
| **CCOY-V-O2V** |
| 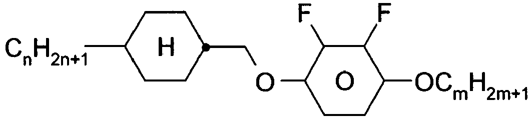 |
| **COY-n-Om** |
| 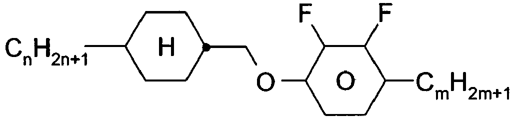 |
| **COY-n-m** |
| 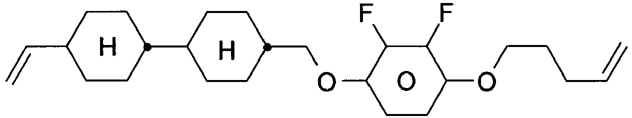 |
| **CCOY-V-O3V** |
| 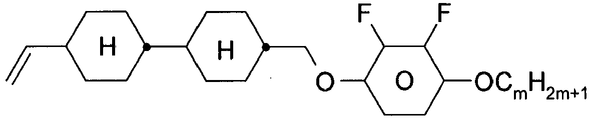 |
| **CCOY-V-Om** |
| 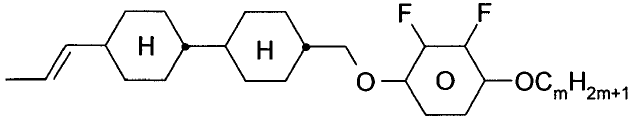 |
| **CCOY-1V-Om** |
| 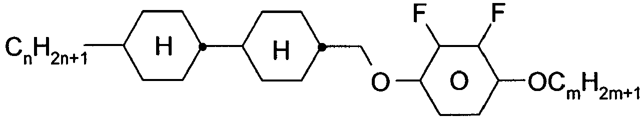 |
| **CCOY-n-Om** |
| 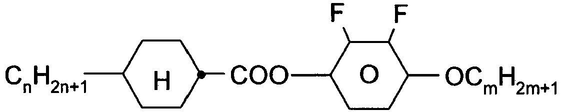 |
| **D-nOmFF** |
| 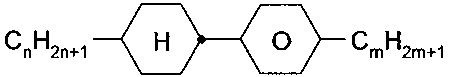 |
| **PCH-nm** |
| 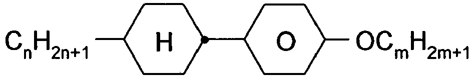 |
| **PCH-nOm** |
| 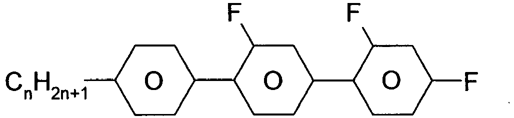 |
| **PGIGI-n-F** |
| 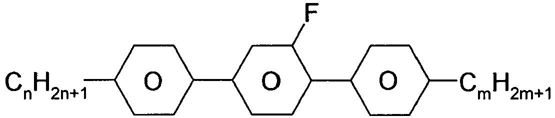 |
| **PGP-n-m** |
| 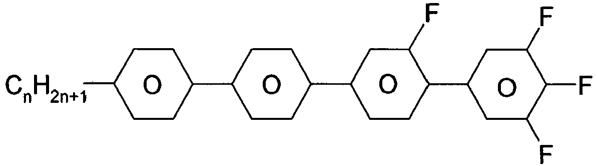 |
| **PPGU-n-F** |
| 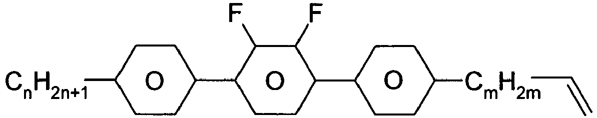 |
| **PYP-n-mV** |
| 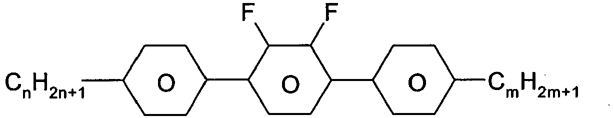 |
| **PYP-n-m** |
| 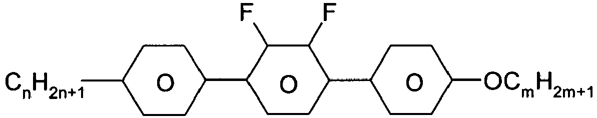 |
| **PYP-n-Om** |
| 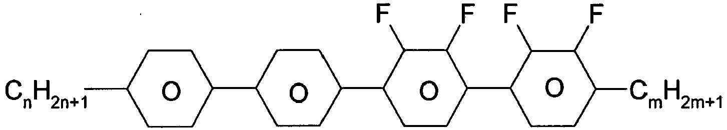 |
| **PPYY-n-m** |
| 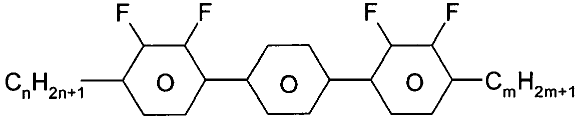 |
| **YPY-n-m** |
| 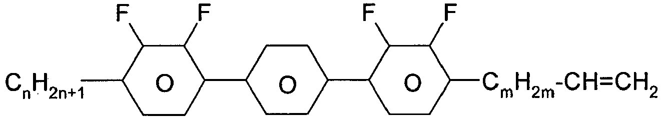 |
| **YPY-n-mV** |
| 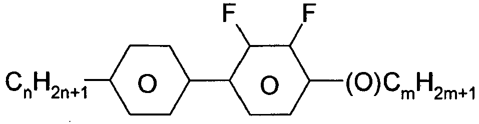 |
| **PY-n-(O)m** |
| 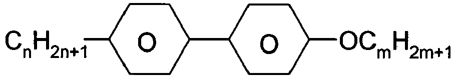 |
| **PP-n-Om** |
| 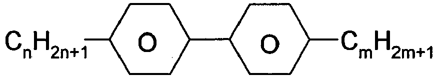 |
| **PP-n-m** |
| 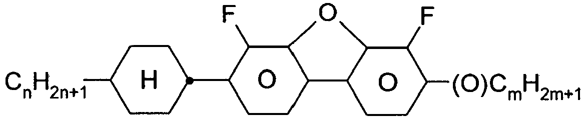 |
| **CB-n-(O)m** |
| 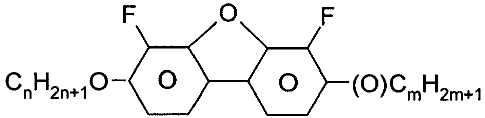 |
| **B-nO-(O)m** |
| 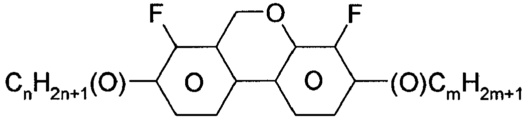 |
| **DFDBC-n(O)-(O)m** |
| 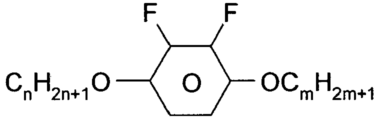 |
| **Y-nO-Om** |
| 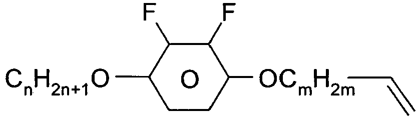 |
| **Y-nO-OmV** |
| 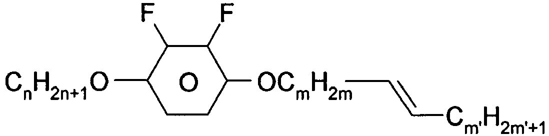 |
| **Y-nO-OmVm'** |
| 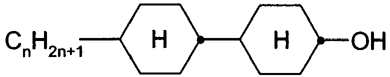 |
| **CC-n-O** |
| 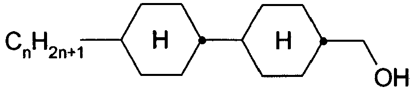 |
| **CC-n-10** |
| 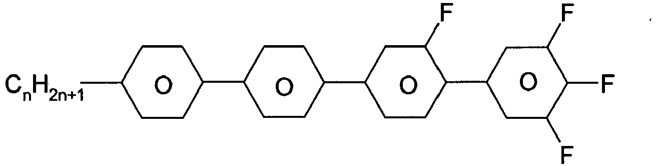 |
| **PPGU-n-F** |
| 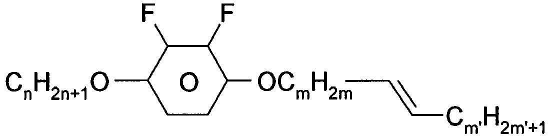 |
| **Y-nO-OmVm'** |
| 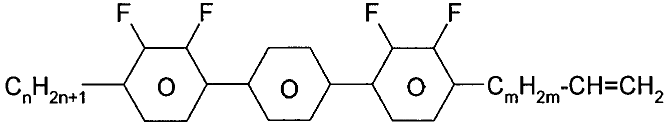 |
| **YPY-n-mV** |
| 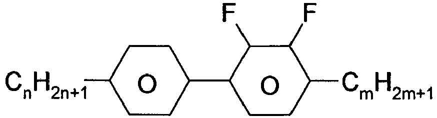 |
| **PY-n-m** |
| 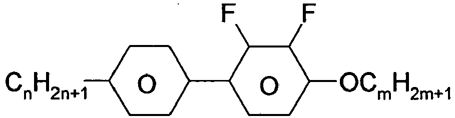 |
| **PY-n-Om** |
| 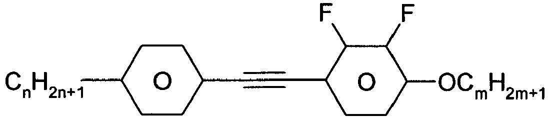 |
| **PTP-nOmFF** |
| 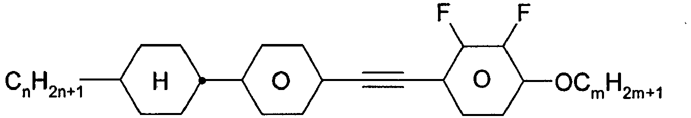 |
| **CPTP-nOmFF** |
| 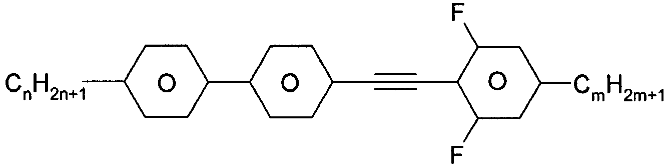 |
| **PPTUI-n-m** |
| 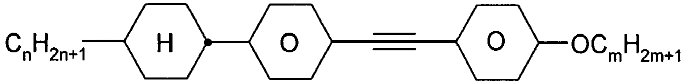 |
| **CPTP-nOm** |
| 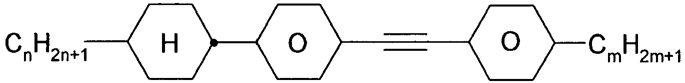 |
| **CPTP-nm** |
| 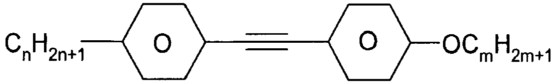 |
| **PTP-nOm** |
| 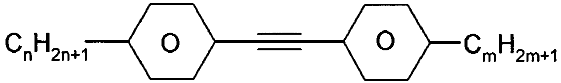 |
| **PTP-nm** |
| 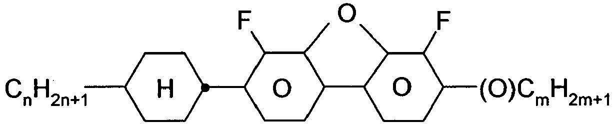 |
| **C-DFDBC-n-(O)m** |
| 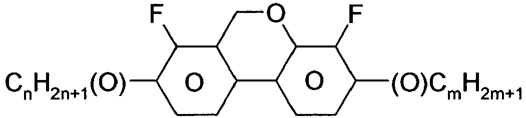 |
| **DFDBC-n(O)-(O)m** |
| 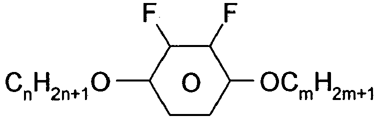 |
| **Y-nO-Om** |
| 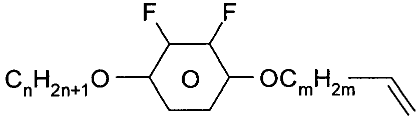 |
| **Y-nO-OmV** |
| 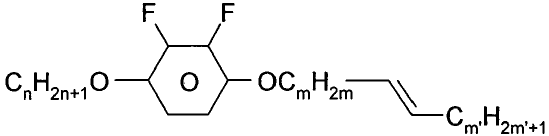 |
| **Y-nO-OmVm'** |

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

By means of suitable additives, the liquid-crystal phases according to the invention can be modified in such a way that they can be employed in any type of, for example, ECB, VAN, GH or ASM-VA, IPS, FFS, PS-VA, PS-IPS, PM (passive matrix) VA, PS-FFS, UB-FFS display that has been disclosed to date.

The dielectrics may also comprise further additives known to the person skilled in the art and described in the literature, such as, for example, UV absorbers, antioxidants, nanoparticles and free-radical scavengers. For example, 0-15% of pleochroic dyes, stabilisers or chiral dopants may be added. Suitable stabilisers for the mixtures according to the invention are, in particular, those listed in Table C.

For example, 0-15 % of pleochroic dyes may be added, furthermore conductive salts, preferably ethyldimethyldodecylammonium 4-hexoxybenzo-ate, tetrabutylammonium tetraphenylboranate or complex salts of crown ethers (cf., for example, Haller et al., Mol. Cryst. Liq. Cryst. Volume 24, pages 249-258 (1973)), may be added in order to improve the conductivity or substances may be added in order to modify the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

Table B shows possible dopants which can be added to the mixtures according to the invention. If the mixtures comprise a dopant, it is employed in amounts of 0.01-4% by weight, preferably 0.1-1.0% by weight.

**Table B**

| | |
|---|---|
| 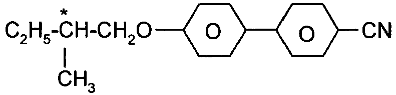 | 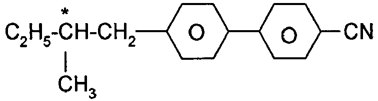 |
| **C 15** | **CB 15** |
| 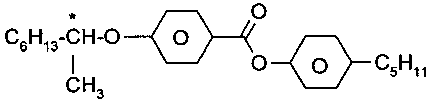 | |
| **CM 21** | |
| 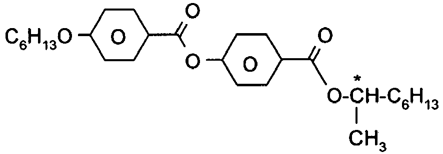 | |
| **R/S-811** | |
| 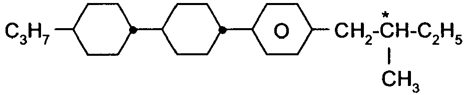 | |
| **CM 44** | |
| 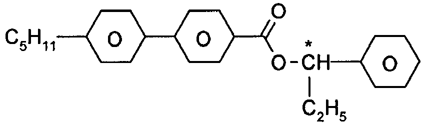 | 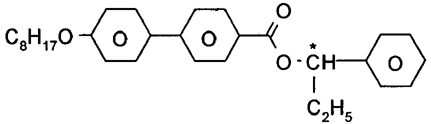 |
| **CM 45** | **CM 47** |
| 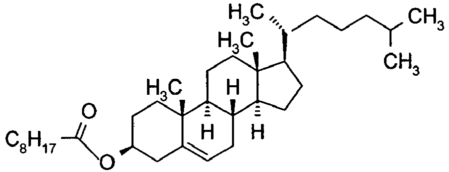 | |
| **CN** | |
| 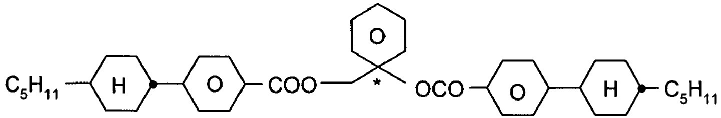 | |
| **R/S-1011** | |
| 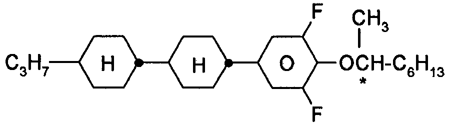 | |
| **R/S-2011** | |
| 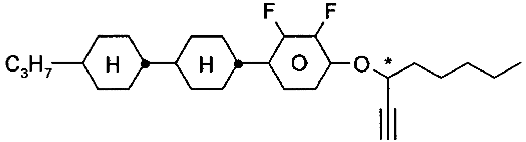 | |
| **R/S-3011** | |
| 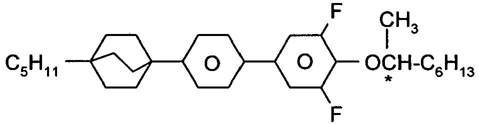 | |
| **R/S-4011** | |
| 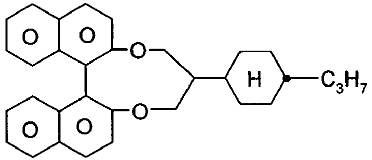 | |
| **R/S-5011** | |

Stabilisers which can be added, for example, to the mixtures according to the invention in amounts of up to 10% by weight, based on the total amount of the mixture, preferably 0.01 to 6% by weight, in particular 0.1 to 3% by weight, are shown below in Table C. Preferred stabilisers are, in particular, BHT derivatives, for example 2,6-di-tert-butyl-4-alkylphenols, and Tinuvin 770, as well as Tunivin P and Tempol.

**Table C**

| | |
|---|---|
| 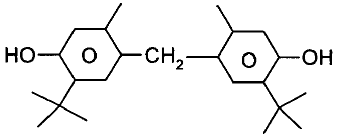 (n = 1-12) | 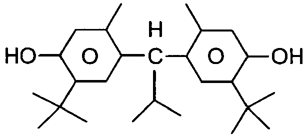 |
| 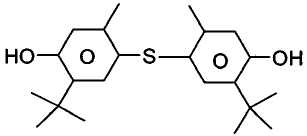 | 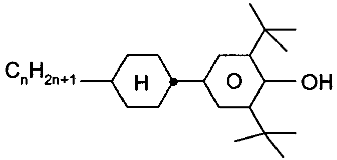 |
| | n = 1, 2, 3, 4, 5, 6 or 7 |
| 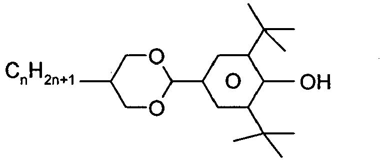 | 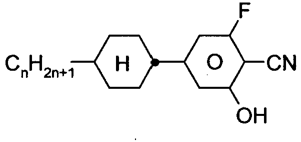 |
| n = 1, 2, 3, 4, 5, 6 or 7 | |
| 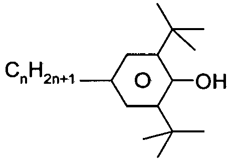 | 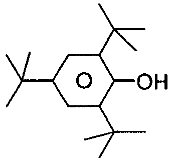 |
| n = 1, 2, 3, 4, 5, 6 or 7 | |
| 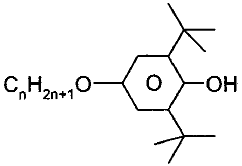 | 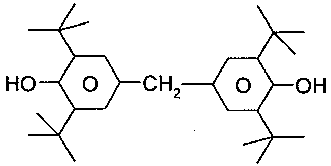 |
| 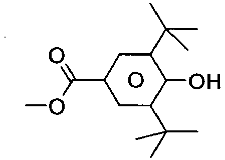 | 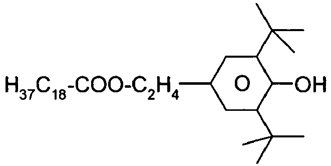 |
| 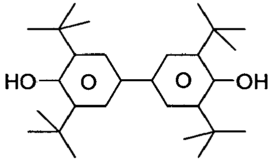 | 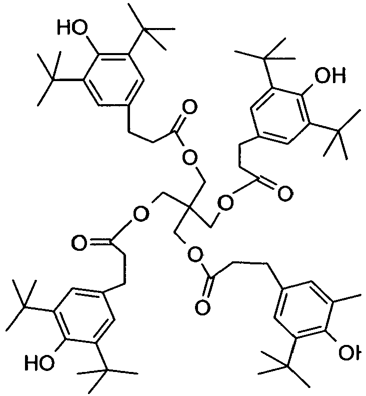 |
| 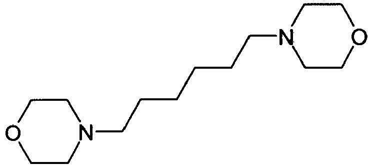 | |
| 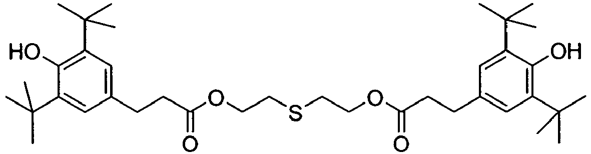 | |
| 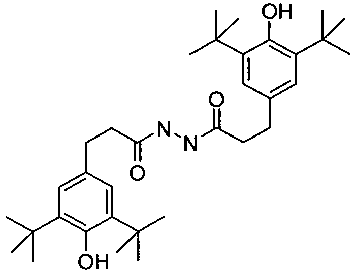 | 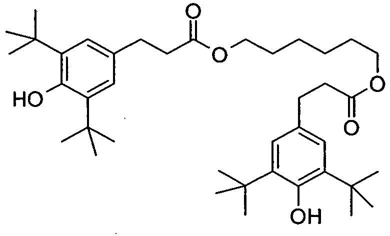 |
| 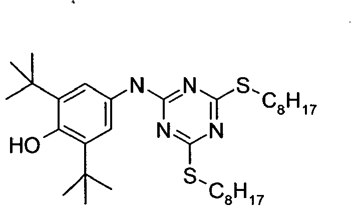 | 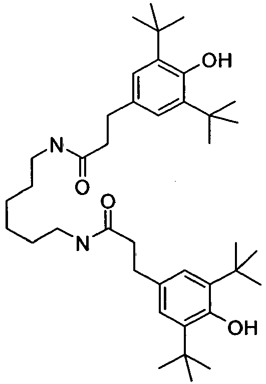 |
| 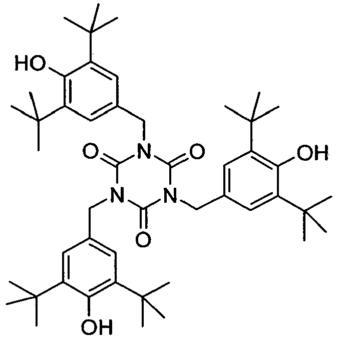 | 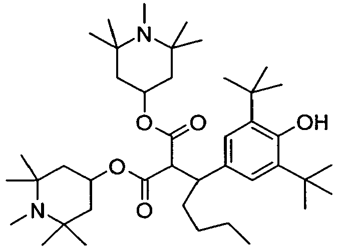 |
| 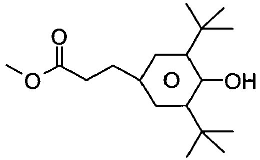 | 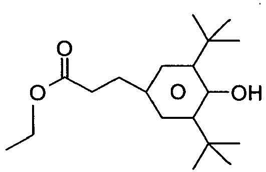 |
| 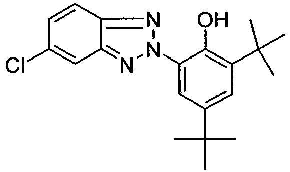 | 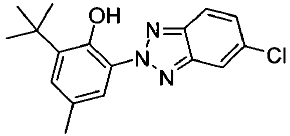 |
| 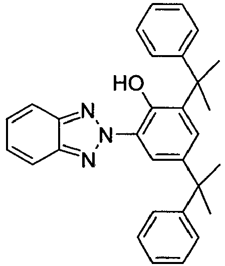 | 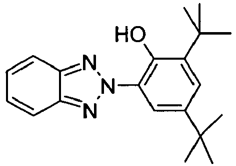 |
| 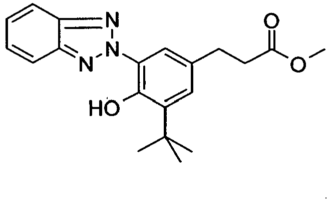 | 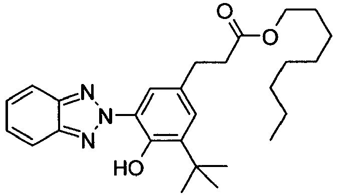 |
| 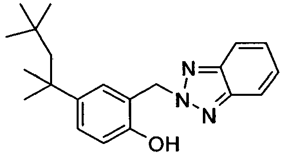 | 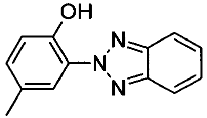 |
| 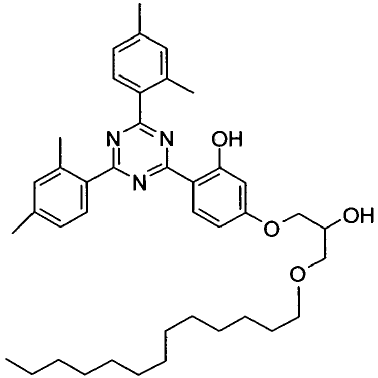 | 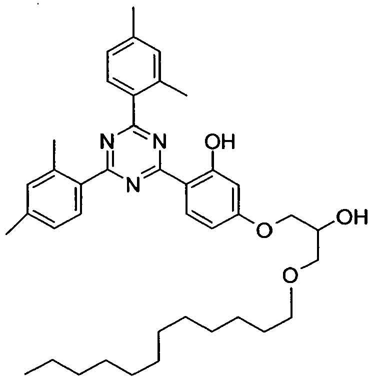 |
| 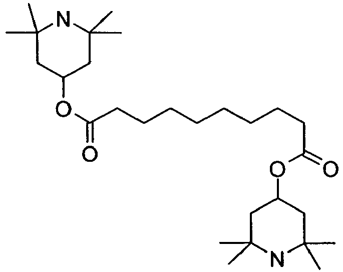 | 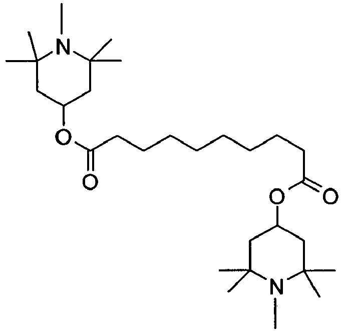 |
| 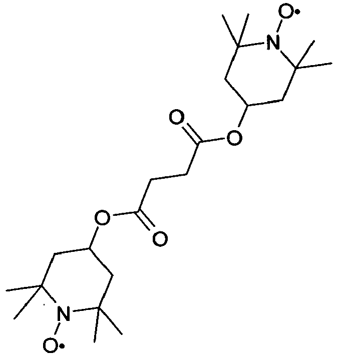 | 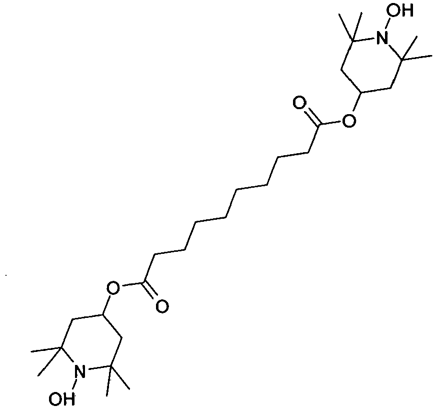 |
| 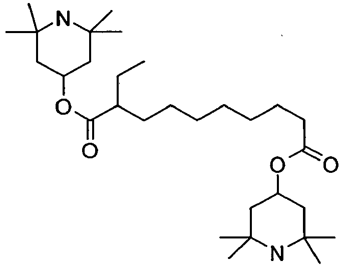 | 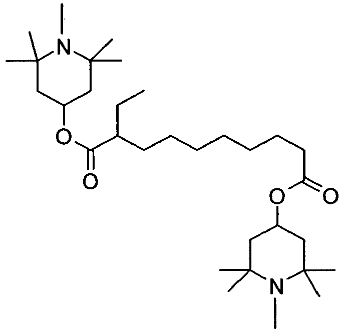 |
| 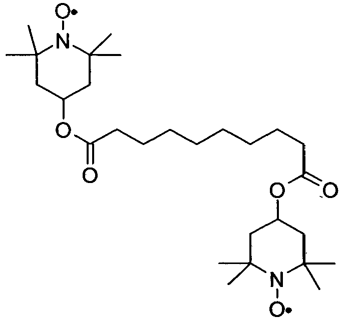 | 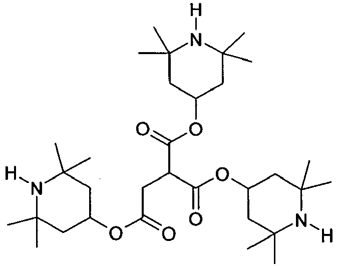 |
| 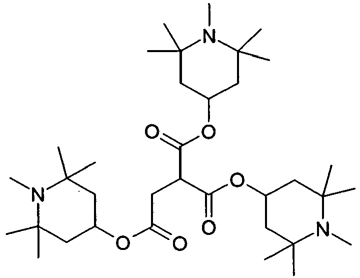 | 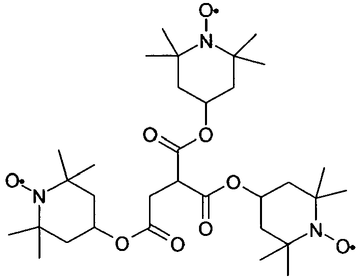 |
| 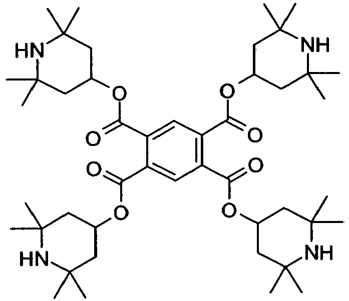 | 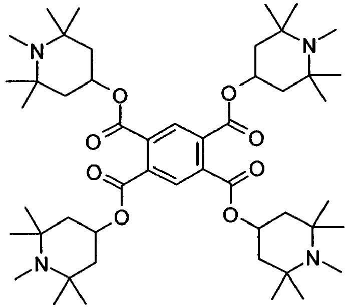 |
| 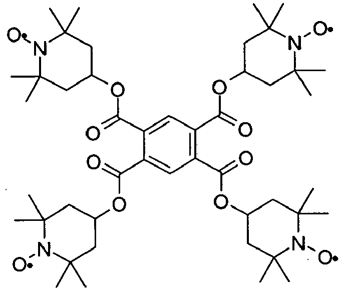 | |

Preferred reactive mesogens (polymerisable compounds) for use in the mixtures according to the invention, preferably in PSA and PS-VA applications are shown in Table D below. In a preferred embodiment the LC medium contains at least one reactive mesogen in amounts of 0.001 to 5 %, preferably 0.01 to 3 %, based on the total mixture.

**Table D**

| | |
|---|---|
| 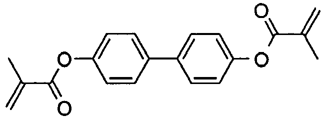 | RM-1 |
| 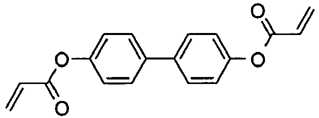 | RM-2 |
| 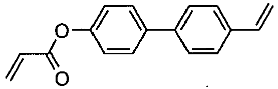 | RM-3 |
| 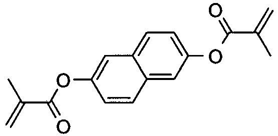 | RM-4 |
| 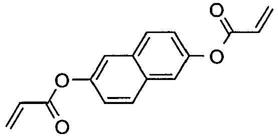 | RM-5 |
| 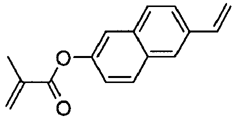 | RM-6 |
| 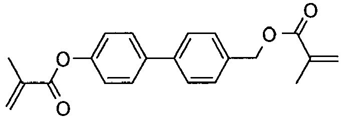 | RM-7 |
| 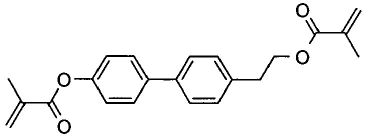 | RM-8 |
| 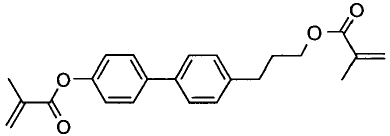 | RM-9 |
| 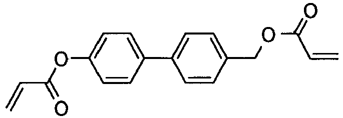 | RM-10 |
| 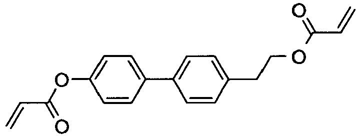 | RM-11 |
| 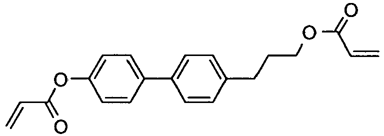 | RM-12 |
| 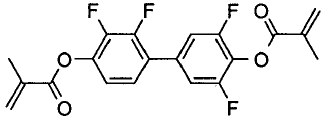 | RM-13 |
| 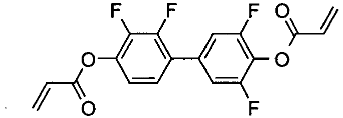 | RM-14 |
| 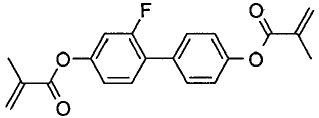 | RM-15 |
| 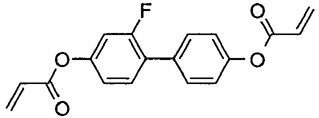 | RM-16 |
| 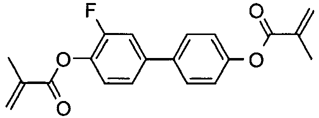 | RM-17 |
| 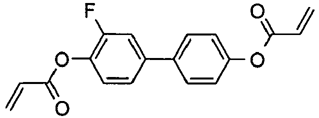 | RM-18 |
| 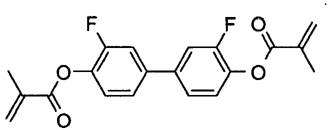 | RM-19 |
| 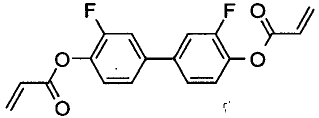 | RM-20 |
| 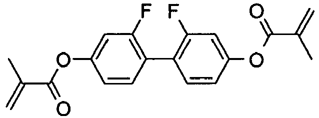 | RM-21 |
| 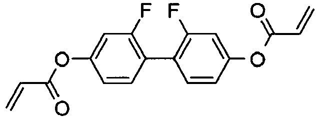 | RM-22 |
| 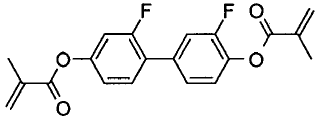 | RM-23 |
| 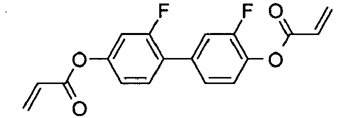 | RM-24 |
| 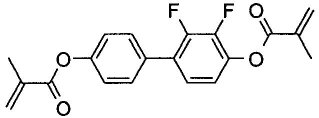 | RM-25 |
| 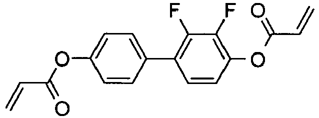 | RM-26 |
| 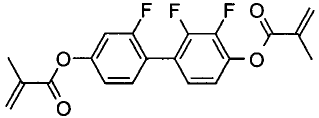 | RM-27 |
| 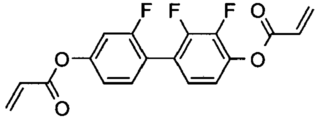 | RM-28 |
| 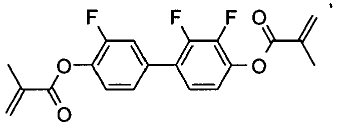 | RM-29 |
| 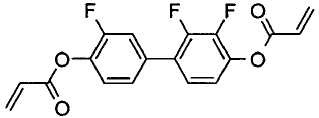 | RM-30 |
| 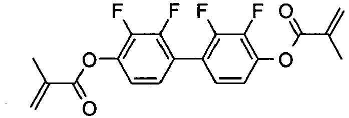 | RM-31 |
| 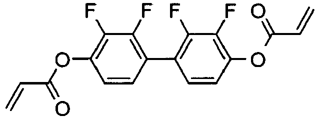 | RM-32 |
| 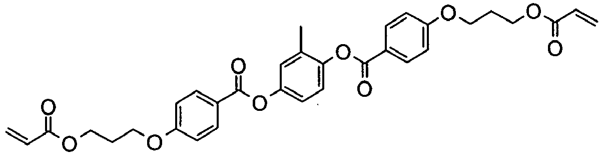 | RM-33 |
| 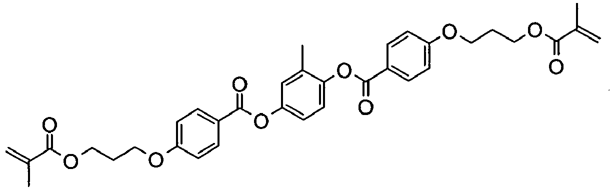 | RM-34 |
| 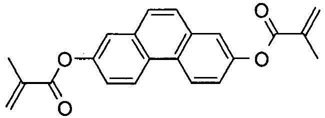 | RM-35 |
| 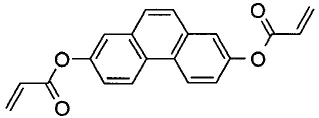 | RM-36 |
| 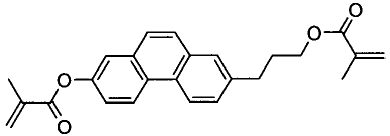 | RM-37 |
| 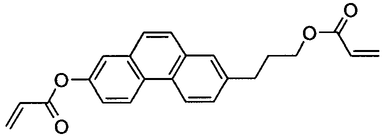 | RM-38 |
| 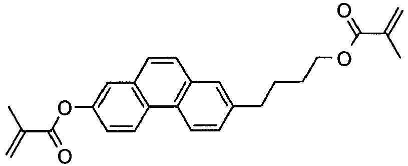 | RM-39 |
| 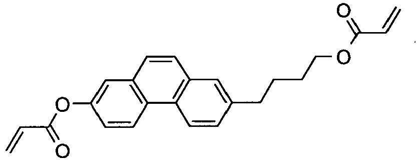 | RM-40 |
| 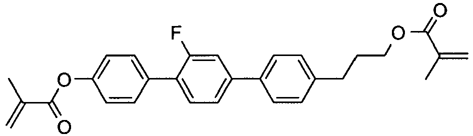 | RM-41 |
| 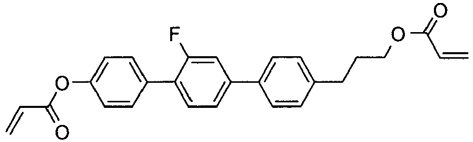 | RM-42 |
| 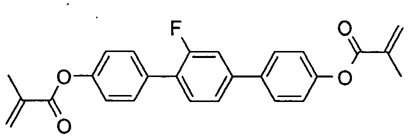 | RM-43 |
| 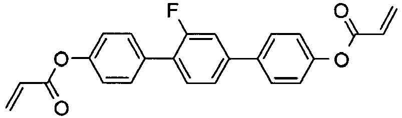 | RM-44 |
| 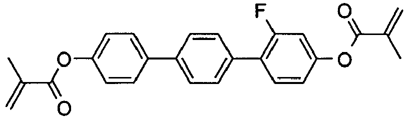 | RM-45 |
| 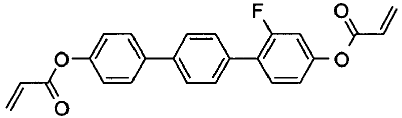 | RM-46 |
| 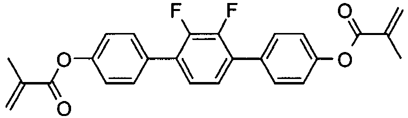 | RM-47 |
| 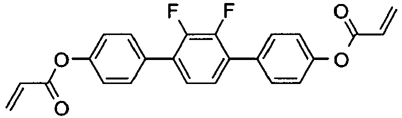 | RM-48 |
| 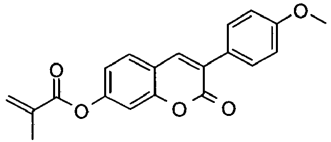 | RM-49 |
| 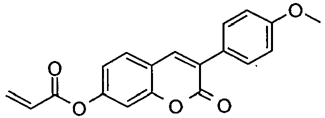 | RM-50 |
| 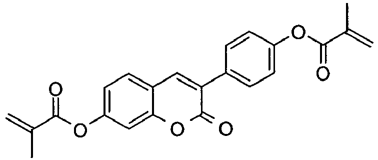 | RM-51 |
| 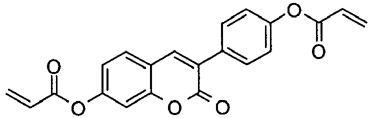 | RM-52 |
| 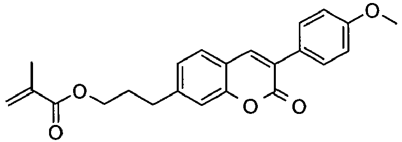 | RM-53 |
| 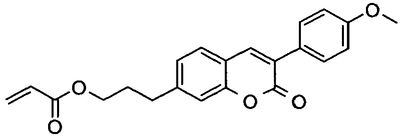 | RM-54 |
| 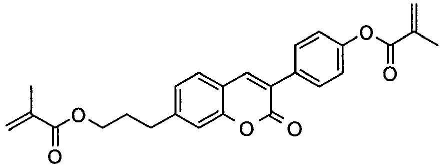 | RM-55 |
| 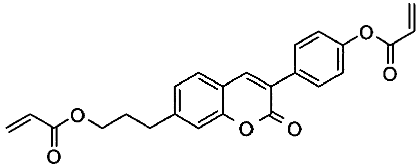 | RM-56 |
| 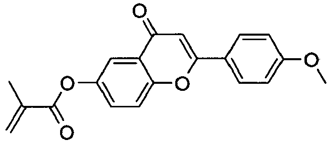 | RM-57 |
| 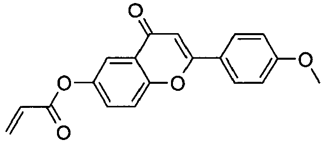 | RM-58 |
| 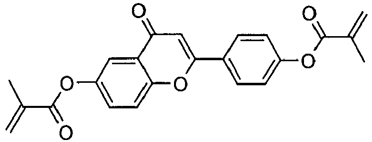 | RM-59 |
| 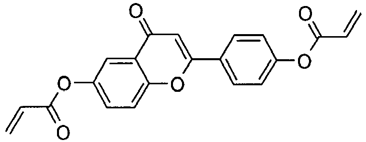 | RM-60 |
| 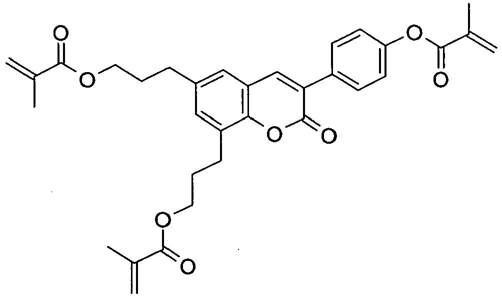 | RM-61 |
| 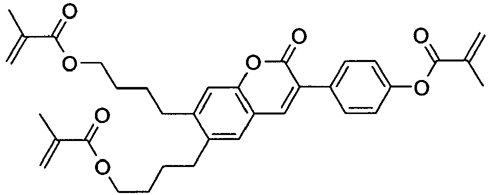 | RM-62 |
| 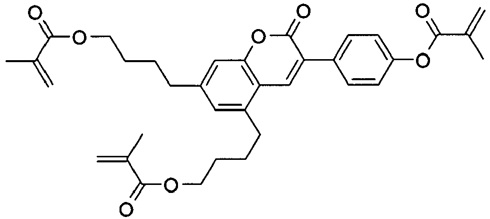 | RM-63 |
| 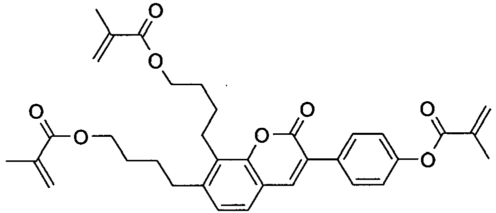 | RM-64 |
| 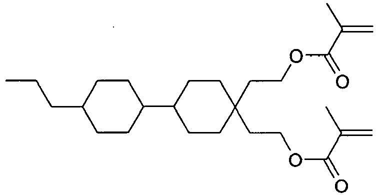 | RM-65 |
| 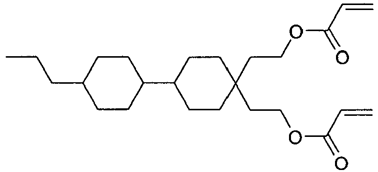 | RM-66 |
| 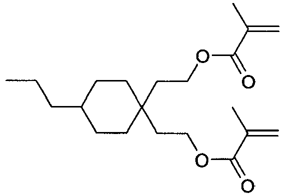 | RM-67 |
| 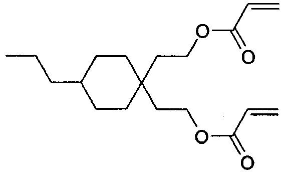 | RM-68 |
| 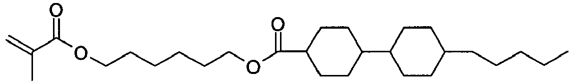 | RM-69 |
| 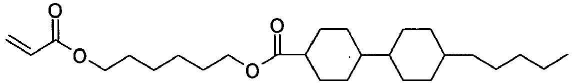 | RM-70 |
| 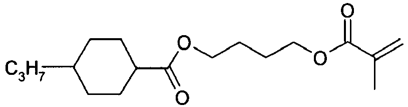 | RM-71 |
| 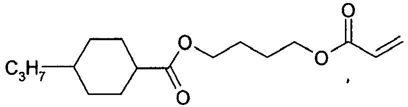 | RM-72 |
| 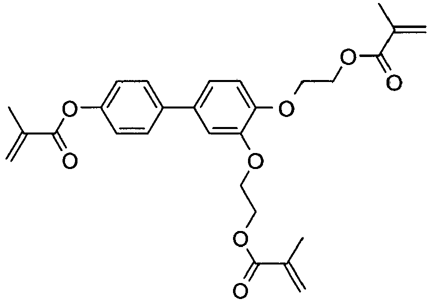 | RM-73 |
| 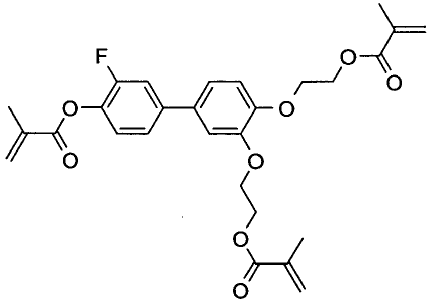 | RM-74 |
| 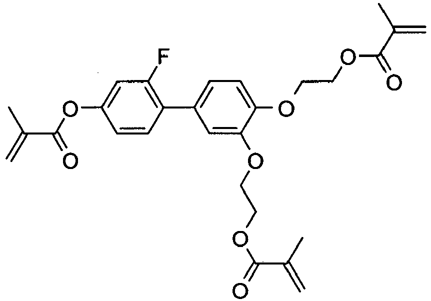 | RM-75 |
| 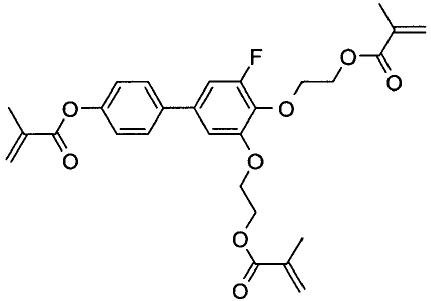 | RM-76 |
| 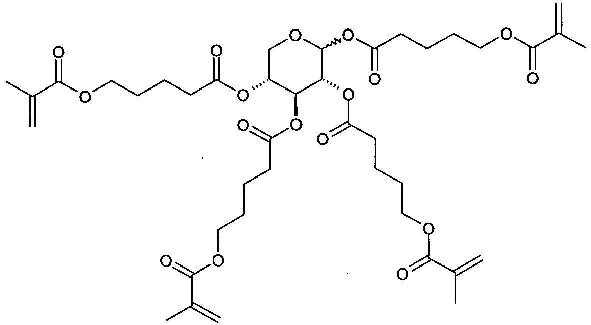 | RM-77 |
| 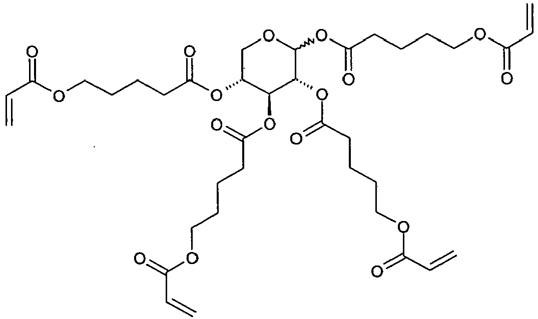 | RM-78 |
| 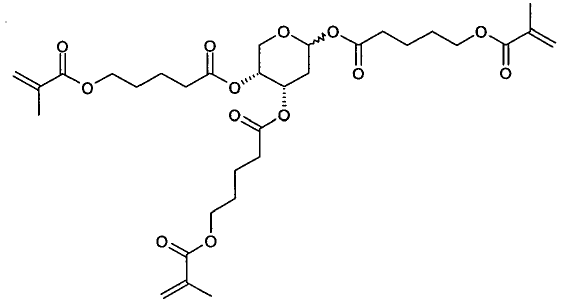 | RM-79 |
| 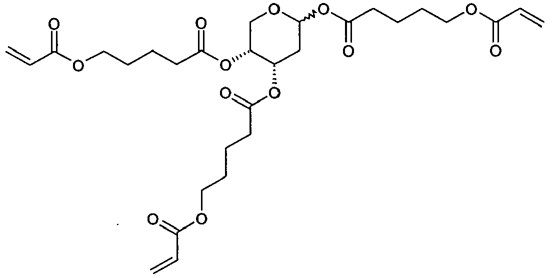 | RM-80 |
| 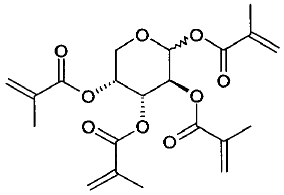 | RM-81 |
| 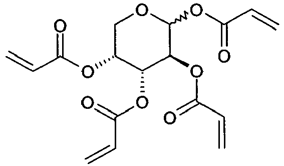 | RM-82 |
| 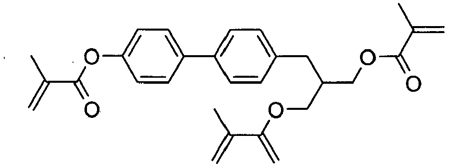 | RM-83 |
| 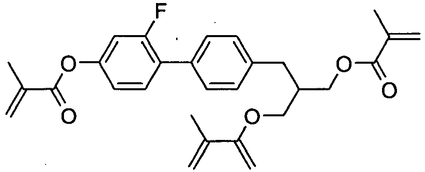 | RM-84 |
| 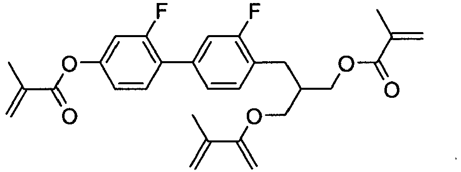 | RM-85 |
| 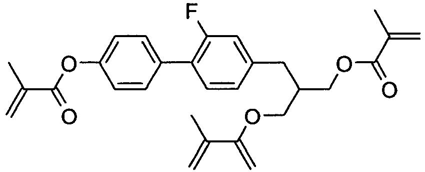 | RM-86 |
| 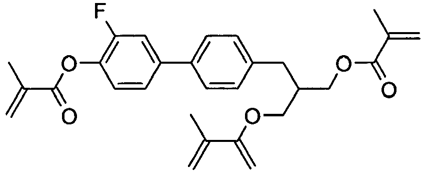 | RM-87 |
| 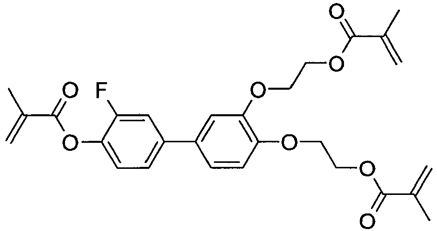 | RM-88 |
| 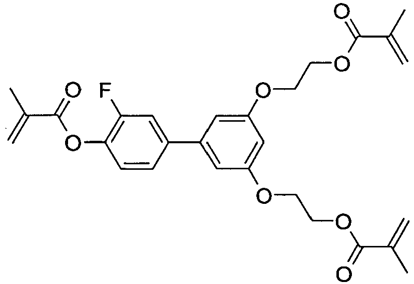 | RM-89 |
| 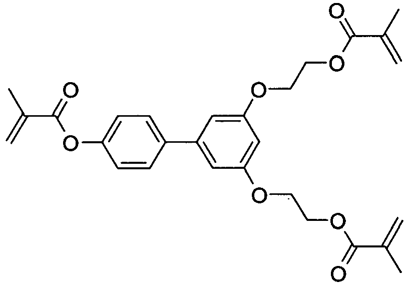 | RM-90 |
| 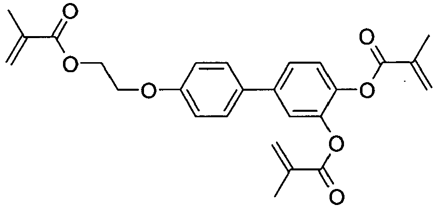 | RM-91 |
| 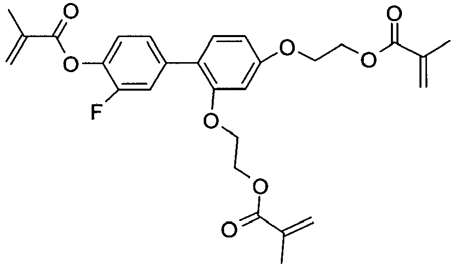 | RM-92 |
| 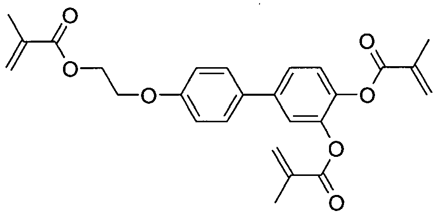 | RM-93 |
| 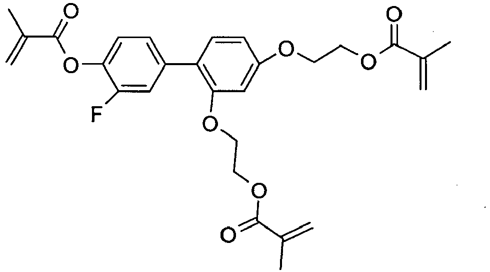 | RM-94 |
| 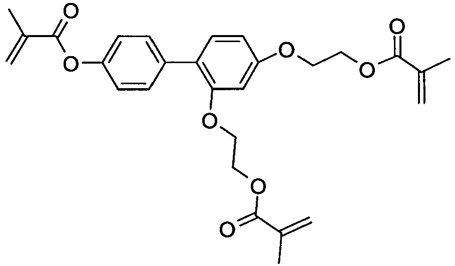 | RM-95 |
| 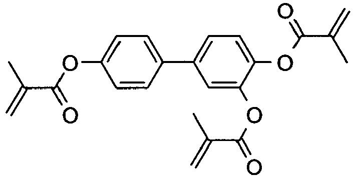 | RM-96 |
| 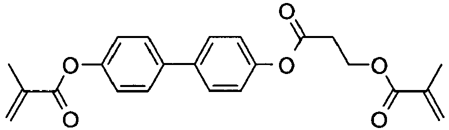 | RM-97 |
| 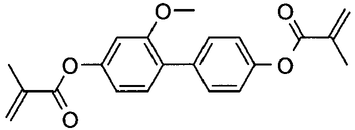 | RM-98 |

### Working Examples:

The following examples are intended to explain the invention without restricting it. In the examples, m.p. denotes the melting point and C denotes the clearing point of a liquid-crystalline substance in degrees Celsius; boiling points are denoted by b.p. Furthermore:
C denotes crystalline solid state, S denotes smectic phase (the index denotes the phase type), N denotes nematic state, Ch denotes cholesteric phase, I denotes isotropic phase, T_{g} denotes glass transition temperature. The number between two symbols indicates the conversion temperature in degrees Celsius.

The host mixture used for determination of the optical anisotropy Δn of the compounds of the formula I is the commercial mixture ZLI-4792 (Merck KGaA). The dielectric anisotropy Δε is determined using commercial mixture ZLI-2857. The physical data of the compound to be investigated are obtained from the change in the dielectric constants of the host mixture after addition of the compound to be investigated and extrapolation to 100% of the compound employed. In general, 10% of the compound to be investigated are dissolved in the host mixture, depending on the solubility.

Unless indicated otherwise, parts or per cent data denote parts by weight or per cent by weight.

Above and below,
- V₀: denotes the threshold voltage, capacitive [V] at 20°C
- Δn: denotes the optical anisotropy measured at 20°C and 589 nm
- Δε: denotes the dielectric anisotropy at 20°C and 1 kHz
- cl.p.: denotes the clearing point [°C]
- K₁: denotes the elastic constant, "splay" deformation at 20°C [pN]
- K₃: denotes the elastic constant, "bend" deformation at 20°C [pN]
- γ₁: denotes the rotational viscosity measured at 20°C [mPa·s], determined by the rotation method in a magnetic field
- LTS: denotes the low-temperature stability (nematic phase), determined in test cells

The display used for measurement of the threshold voltage has two plane-parallel outer plates at a separation of 20 µm and electrode layers with overlying alignment layers of SE-1211 (Nissan Chemicals) on the insides of the outer plates, which effect a homeotropic alignment of the liquid crystals.

All concentrations in this application relate to the corresponding mixture or mixture component, unless explicitly indicated otherwise. All physical properties are determined as described in "Merck Liquid Crystals, Physical Properties of Liquid Crystals", status November 1997, Merck KGaA, Germany, and apply for a temperature of 20°C, unless explicitly indicated otherwise.

### Mixture examples

### Example M1

| | | | |
|---|---|---|---|
| Y-4O-O4 | 12.00% | Clearing point [°C]: | 100 |
| CCY-3-O1 | 5.00% | Δn [589 nm, 20°C]: | 0.0951 |
| CCY-3-O2 | 6.00% | Δε [1 kHz, 20°C]: | -4.8 |
| CCY-3-O3 | 6.00% | ε_{∥} [1 kHz, 20°C]: | 4.1 |
| CCY-4-O2 | 6.00% | ε_{⊥} [1 kHz, 20°C]: | 8.9 |
| CPY-2-O2 | 8.00% | K₃ [pN, 20°C]: | 15.3 |
| CPY-3-O2 | 8.00% | K₃/K₁ [20°C]: | 0.99 |
| CC-4-V | 18.00% | γ₁ [mPa·s, 20°C]: | 199 |
| CC-5-V | 5.00% | V₀ [20°C, V]: | 1.88 |
| CH-33 | 3.00% | | |
| CH-35 | 3.00% | | |
| CH-43 | 3.00% | | |
| CH-45 | 3.00% | | |
| CCPC-33 | 4.00% | | |
| CCPC-34 | 4.00% | | |
| B-2O-O5 | 6.00% | | |

### Comparative Example M2

| | | | |
|---|---|---|---|
| Y-4O-O4 | 15.00% | Clearing point [°C]: | 101 |
| CY-3-O4 | 15.50% | Δn [589 nm, 20°C]: | 0.0976 |
| CCY-3-O2 | 6.50% | Δε [1 kHz, 20°C]: | -5.7 |
| CCY-3-O3 | 6.50% | ε_{∥} [1 kHz, 20°C]: | 4.4 |
| CCY-4-O2 | 6.50% | ε_{⊥} [1 kHz, 20°C]: | 10.1 |
| CCY-5-O2 | 5.50% | K₃ [pN, 20°C]: | 16.9 |
| CPY-2-O2 | 8.00% | K₃/K₁ [20°C]: | 1.11 |
| CPY-3-O2 | 8.00% | γ₁ [mPa·s, 20°C]: | 299 |
| CC-4-V | 4.50% | V₀ [20°C, V]: | 1.81 |
| CH-33 | 3.00% | | |
| CH-35 | 3.00% | | |
| CH-43 | 3.00% | | |
| CCPC-33 | 5.00% | | |
| CCPC-34 | 5.00% | | |
| CCPC-35 | 5.00% | | |

### Comparative Example M3

| | | | |
|---|---|---|---|
| Y-4O-O4 | 13.00% | Clearing point [°C]: | 100 |
| CY-3-O2 | 6.50% | Δn [589 nm, 20°C]: | 0.0853 |
| CY-3-O4 | 10.00% | Δε [1 kHz, 20°C]: | -4.0 |
| CCY-3-O2 | 5.50% | ε_{∥} [1 kHz, 20°C]: | 3.9 |
| CCY-3-O3 | 5.50% | ε_{⊥} [1 kHz, 20°C]: | 7.9 |
| CCY-4-O2 | 5.00% | K₃ [pN, 20°C]: | 16.9 |
| CCY-5-O2 | 5.00% | K₃/K₁ [20°C]: | 1.12 |
| CPY-3-O2 | 3.50% | γ₁ [mPa·s, 20°C]: | 207 |
| CC-4-V | 12.00% | V₀ [20°C, V]: | 2.16 |
| CCP-V2-1 | 10.00% | | |
| CH-33 | 3.00% | | |
| CH-35 | 3.00% | | |
| CH-43 | 3.00% | | |
| CCPC-33 | 5.00% | | |
| CCPC-34 | 5.00% | | |
| CCPC-35 | 5.00% | | |

### Comparative Example M4

| | | | |
|---|---|---|---|
| Y-4O-O4 | 12.00% | Clearing point [°C]: | 100 |
| CY-3-O4 | 20.00% | Δn [589 nm, 20°C]: | 0.0860 |
| CY-5-O4 | 3.00% | Δε [1 kHz, 20°C]: | -5.2 |
| CCY-2-1 | 8.00% | ε_{∥} [1 kHz, 20°C]: | 4.2 |
| CCY-3-1 | 8.00% | ε_{⊥} [1 kHz, 20°C]: | 9.4 |
| CCY-3-O2 | 5.50% | K₃ [pN, 20°C]: | 16.6 |
| CCY-3-O3 | 5.50% | K₃/K₁ [20°C]: | 1.10 |
| CCY-4-O2 | 5.50% | γ₁ [mPa·s, 20°C]: | 310 |
| CCY-5-O2 | 5.50% | V₀ [20°C, V]: | 1.89 |
| CH-33 | 3.00% | | |
| CH-35 | 3.00% | | |
| CH-43 | 3.00% | | |
| CH-45 | 3.00% | | |
| CCPC-33 | 5.00% | | |
| CCPC-34 | 5.00% | | |
| CCPC-35 | 5.00% | | |

### Comparative Example M5

| | | | |
|---|---|---|---|
| Y-4O-O4 | 12.50% | Clearing point [°C]: | 105 |
| CY-3-O4 | 5.00% | Δn [589 nm, 20°C]: | 0.0868 |
| CY-5-O4 | 18.00% | Δε [1 kHz, 20°C]: | -5.4 |
| CCY-3-O1 | 4.00% | ε_{∥} [1 kHz, 20°C]: | 4.2 |
| CCY-3-O2 | 6.00% | ε_{⊥} [1 kHz, 20°C]: | 9.6 |
| CCY-3-O3 | 6.00% | K₃ [pN, 20°C]: | 16.5 |
| CCY-4-O2 | 6.00% | K₃/K₁ [20°C]: | 0.99 |
| CCY-5-O2 | 6.00% | V₀ [20°C, V]: | 1.85 |
| CPY-3-O2 | 4.50% | | |
| CH-33 | 4.00% | | |
| CH-35 | 4.00% | | |
| CH-43 | 4.00% | | |
| CH-45 | 4.00% | | |
| CCOC-3-3 | 2.00% | | |
| CCOC-4-3 | 2.00% | | |
| CCPC-33 | 4.00% | | |
| CCPC-34 | 4.00% | | |
| CCPC-35 | 4.00% | | |

### Comparative Example M6

| | | | |
|---|---|---|---|
| Y-4O-O4 | 10.00% | Clearing point [°C]: | 90 |
| CY-3-O4 | 20.00% | Δn [589 nm, 20°C]: | 0.0826 |
| CY-5-O4 | 16.50% | Δε [1 kHz, 20°C]: | -5.4 |
| CCY-3-O2 | 6.00% | ε_{∥} [1 kHz, 20°C]: | 4.2 |
| CCY-3-O3 | 6.00% | ε_{⊥} [1 kHz, 20°C]: | 9.6 |
| CCY-4-O2 | 6.00% | K₃ [pN, 20°C]: | 15.0 |
| CCY-5-O2 | 4.50% | K₃/K₁ [20°C]: | 1.03 |
| CH-33 | 4.00% | γ₁ [mPa·s, 20°C]: | 289 |
| CH-35 | 4.00% | V₀ [20°C, V]: | 1.76 |
| CH-43 | 4.00% | | |
| CH-45 | 4.00% | | |
| CCPC-33 | 5.00% | | |
| CCPC-34 | 5.00% | | |
| CCPC-35 | 5.00% | | |

### Comparative Example M7

| | | | |
|---|---|---|---|
| Y-4O-O4 | 11.00% | Clearing point [°C]: | 92 |
| CY-3-O2 | 15.00% | Δn [589 nm, 20°C]: | 0.0921 |
| CY-3-O4 | 15.00% | Δε [1 kHz, 20°C]: | -6.1 |
| CCY-2-1 | 3.50% | ε_{∥} [1 kHz, 20°C]: | 4.5 |
| CCY-3-O1 | 5.00% | ε_{⊥} [1 kHz, 20°C]: | 10.6 |
| CCY-3-O2 | 5.50% | K₃ [pN, 20°C]: | 16.0 |
| CCY-3-O3 | 5.50% | K₃/K₁ [20°C]: | 1.14 |
| CCY-4-O2 | 5.50% | γ₁ [mPa·s, 20°C]: | 300 |
| CLY-3-O2 | 6.00% | V₀ [20°C, V]: | 1.71 |
| CPY-2-O2 | 4.00% | | |
| CH-33 | 3.00% | | |
| CH-35 | 3.00% | | |
| CH-43 | 3.00% | | |
| CCPC-33 | 5.00% | | |
| CCPC-34 | 5.00% | | |
| CCPC-35 | 5.00% | | |

### Comparative Example M8

| | | | |
|---|---|---|---|
| Y-4O-O4 | 15.00% | Clearing point [°C]: | 95 |
| CY-3-O4 | 3.00% | Δn [589 nm, 20°C]: | 0.0814 |
| CY-5-O4 | 20.00% | Δε [1 kHz, 20°C]: | -5.5 |
| CCY-3-O1 | 6.00% | ε_{∥} [1 kHz, 20°C]: | 4.3 |
| CCY-3-O2 | 6.00% | ε_{⊥} [1 kHz, 20°C]: | 9.8 |
| CCY-3-O3 | 6.00% | K₃ [pN, 20°C]: | 15.3 |
| CCY-4-O2 | 6.00% | K₃/K₁ [20°C]: | 1.01 |
| CCY-5-O2 | 6.00% | γ₁ [mPa·s, 20°C]: | 294 |
| CH-33 | 4.00% | V₀ [20°C, V]: | 1.77 |
| CH-35 | 4.00% | | |
| CH-43 | 4.00% | | |
| CH-45 | 4.00% | | |
| CCOC-3-3 | 2.00% | | |
| CCOC-4-3 | 2.00% | | |
| CCPC-33 | 4.00% | | |
| CCPC-34 | 4.00% | | |
| CCPC-35 | 4.00% | | |

### Comparative Example M9

| | | | |
|---|---|---|---|
| Y-4O-O4 | 15.00% | Clearing point [°C]: | 96 |
| CY-3-O4 | 4.00% | Δn [589 nm, 20°C]: | 0.0796 |
| CY-5-O4 | 16.00% | Δε [1 kHz, 20°C]: | -5.1 |
| CCY-3-O1 | 5.00% | ε_{∥} [1 kHz, 20°C]: | 4.2 |
| CCY-3-O2 | 6.00% | ε_{⊥} [1 kHz, 20°C]: | 9.3 |
| CCY-3-O3 | 6.00% | K₃ [pN, 20°C]: | 15.5 |
| CCY-4-O2 | 6.00% | K₃/K₁ [20°C]: | 1.00 |
| CCY-5-O2 | 6.00% | γ₁ [mPa·s, 20°C]: | 272 |
| CC-5-V | 3.50% | V₀ [20°C, V]: | 1.84 |
| CH-33 | 4.00% | | |
| CH-35 | 4.00% | | |
| CH-43 | 4.00% | | |
| CH-45 | 4.00% | | |
| CCOC-3-3 | 2.50% | | |
| CCOC-4-3 | 2.50% | | |
| CCPC-33 | 4.00% | | |
| CCPC-34 | 3.50% | | |
| CCPC-35 | 4.00% | | |

### Comparative Example M10

| | | | |
|---|---|---|---|
| Y-4O-O4 | 15.00% | Clearing point [°C]: | 96 |
| CY-3-O2 | 3.00% | Δn [589 nm, 20°C]: | 0.0808 |
| CY-5-O4 | 18.00% | Δε [1 kHz, 20°C]: | -5.2 |
| CCY-3-O1 | 5.50% | ε_{∥} [1 kHz, 20°C]: | 4.3 |
| CCY-3-O2 | 6.00% | ε_{⊥} [1 kHz, 20°C]: | 9.5 |
| CCY-3-O3 | 6.00% | K₃ [pN, 20°C]: | 15.4 |
| CCY-4-O2 | 6.00% | K₃/K₁ [20°C]: | 0.99 |
| CCY-5-O2 | 6.00% | γ₁ [mPa·s, 20°C]: | 277 |
| CC-5-V | 2.50% | V₀ [20°C, V]: | 1.81 |
| CH-33 | 4.00% | | |
| CH-35 | 4.00% | | |
| CH-43 | 4.00% | | |
| CH-45 | 4.00% | | |
| CCOC-3-3 | 2.00% | | |
| CCOC-4-3 | 2.00% | | |
| CCPC-33 | 4.00% | | |
| CCPC-34 | 4.00% | | |
| CCPC-35 | 4.00% | | |

### Comparative Example M11

| | | | |
|---|---|---|---|
| Y-4O-O4 | 12.00% | Clearing point [°C]: | 100 |
| CY-3-O4 | 4.00% | Δn [589 nm, 20°C]: | 0.0818 |
| CY-5-O4 | 20.00% | Δε [1 kHz, 20°C]: | -5.3 |
| CCY-3-O1 | 6.00% | ε_{∥} [1 kHz, 20°C]: | 4.1 |
| CCY-3-O2 | 6.50% | ε_{⊥} [1 kHz, 20°C]: | 9.4 |
| CCY-3-O3 | 6.50% | K₃ [pN, 20°C]: | 15.4 |
| CCY-4-O2 | 6.50% | K₃/K₁ [20°C]: | 0.94 |
| CCY-5-O2 | 6.50% | γ₁ [mPa·s, 20°C]: | 304 |
| CH-33 | 4.00% | V₀ [20°C, V]: | 1.80 |
| CH-35 | 4.00% | | |
| CH-43 | 4.00% | | |
| CH-45 | 4.00% | | |
| CCOC-3-3 | 4.00% | | |
| CCOC-4-3 | 4.00% | | |
| CCPC-33 | 4.00% | | |
| CCPC-34 | 4.00% | | |

### Comparative Example M12

| | | | |
|---|---|---|---|
| Y-4O-O4 | 7.00% | Clearing point [°C]: | 100 |
| CY-3-O2 | 10.00% | Δn [589 nm, 20°C]: | 0.0949 |
| CY-3-O4 | 18.00% | Δε [1 kHz, 20°C]: | -5.2 |
| CCY-3-O2 | 6.50% | ε_{∥} [1 kHz, 20°C]: | 4.0 |
| CCY-3-O3 | 6.50% | ε_{⊥} [1 kHz, 20°C]: | 9.2 |
| CCY-4-O2 | 6.50% | K₃ [pN, 20°C]: | 16.8 |
| CPY-2-O2 | 8.50% | K₃/K₁ [20°C]: | 1.12 |
| CPY-3-O2 | 5.00% | γ₁ [mPa·s, 20°C]: | 270 |
| CC-5-V | 9.00% | V₀ [20°C, V]: | 1.91 |
| CH-33 | 3.00% | | |
| CH-35 | 3.00% | | |
| CH-43 | 3.00% | | |
| CCPC-33 | 5.00% | | |
| CCPC-34 | 4.50% | | |
| CCPC-35 | 4.50% | | |

### Comparative Example M13

| | | | |
|---|---|---|---|
| Y-4O-O4 | 15.00% | Clearing point [°C]: | 103 |
| COY-2-O2 | 8.00% | | |
| COY-3-O2 | 7.50% | | |
| CCOY-2-O2 | 13.00% | | |
| CCOY-3-O2 | 6.50% | | |
| CCOY-4-O2 | 5.50% | | |
| CPY-2-O2 | 8.00% | | |
| CPY-3-O2 | 8.00% | | |
| CC-4-V | 4.50% | | |
| CH-33 | 3.00% | | |
| CH-35 | 3.00% | | |
| CH-43 | 3.00% | | |
| CCPC-33 | 5.00% | | |
| CCPC-34 | 5.00% | | |
| CCPC-35 | 5.00% | | |

### Comparative Example M14

| | | | |
|---|---|---|---|
| Y-4O-O4 | 11.00% | Clearing point [°C]: | 90 |
| CY-3-O4 | 12.00% | Δn [589 nm, 20°C]: | 0.0706 |
| CCY-3-O1 | 5.00% | Δε [1 kHz, 20°C]: | -4.0 |
| CCY-3-O2 | 6.00% | ε_{∥} [1 kHz, 20°C]: | 3.9 |
| CCY-3-O3 | 6.00% | ε_{⊥} [1 kHz, 20°C]: | 7.9 |
| CCY-4-O2 | 6.00% | K₃ [pN, 20°C]: | 14.0 |
| CCY-5-O2 | 6.00% | K₃/K₁ [20°C]: | 1.04 |
| CCH-301 | 18.00% | γ₁ [mPa·s, 20°C]: | 190 |
| CH-33 | 4.00% | V₀ [20°C, V]: | 1.99 |
| CH-35 | 4.00% | | |
| CH-43 | 4.00% | | |
| CH-45 | 4.00% | | |
| CCOC-3-3 | 5.00% | | |
| CCOC-4-3 | 5.00% | | |
| CCPC-33 | 4.00% | | |

### Examples M15 to M20

In a preferred embodiment, the liquid-crystalline mixtures according to the Examples M1, Comparative Example M2, Comparative Example M3, Comparative Example M10, Comparative Example M12 and Comparative Example M13 are each stabilized by adding 300 ppm of the compound of the formula

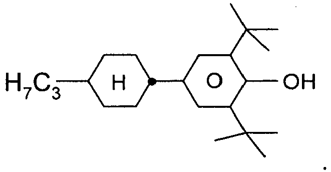

## Claims

1. Liquid-crystalline medium based on a mixture of polar compounds, **characterised in that** it comprises at least one compound of the formula I, 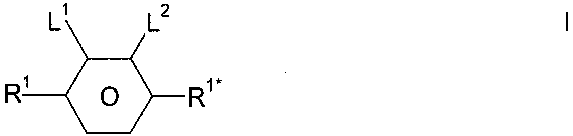 and at least one compound of the formula IA 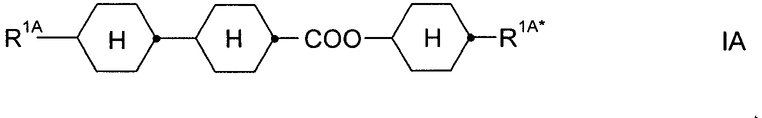 in which
R¹, R¹*, R^{1A} and R^{A1}* each, independently of one another, denote an alkyl or alkoxy radical having 1 to 15 C atoms, where, in addition, one or more CH₂ groups in these radicals may each be replaced, independently of one another, by -C≡C-, -CF₂O-, -CH=CH-, 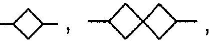 -O-, -CO-O-, -O-CO- in such a way that O atoms are not linked directly to one another, and in which, in addition, one or more H atoms may be replaced by halogen, and
L¹ and L² each, independently of one another, denote F, Cl, CF₃ or CHF₂.
and additionally one or more compounds selected from the group of compounds of the formula BC, CR, PH-1, PH-2, BF-1, BF-2 and BS, 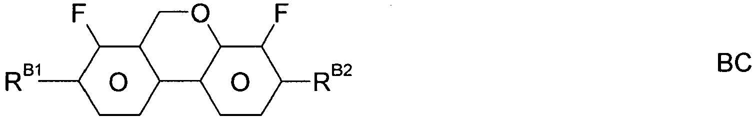 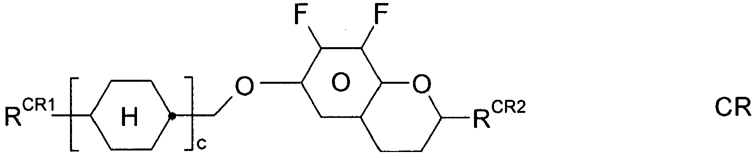 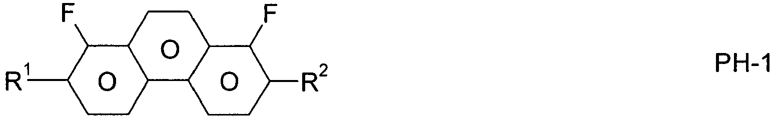 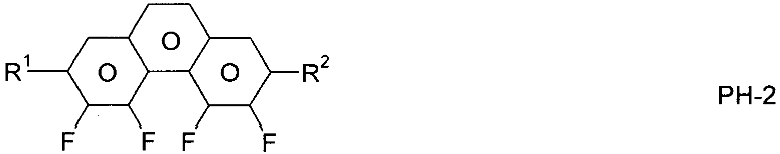 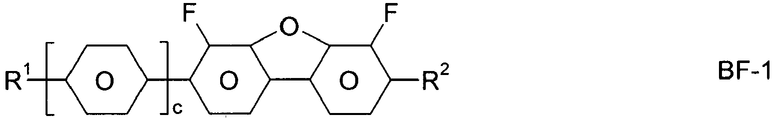 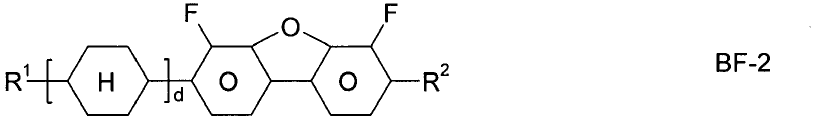 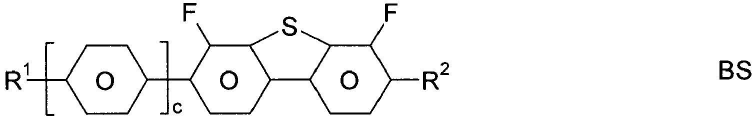 in which
R^{B1}, R^{B2}, R^{CR1}, R^{CR2}, R¹, R² each, independently of one another, have the meaning of R^{2A} in Claim 6,
c denotes 0, 1 or 2, and
d denotes 1 or 2.

2. Liquid-crystalline medium according to Claim 1, **characterised in that** the medium comprises at least one compound of the formula I-1 to I-10, 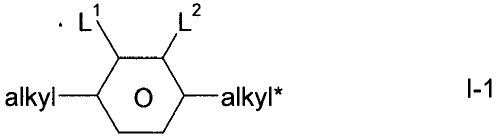 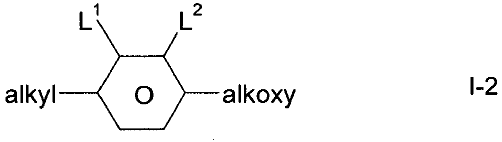 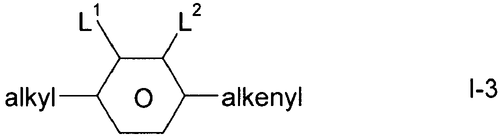 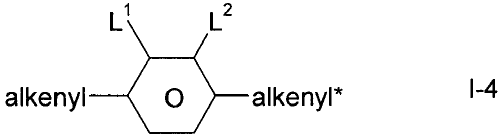 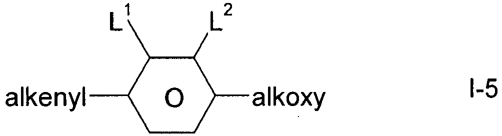 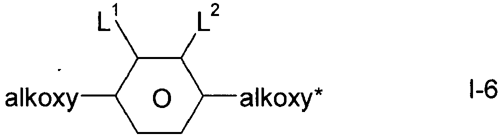 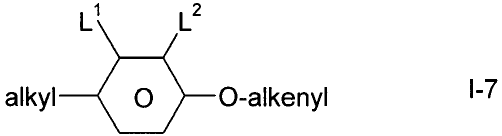 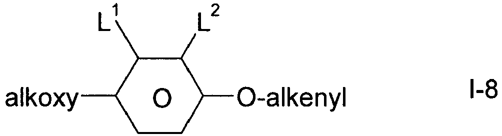 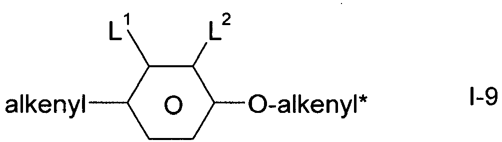 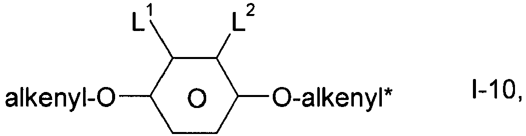 in which
alkyl and alkyl* each, independently of one another, denote a straight-chain alkyl radical having 1-6 C atoms,
alkenyl and alkenyl* each, independently of one another, denote a straight-chain alkenyl radical having 2-6 C atoms,
alkoxy and alkoxy* each, independently of one another, denote a straight-chain alkoxy radical having 1-6 C atoms, and
L¹ and L² each, independently of one another, denote F or Cl.

3. Liquid-crystalline medium according to Claim 1 or Claim 2, **characterised in that** the medium comprises at least compound of the formulae IA-1 to I-8

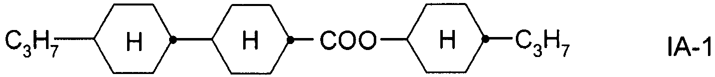

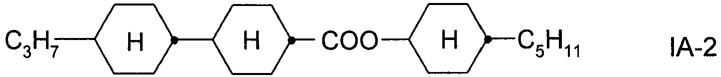

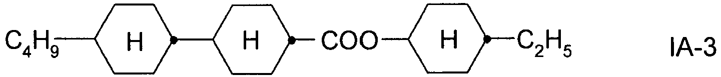

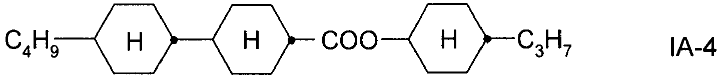

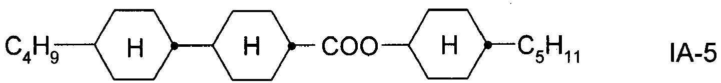

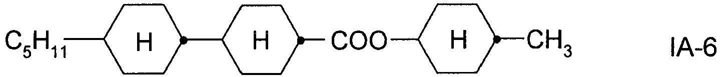

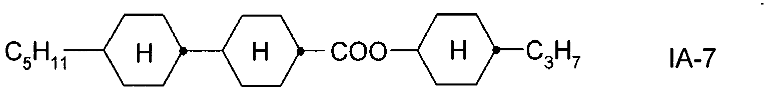

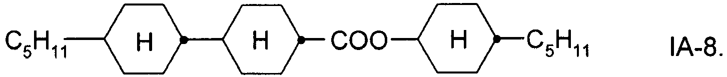

4. Liquid-crystalline medium according to one or more of Claims 1 to 3, **characterised in that** the medium contains two or more compunds of the formula IA.

5. Liquid-crystalline medium according to one or more of Claims 1 to 4, **characterised in that** the medium contains three or more compunds of the formula IA.

6. Liquid-crystalline medium according to to one or more of Claims 1 to 5, **characterised in that** it additionally comprises one or more compounds selected from the group of the compounds of the formulae IIA, IIB and IIC, 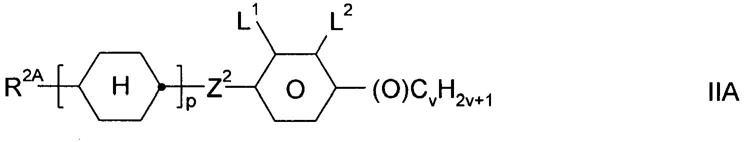 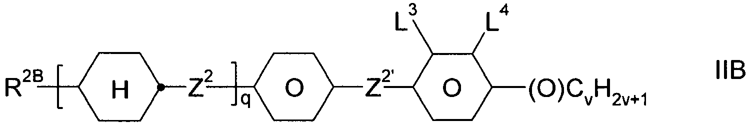 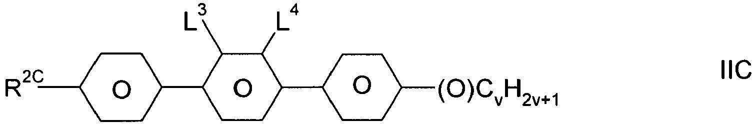 in which
R^{2A}, R^{2B} and R^{2C} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 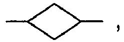 -C≡C-, -CF₂O-, -OCF₂-, -OC-O- or -O-CO- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 1 or 2,
q denotes 0 or 1, and
v denotes 1 to 6.

7. Liquid-crystalline medium according to to one or more of Claims 1 to 6,, **characterised in that** it additionally comprises one or more compounds of the formula III, 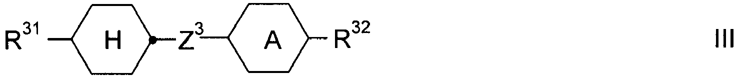 in which
R³¹ and R³² each, independently of one another, denote a straight-chain alkyl, alkoxyalkyl or alkoxy radical having up to 12 C atoms, and 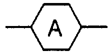 denotes 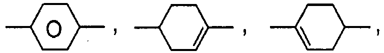 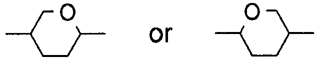
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

8. Liquid-crystalline medium according to one or more of Claims 1 to 7, **characterised in that** the medium additionally comprises at least one compound of the formulae L-1 to L-11, 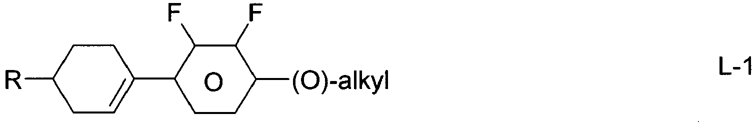 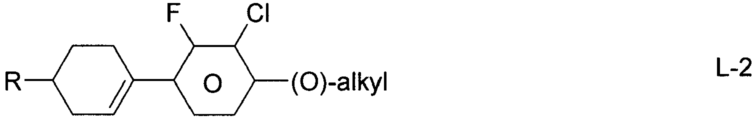 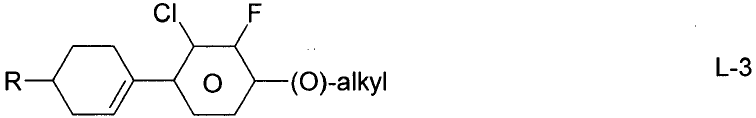 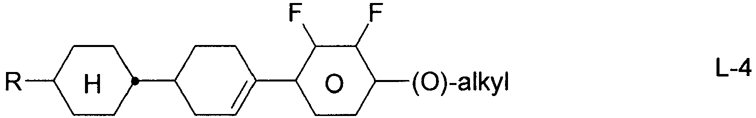 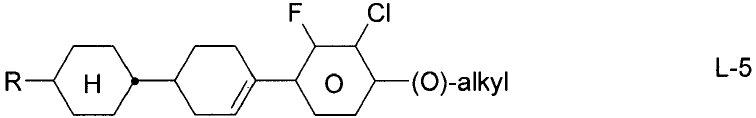 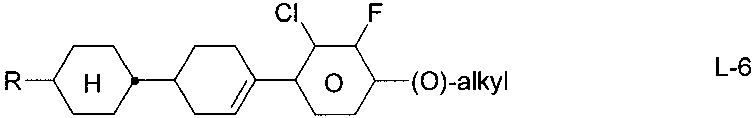 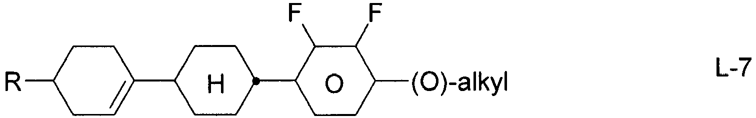 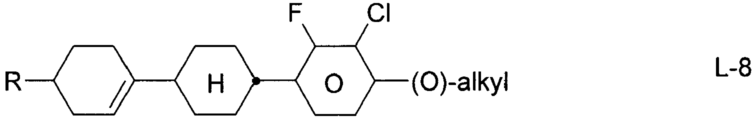 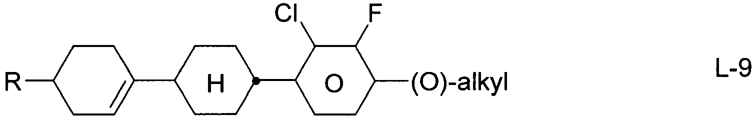 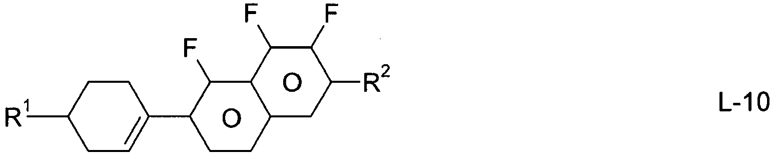 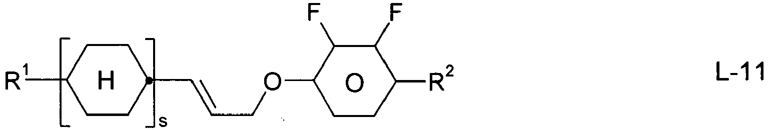 in which
R, R¹ and R² each, independently of one another, have the meanings indicated for R^{2A} in Claim 6, and alkyl denotes an alkyl radical having 1-6 C atoms, and
s denotes 1 or 2.

9. Liquid-crystalline medium according to one or more of Claims 1 to 8, **characterised in that** the medium additionally comprises one or more terphenyls of the formulae T-1 to T-21, 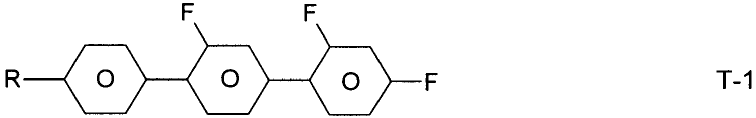 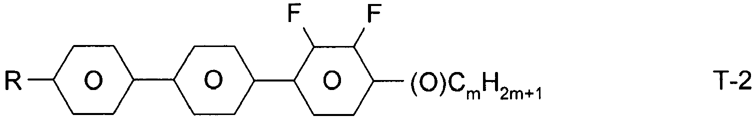 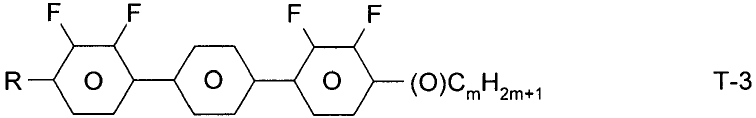 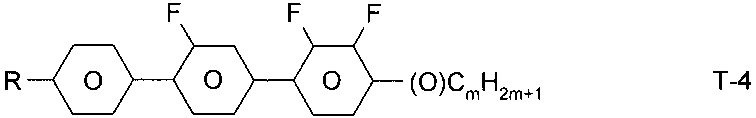 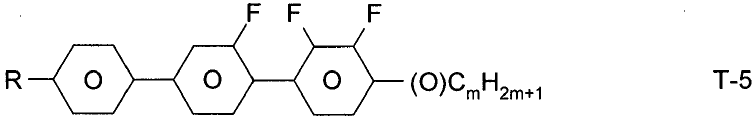 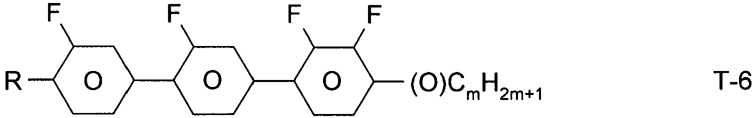 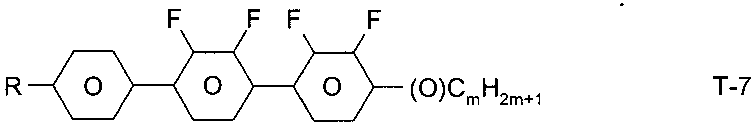 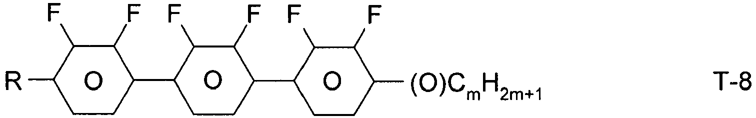 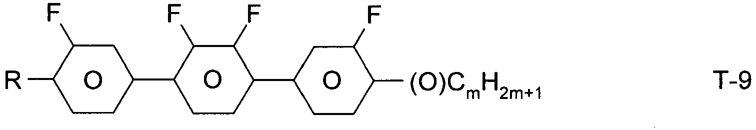 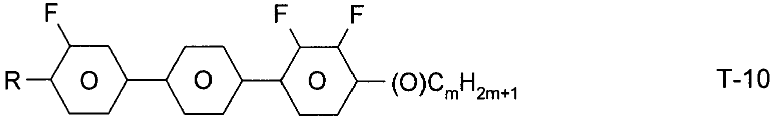 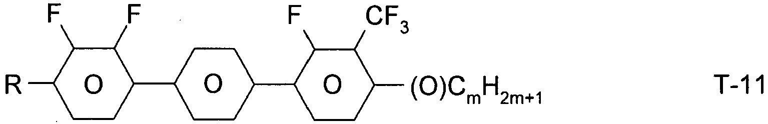 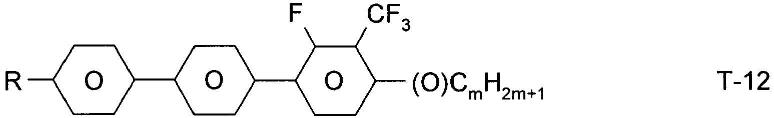 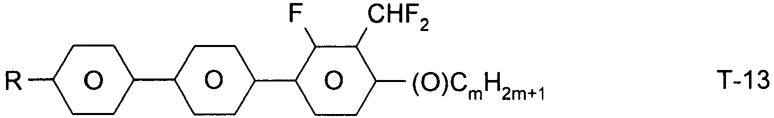 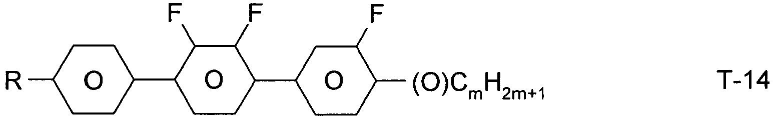 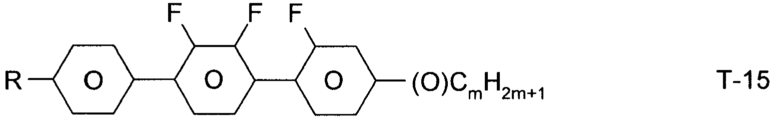 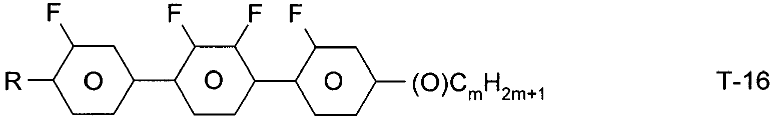 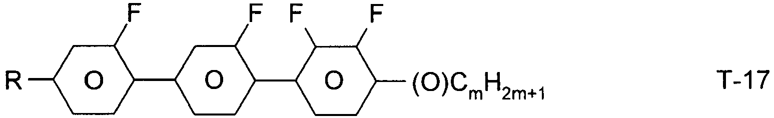 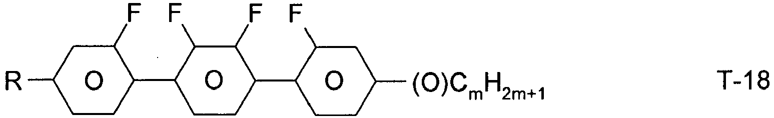 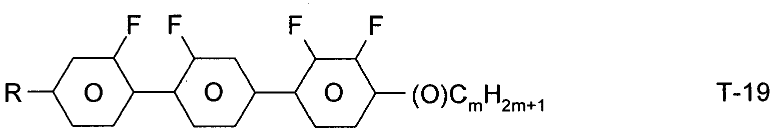 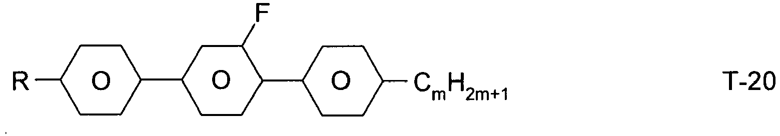 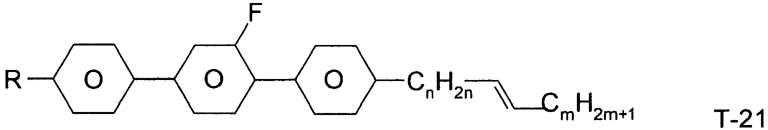 in which
R denotes a straight-chain alkyl or alkoxy radical having 1-7 C atoms, and
m denotes 1-6.

10. Liquid-crystalline medium according to one or more of Claims 1 to 9, **characterised in that** the medium additionally comprises one or more compounds of the formulae O-1 to O-16, 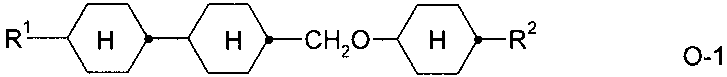 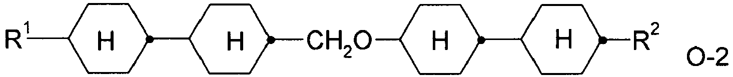 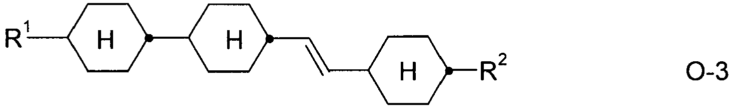 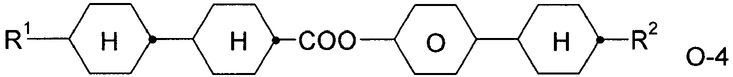 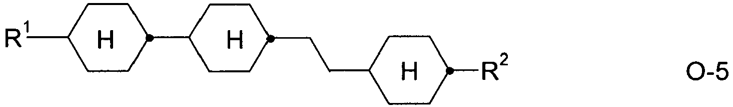 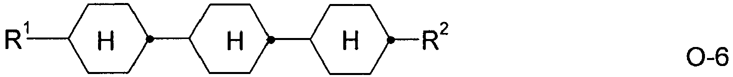 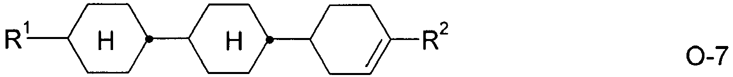 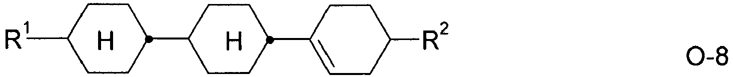 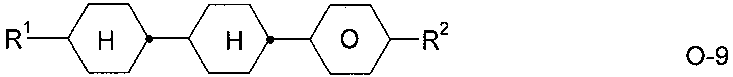 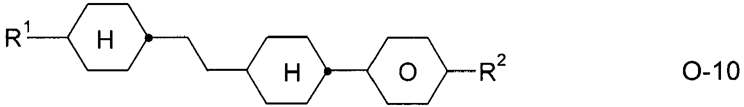 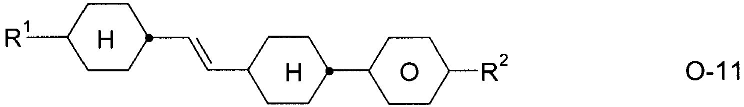 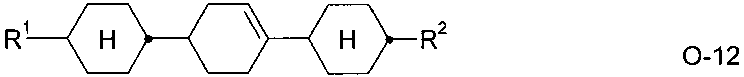 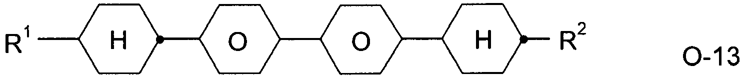 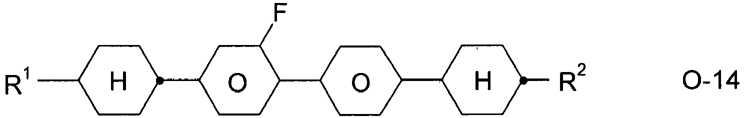 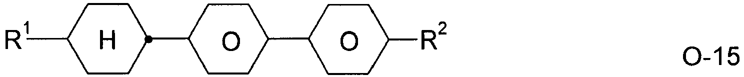 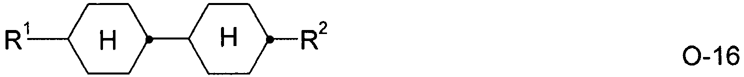 in which R¹ and R² each, independently of one another, have the meanings indicated for R^{2A} in Claim 6.

11. Liquid-crystalline medium according to one or more of Claims 1 to 10, **characterised in that** the medium additionally comprises one or more compounds selected from the following group of two ring compounds:

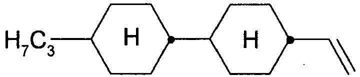

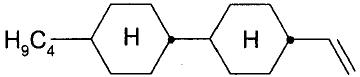

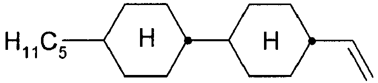

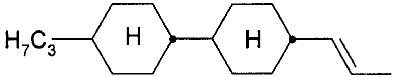

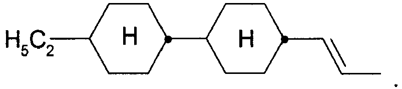

12. Liquid-crystalline medium according to one or more of Claims 1 to 11, **characterised in that** the medium additionally comprises one or more indane compounds of the formula In, 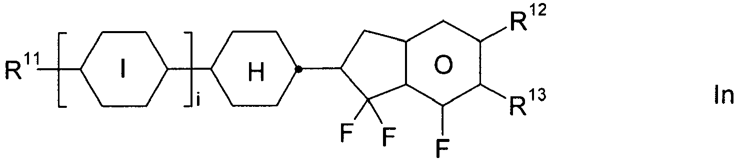 in which
R¹¹, R¹², R¹³ denote a straight-chain alkyl, alkoxy, alkoxyalkyl or alkenyl radical having 1-5 C atoms,
R¹² and R¹³ additionally also denote halogen, 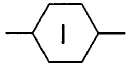 denotes 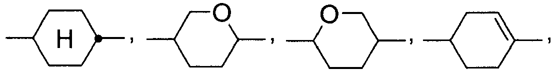 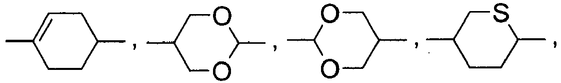 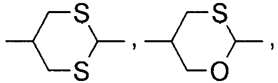
i denotes 0, 1 or 2.

13. Liquid-crystalline medium according to one or more of Claims 1 to 12, **characterised in that** the medium comprises one or more compounds of the formula BC-1 to BC-7, CR-1 to CR-5, BF-1-a to BF-1-c and BS-1 to BS-3, 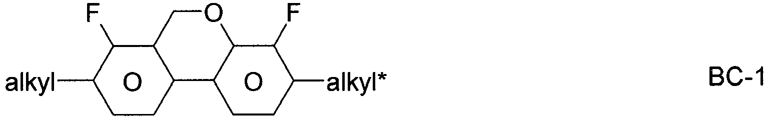 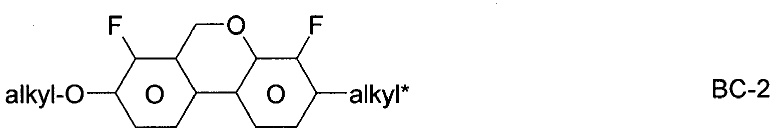 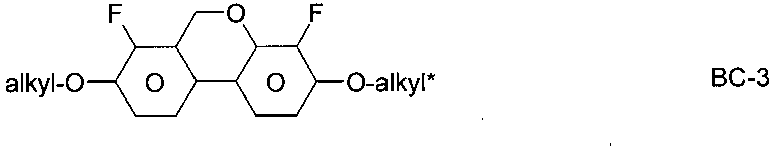 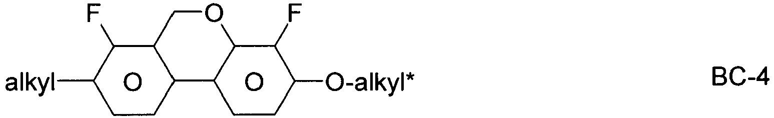 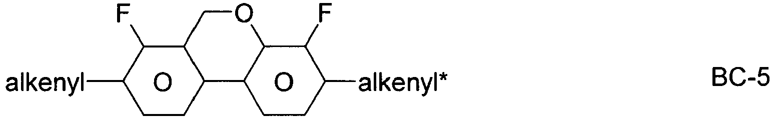 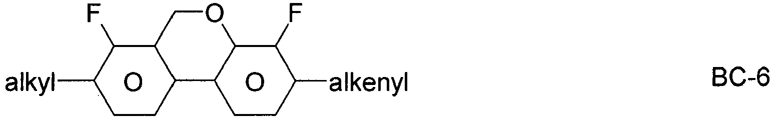 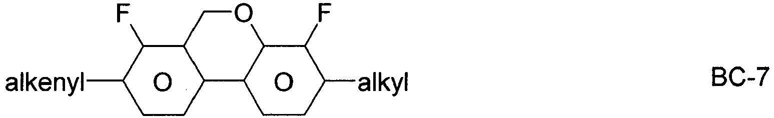 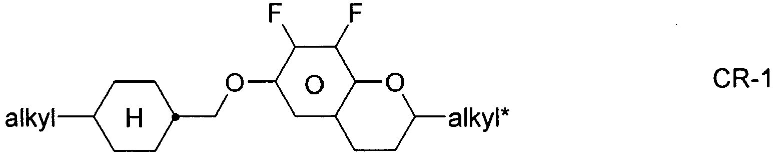 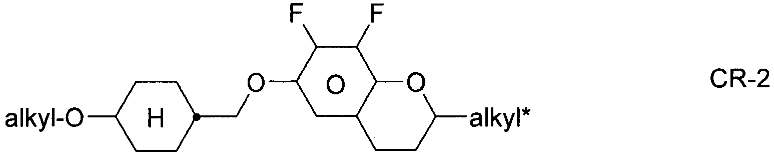 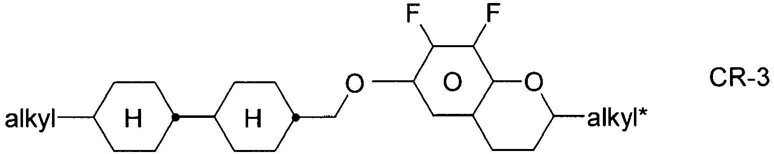 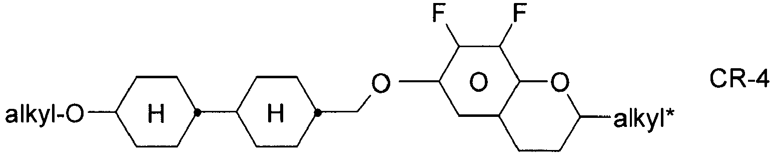 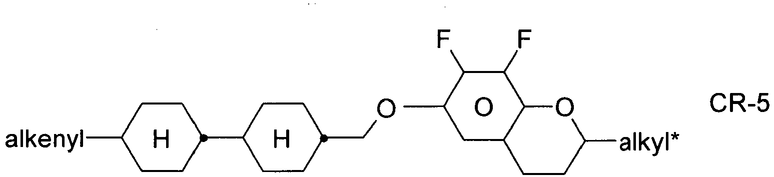 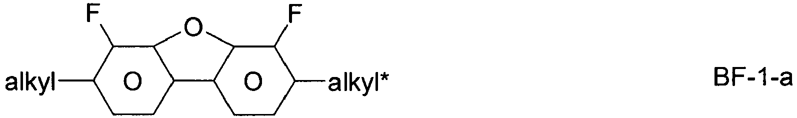 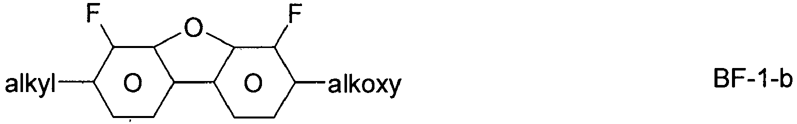 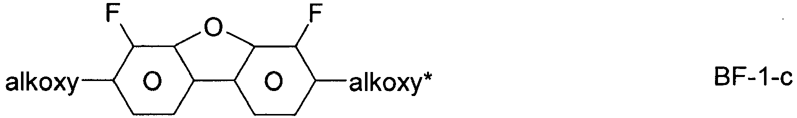 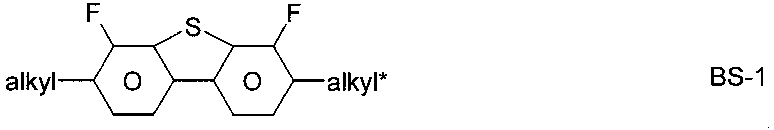 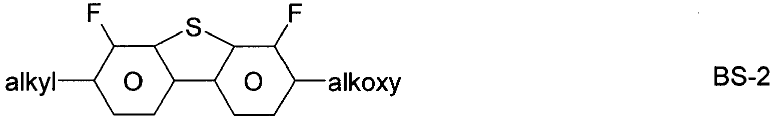 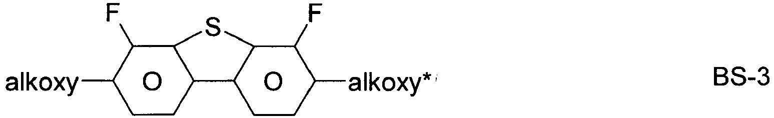 in which
alkyl and alkyl* each, independently of one another, denote a straight-chain alkyl radical having 1-6 C atoms,
alkoxy and
alkoxy* each, independently of one another, denote a straight-chain alkoxy radical having 1-6 C atoms,
alkenyl and alkenyl* each, independently of one another, denote a straight-chain alkenyl radical having 2-6 C atoms.

14. Liquid-crystalline medium according to one or more of Claims 1 to 13, **characterised in that** the proportion of compounds of the formula I in the mixture as a whole is ≥ 1% by weight.

15. Process for the preparation of a liquid-crystalline medium according to one or more of Claims 1 to 14, **characterised in that** at least one compound of the formula I and at least one compound of the formula IA and at least one compound of the formula BC, CR, PH-1, PH-2, BF-1, BF-2 and BS are mixed with at least one further liquid-crystalline compound, and additives are optionally added.

16. Use of the liquid-crystalline medium according to one or more of Claims 1 to 14 in electro-optical displays.

17. Electro-optical display having active-matrix addressing, **characterised in that** it contains, as dielectric, a liquid-crystalline medium according to one or more of Claims 1 to 14.

18. Electro-optical display according to Claim 17, **characterised in that** it is a passive matrix display.

19. Electro-optical display according to Claim 17 or 18, **characterised in that** it is a VA, PSA, PS-VA, PVA, MVA, PM-VA, PALC, FFS, UB-FFS, PS-FFS, IPS or PS-IPS display.

## Patentansprüche

1. Flüssigkristallines Medium auf der Basis einer Mischung von polaren Verbindungen, **dadurch gekennzeichnet, dass** es mindestens eine Verbindung der Formel I 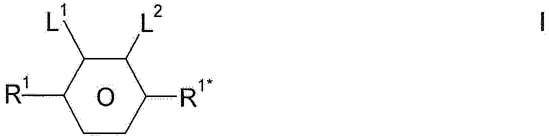 und
mindestens eine Verbindung der Formel IA 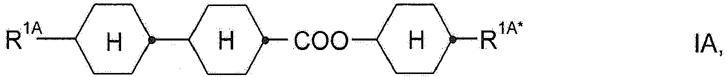 worin
R¹, R¹*, R^{1A} und R^{A1}* jeweils unabhängig voneinander einen Alkyl- oder Alkoxyrest mit 1 bis 15 C-Atomen bedeuten, wobei in diesen Resten zusätzlich eine oder mehrere CH₂-Gruppen jeweils unabhängig voneinander so durch -C≡C-, -CF₂O-, -CH=CH-, 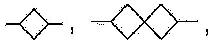 -O-, -CO-O-, -O-CO- ersetzt sein können, dass O-Atome nicht direkt miteinander verknüpft sind, und worin zusätzlich ein oder mehrere H-Atome durch Halogen ersetzt sein können, und
L¹ und L² jeweils unabhängig voneinander F, Cl, CF₃ oder CHF₂ bedeuten
und
zusätzlich eine oder mehrere Verbindungen, die aus der Gruppe der Verbindungen der Formel BC, CR, PH-1, PH-2, BF-1, BF-2 und BS 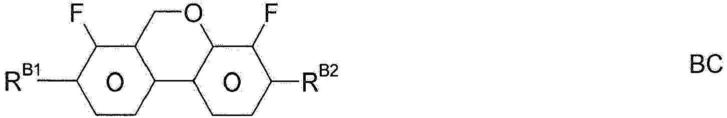 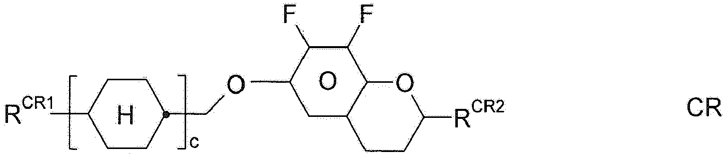 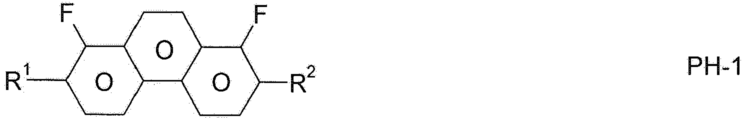 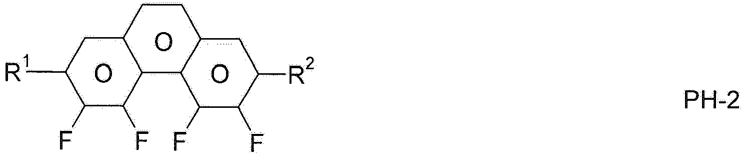 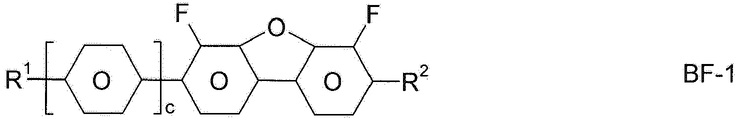 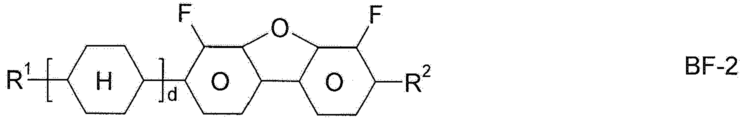 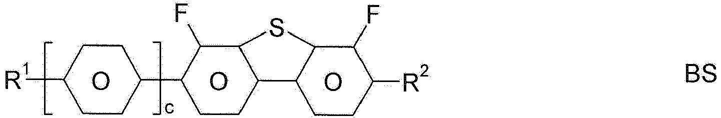 ausgewählt sind, worin
R^{B1}, R^{B2}, R^{CR1}, R^{CR2}, R¹, R² jeweils unabhängig voneinander die Bedeutung von R^{2A} in Anspruch 6 besitzen,
c 0, 1 oder 2 bedeutet, und
d 1 oder 2 bedeutet,
enthält.

2. Flüssigkristallines Medium nach Anspruch 1, **dadurch gekennzeichnet, dass** das Medium mindestens eine Verbindung der Formel I-1 bis I-10 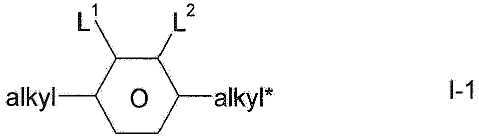 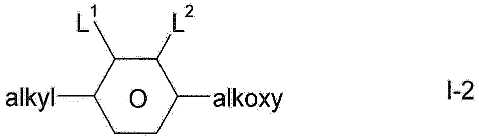 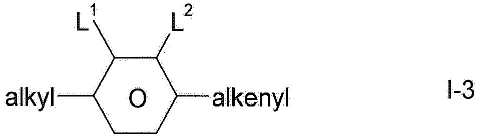 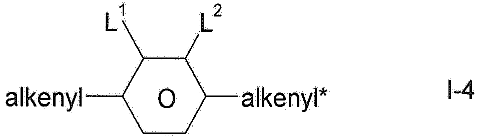 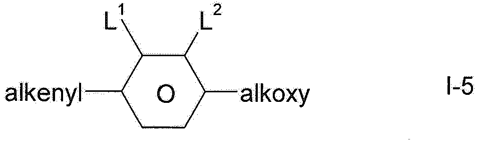 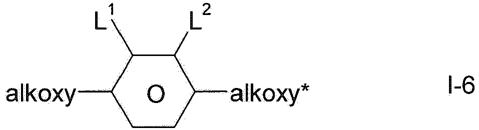 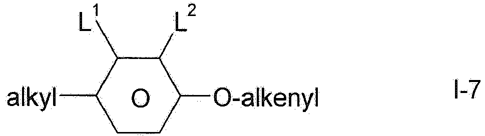 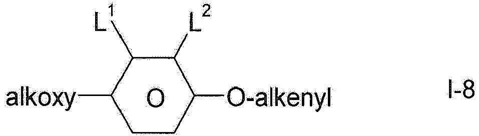 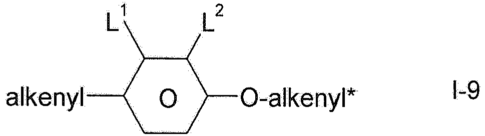 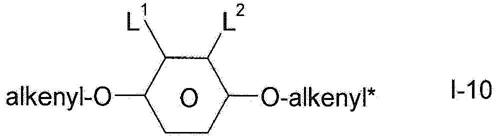 enthält, worin
alkyl und alkyl* jeweils unabhängig voneinander einen geradkettigen Alkylrest mit 1-6 C-Atomen bedeuten,
alkenyl und alkenyl* jeweils unabhängig voneinander einen geradkettigen Alkenylrest mit 2-6 C-Atomen bedeuten,
alkoxy und alkoxy* jeweils unabhängig voneinander einen geradkettigen Alkoxyrest mit 1-6 C-Atomen bedeuten, und
L¹ und L² jeweils unabhängig voneinander F oder Cl bedeuten.

3. Flüssigkristallines Medium nach Anspruch 1 oder Anspruch 2, **dadurch gekennzeichnet, dass** das Medium mindestens eine Verbindung der Formeln IA-1 bis I-8 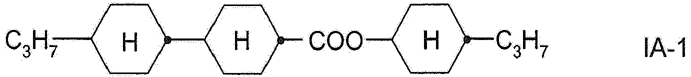 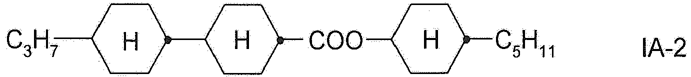 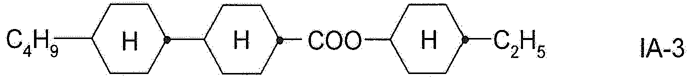 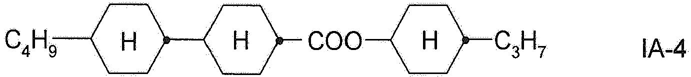 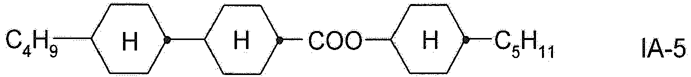 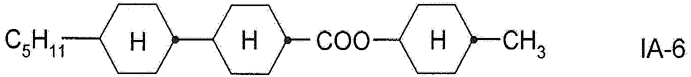 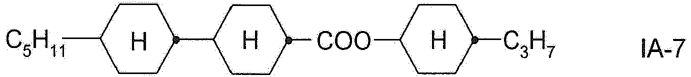 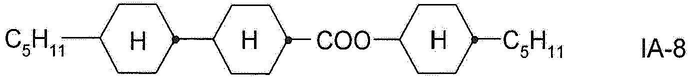 enthält.

4. Flüssigkristallines Medium nach einem oder mehreren der Ansprüche 1 bis 3, **dadurch gekennzeichnet, dass** das Medium zwei oder mehr Verbindungen der Formel IA enthält.

5. Flüssigkristallines Medium nach einem oder mehreren der Ansprüche 1 bis 4, **dadurch gekennzeichnet, dass** das Medium drei oder mehr Verbindungen der Formel IA enthält.

6. Flüssigkristallines Medium nach einem oder mehreren der Ansprüche 1 bis 5, **dadurch gekennzeichnet, dass** es zusätzlich eine oder mehrere Verbindungen enthält, die aus der Gruppe der Verbindungen der Formeln IIA, IIB und IIC 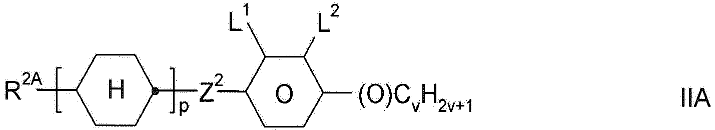 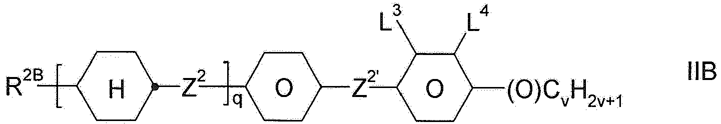 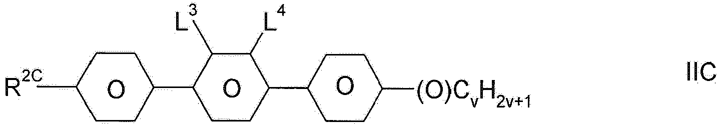 ausgewählt sind, worin
R^{2A}, R^{2B} und R^{2C} jeweils unabhängig voneinander H, einen Alkyl- oder Alkenylrest mit bis zu 15 C-Atomen bedeuten, der unsubstituiert oder einfach durch CN oder CF₃ oder mindestens einfach durch Halogen substituiert ist, wobei in diesen Resten zusätzlich eine oder mehrere CH₂-Gruppen so durch -O-, -S-, 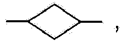 -C≡C-, -CF₂O-, -OCF₂-, -OC-O- oder -O-CO- ersetzt sein können, dass O-Atome nicht direkt miteinander verknüpft sind,
L¹⁻⁴ jeweils unabhängig voneinander F oder Cl bedeuten,
Z² und Z^{2'} jeweils unabhängig voneinander eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- bedeuten,
p 1 oder 2 bedeutet,
q 0 oder 1 bedeutet, und
v 1 bis 6 bedeutet.

7. Flüssigkristallines Medium nach einem oder mehreren der Ansprüche 1 bis 6, **dadurch gekennzeichnet, dass** es zusätzlich eine oder mehrere Verbindungen der Formel III 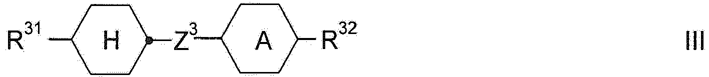 enthält, worin
R³¹ und R³² jeweils unabhängig voneinander einen geradkettigen Alkyl-, Alkoxyalkyl- oder Alkoxyrest mit bis zu 12 C-Atomen bedeuten, und 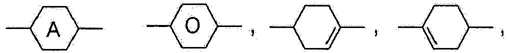 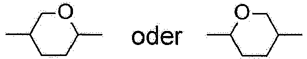 bedeutet,
Z³ eine Einfachbindung, -CH₂CH₂-, -CH=CH-, -CF₂O-, -OCF₂-, -CH₂O-, -OCH₂-, -COO-, -OCO-, -C₂F₄-, -C₄H₉-, -CF=CF- bedeutet.

8. Flüssigkristallines Medium nach einem oder mehreren der Ansprüche 1 bis 7, **dadurch gekennzeichnet, dass** das Medium zusätzlich mindestens eine Verbindung der Formeln L-1 bis L-11 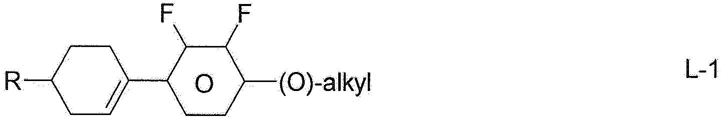 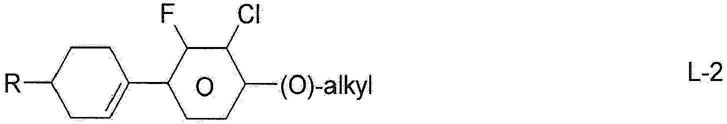 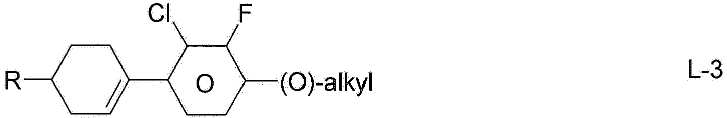 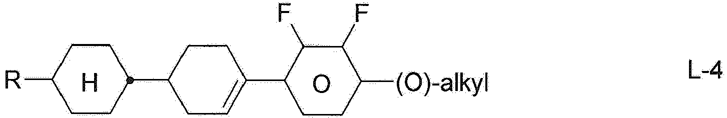 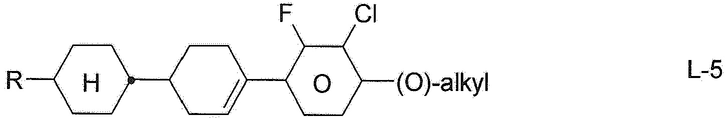 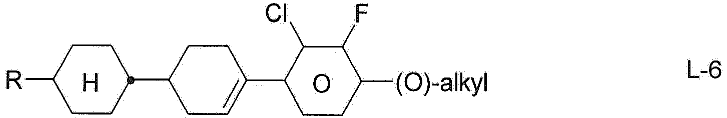 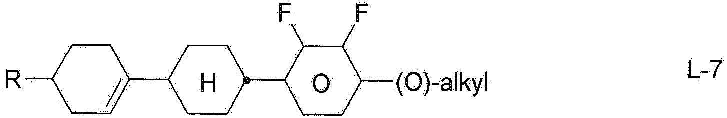 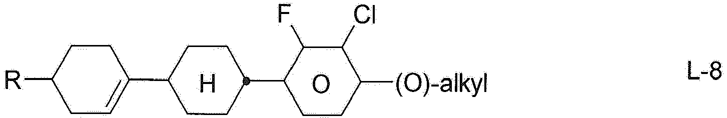 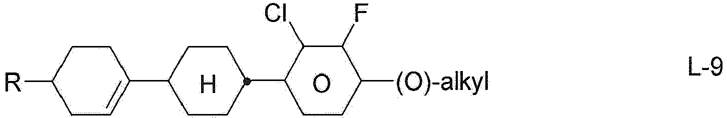 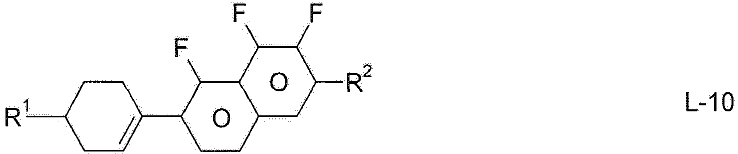 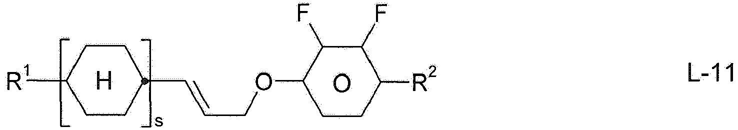 enthält, worin
R, R¹ und R² jeweils unabhängig voneinander die für R^{2A} in Anspruch 6 angegebenen Bedeutungen besitzen und alkyl einen Alkylrest mit 1-6 C-Atomen bedeutet, und
s 1 oder 2 bedeutet.

9. Flüssigkristallines Medium nach einem oder mehreren der Ansprüche 1 bis 8, **dadurch gekennzeichnet, dass** das Medium zusätzlich ein oder mehrere Terphenyle der Formeln T-1 bis T-21 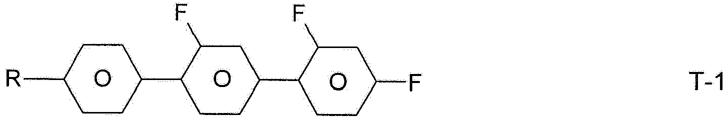 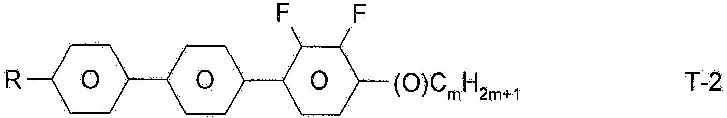 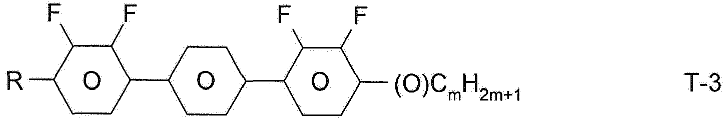 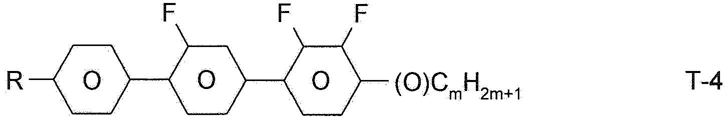 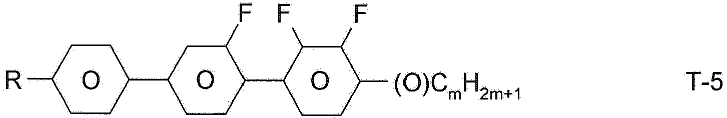 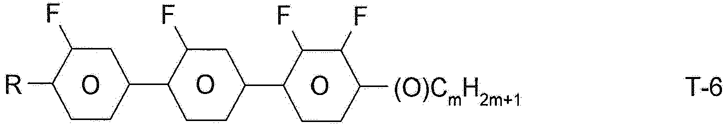 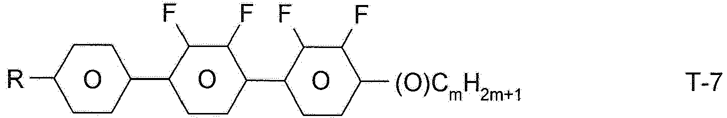 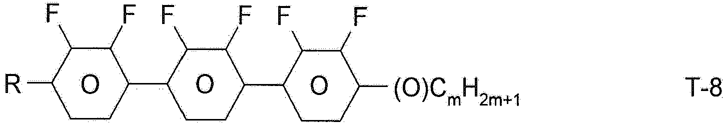 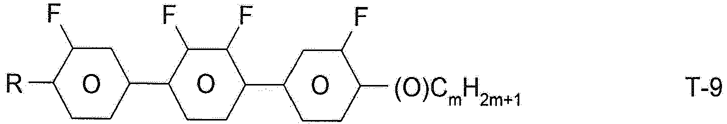 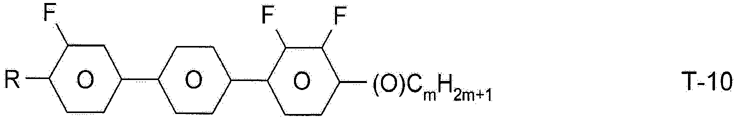 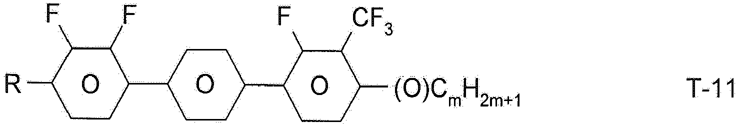 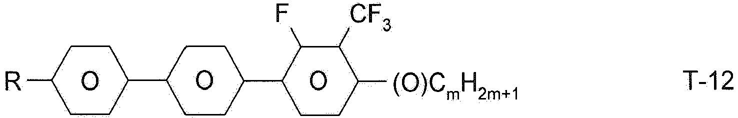 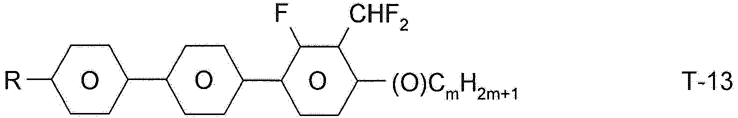 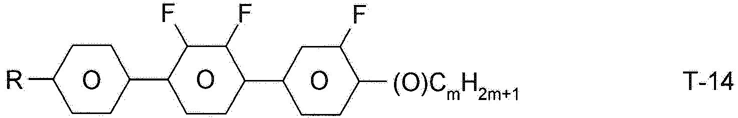 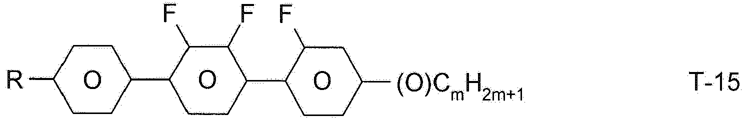 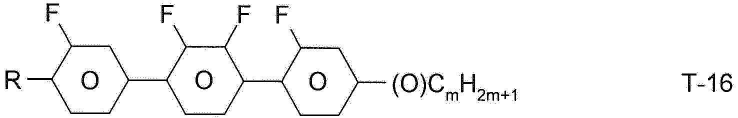 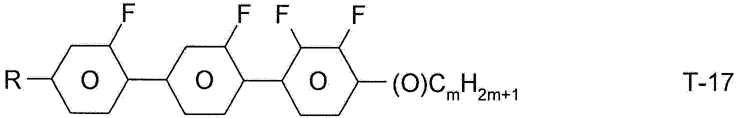 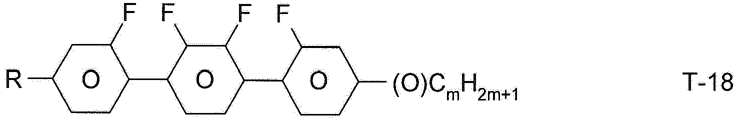 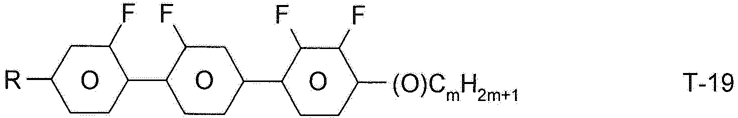 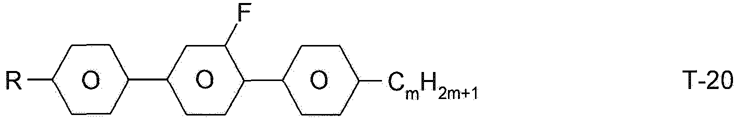 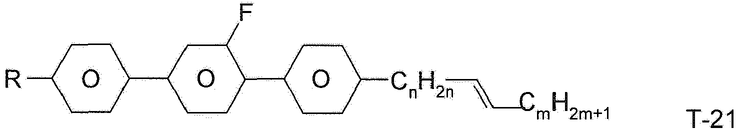 enthält, worin
R einen geradkettigen Alkyl- oder Alkoxyrest mit 1-7 C-Atomen bedeutet, und
m 1-6 bedeutet.

10. Flüssigkristallines Medium nach einem oder mehreren der Ansprüche 1 bis 9, **dadurch gekennzeichnet, dass** das Medium zusätzlich eine oder mehrere Verbindungen der Formeln O-1 bis O-16 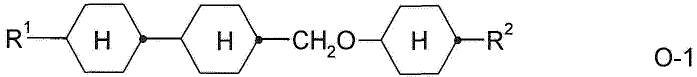 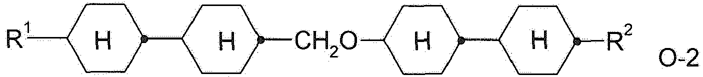 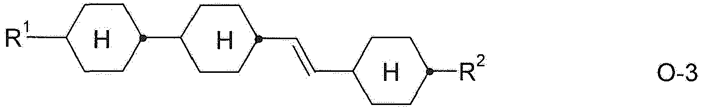 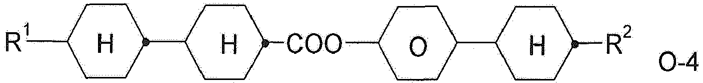 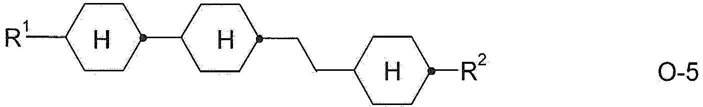 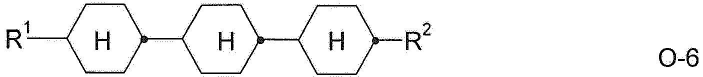 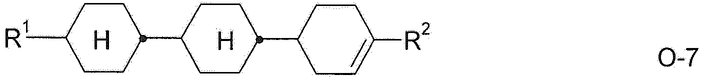 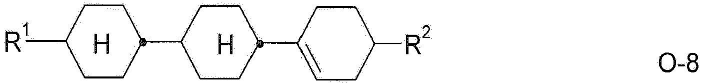 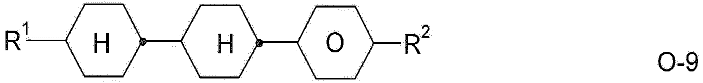 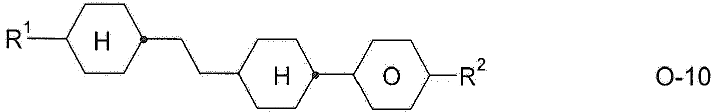 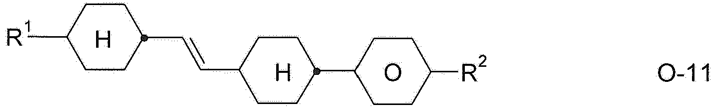 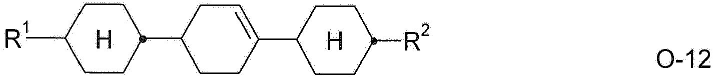 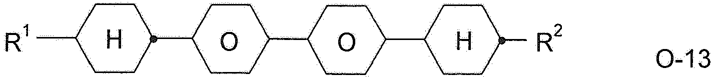 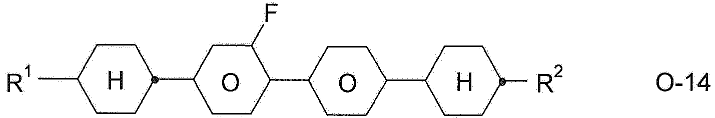 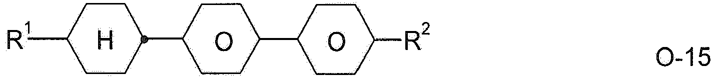 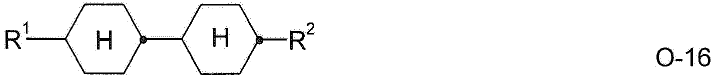 enthält, worin
R¹ und R² jeweils unabhängig voneinander die für R^{2A} in Anspruch 6 angegebenen Bedeutungen besitzen.

11. Flüssigkristallines Medium nach einem oder mehreren der Ansprüche 1 bis 10, **dadurch gekennzeichnet, dass** das Medium zusätzlich eine oder mehrere Verbindungen enthält, die aus der folgenden Gruppe von Zweiringverbindungen ausgewählt sind:

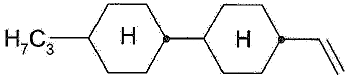

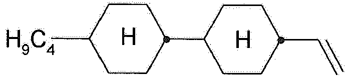

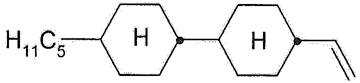

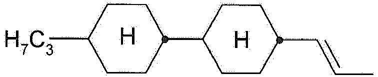

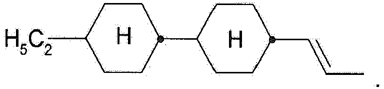

12. Flüssigkristallines Medium nach einem oder mehreren der Ansprüche 1 bis 11, **dadurch gekennzeichnet, dass** das Medium zusätzlich eine oder mehrere Indanverbindungen der Formel In 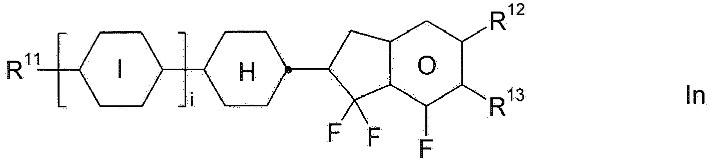 enthält, worin
R¹¹, R¹², R¹³ einen geradkettigen Alkyl-, Alkoxy-, Alkoxyalkyl- oder Alkenylrest mit 1-5 C-Atomen bedeuten,
R¹² und R¹³ zusätzlich auch Halogen bedeuten, 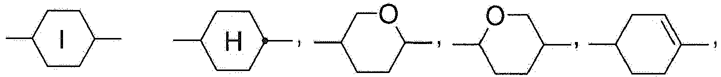 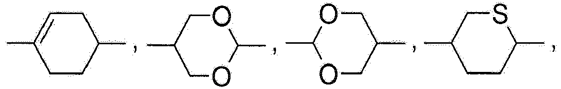 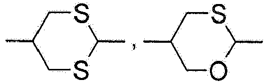 bedeutet,
i 0, 1 oder 2 bedeutet.

13. Flüssigkristallines Medium nach einem oder mehreren der Ansprüche 1 bis 12, **dadurch gekennzeichnet, dass** das Medium eine oder mehrere Verbindungen der Formel BC-1 bis BC-7, CR-1 bis CR-5, BF-1-a bis BF-1-c und BS-1 bis BS-3 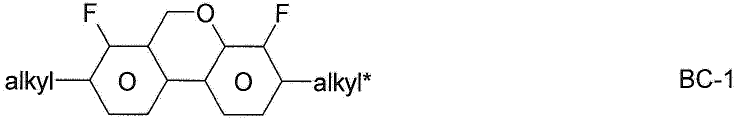 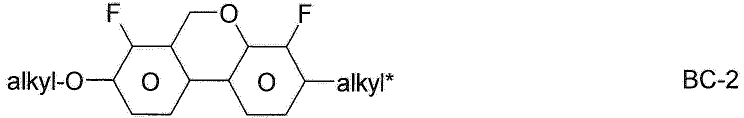 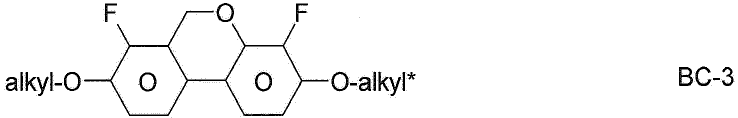 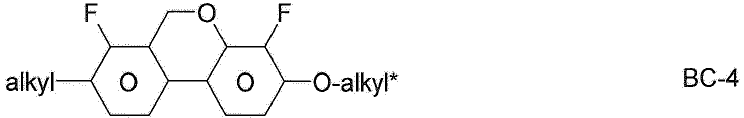 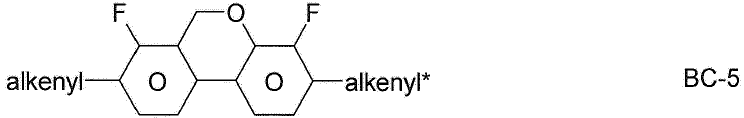 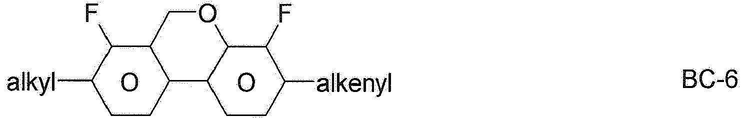 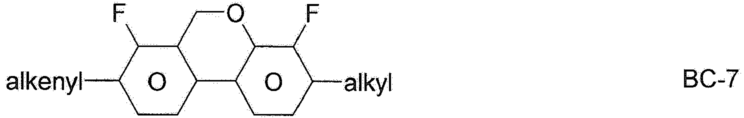 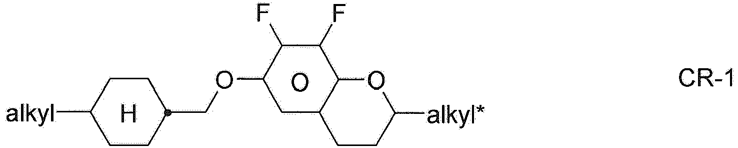 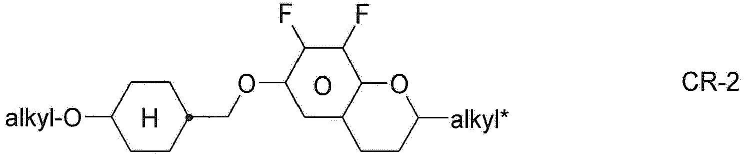 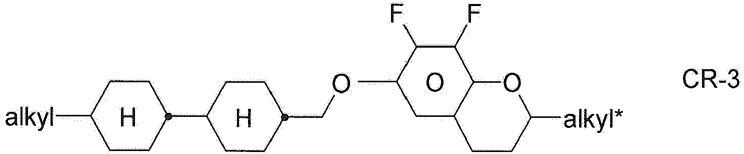 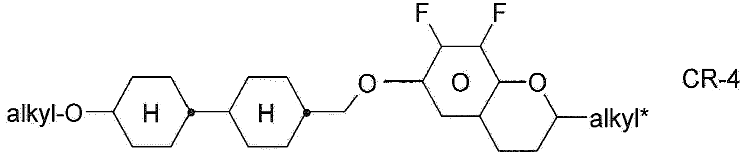 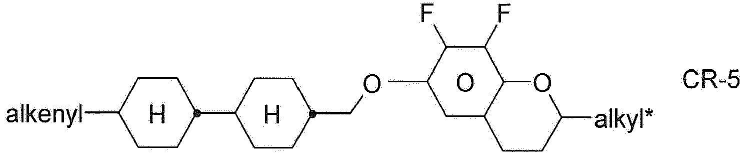 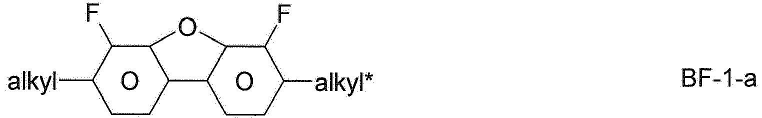 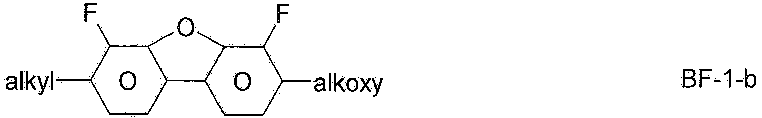 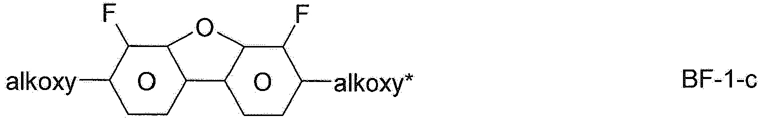 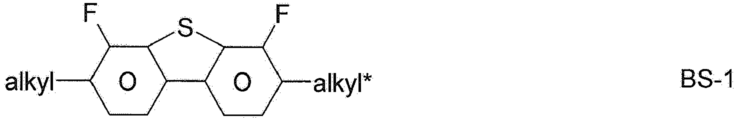 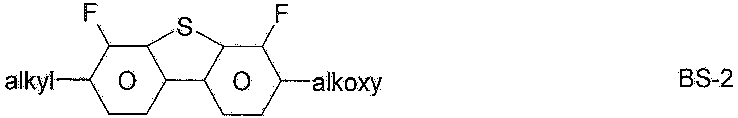 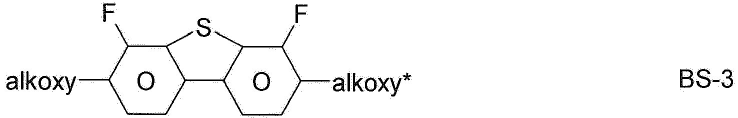 enthält, worin
alkyl und alkyl* jeweils unabhängig voneinander einen geradkettigen Alkylrest mit 1-6 C-Atomen bedeuten,
alkoxy und alkoxy* jeweils unabhängig voneinander einen geradkettigen Alkoxyrest mit 1-6 C-Atomen bedeuten,
alkenyl und alkenyl* jeweils unabhängig voneinander einen geradkettigen Alkenylrest mit 2-6 C-Atomen bedeuten.

14. Flüssigkristallines Medium nach einem oder mehreren der Ansprüche 1 bis 13, **dadurch gekennzeichnet, dass** der Anteil der Verbindungen der Formel I an der Gesamtmischung ≥ 1 Gew.-% beträgt.

15. Verfahren zur Herstellung eines flüssigkristallinen Mediums nach einem oder mehreren der Ansprüche 1 bis 14, **dadurch gekennzeichnet, dass** man mindestens eine Verbindung der Formel I und mindestens eine Verbindung der Formel IA und mindestens eine Verbindung der Formel BC, CR, PH-1, PH-2, BF-1, BF-2 und BS mit mindestens einer weiteren flüssigkristallinen Verbindung mischt und gegebenenfalls Zusatzstoffe zusetzt.

16. Verwendung des flüssigkristallinen Mediums nach einem oder mehreren der Ansprüche 1 bis 14 in elektrooptischen Anzeigen.

17. Elektrooptische Anzeige mit Aktivmatrix-Adressierung, **dadurch gekennzeichnet, dass** sie als Dielektrikum ein flüssigkristallines Medium nach einem oder mehreren der Ansprüche 1 bis 14 enthält.

18. Elektrooptische Anzeige nach Anspruch 17, **dadurch gekennzeichnet, dass** es sich um eine Passivmatrix-Anzeige handelt.

19. Elektrooptische Anzeige nach Anspruch 17 oder 18, **dadurch gekennzeichnet, dass** es sich um eine VA-, PSA-, PS-VA-, PVA-, MVA-, PM-VA-, PALC-, FFS-, UB-FFS-, PS-FFS-, IPS- oder PS-IPS-Anzeige handelt.

## Revendications

1. Milieu cristallin liquide basé sur un mélange de composés polaires, **caractérisé en ce qu'**il comprend au moins un composé de la formule I : 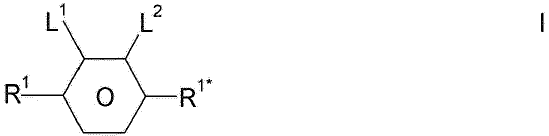 et
au moins un composé de la formule IA : 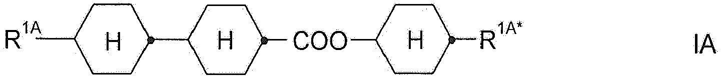 dans lesquelles :
R¹, R¹*, R^{1A} et R^{A1}* représentent chacun, de manière indépendante les uns des autres, un radical alkyle ou alcoxy qui comporte de 1 à 15 atome(s) de C, où, en outre, un ou plusieurs groupe(s) CH₂ dans ces radicaux peut/peuvent chacun être remplacé(s), de manière indépendante les uns des autres, par -C≡C-, -CF₂O-, -CH=CH- 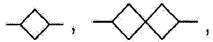 -O-, -CO-O-, -O-CO- de telle sorte que des atomes de O ne soient pas liés directement les uns aux autres, et où, en outre, un ou plusieurs atome(s) de H peut/ peuvent être remplacé(s) par halogène ; et
L¹ et L² représentent chacun, de manière indépendante l'un de l'autre, F, Cl, CF₃ ou CHF₂ ;
et
de façon additionnelle, un ou plusieurs composé(s) qui est/sont sélectionné(s) parmi le groupe de composés des formules BC, CR, PH-1, PH-2, BF-1, BF-2 et BS : 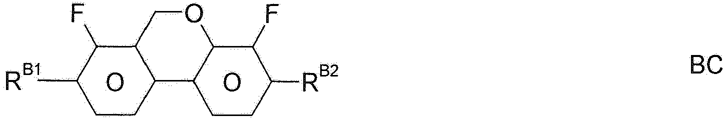 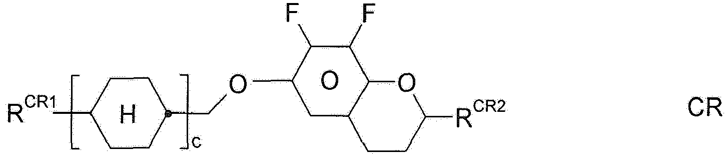 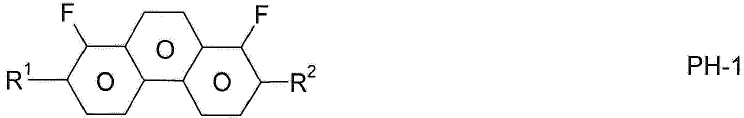 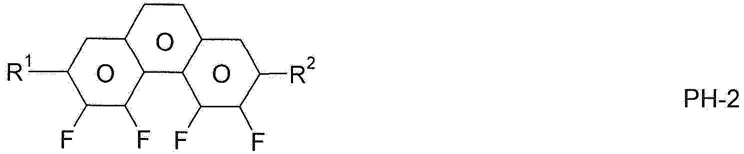 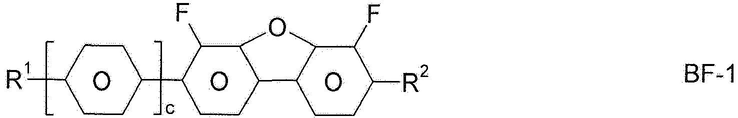 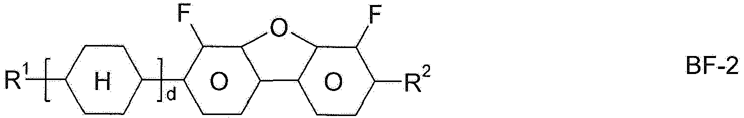 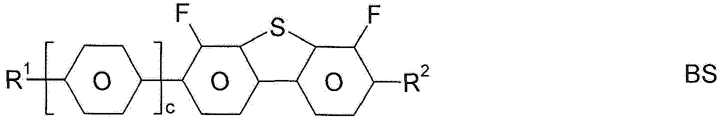 dans lesquelles :
R^{B1}, R^{B2}, R^{CR1}, R^{CR2}, R¹, R² présentent chacun, de manière indépendante les uns des autres, la signification de R^{2A} selon la revendication 6 ;
c représente 0, 1 ou 2 ; et
d représente 1 ou 2.

2. Milieu cristallin liquide selon la revendication 1, **caractérisé en ce que** le milieu comprend au moins un composé des formules I-1 à I-10 : 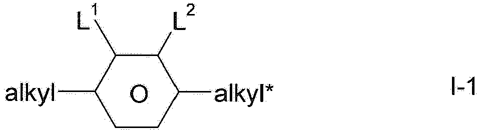 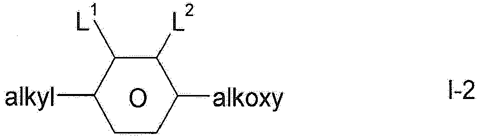 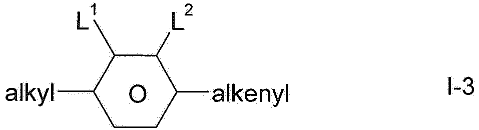 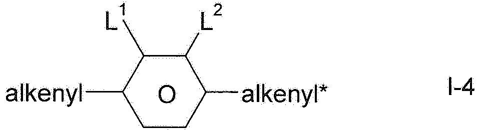 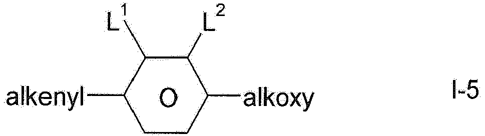 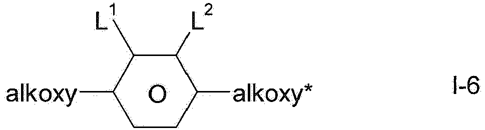 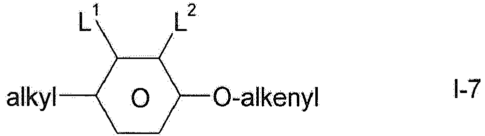 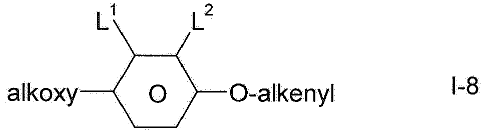 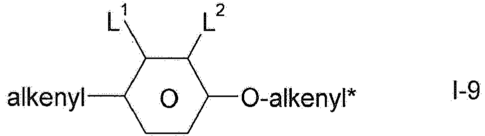 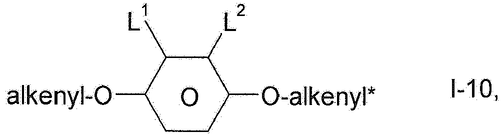 dans lesquelles :
alkyl et alkyl* représentent chacun, de manière indépendante l'un de l'autre, un radical alkyle en chaîne droite qui comporte de 1 à 6 atome(s) de C ; et
alkenyl et alkenyl* représentent chacun, de manière indépendante l'un de l'autre, un radical alkényle en chaîne droite qui comporte de 2 à 6 atomes de C ;
alkoxy et alkoxy* représentent chacun, de manière indépendante l'un de l'autre, un radical alcoxy en chaîne droite qui comporte de 1 à 6 atome(s) de C ; et
L¹ et L² représentent chacun, de manière indépendante l'un de l'autre, F ou Cl.

3. Milieu cristallin liquide selon la revendication 1 ou la revendication 2, **caractérisé en ce que** le milieu comprend au moins un composé des formules IA-1 à I-8 :

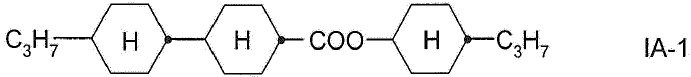

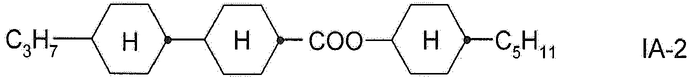

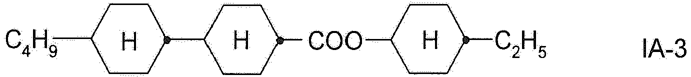

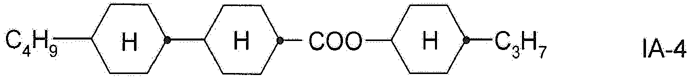

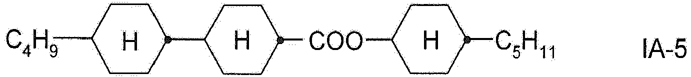

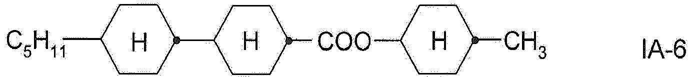

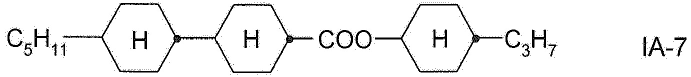

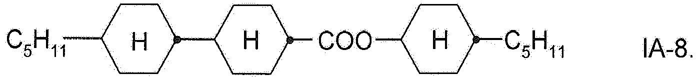

4. Milieu cristallin liquide selon une ou plusieurs des revendications 1 à 3, **caractérisé en ce que** le milieu contient deux composés ou plus de la formule IA.

5. Milieu cristallin liquide selon une ou plusieurs des revendications 1 à 4, **caractérisé en ce que** le milieu contient trois composés ou plus de la formule IA.

6. Milieu cristallin liquide selon une ou plusieurs des revendications 1 à 5, **caractérisé en ce qu'**il comprend de façon additionnelle un ou plusieurs composé(s) qui est/sont sélectionné(s) parmi le groupe de composés des formules IIA, IIB et IIC : 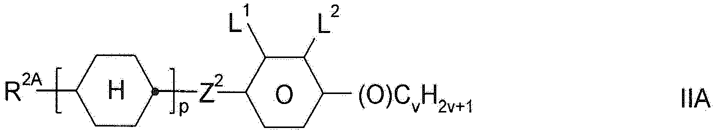 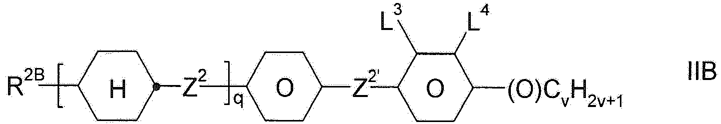 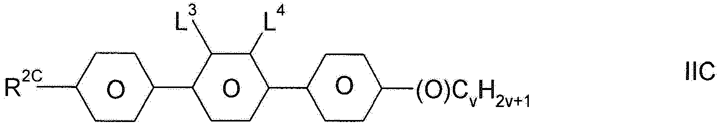 dans lesquelles :
R^{2A}, R^{2B} et R^{2C} représentent chacun, de manière indépendante les uns des autres, H, un radical alkyle ou alkényle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 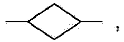 -C≡C-, -CF₂O-, -OCF₂-, -OC-O- ou -O-CO- de telle sorte que des atomes de O ne soient pas liés directement les uns aux autres ;
L¹⁻⁴ représentent chacun, de manière indépendante les uns des autres, F ou Cl ;
Z² et Z^{2'} représentent chacun, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- ;
p représente 1 ou 2 ;
q représente 0 ou 1 ; et
v représente 1 à 6.

7. Milieu cristallin liquide selon une ou plusieurs des revendications 1 à 6, **caractérisé en ce qu'**il comprend de manière additionnelle un ou plusieurs composé(s) de la formule III : 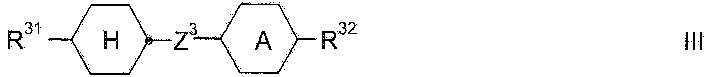 dans laquelle :
R³¹ et R³² représentent chacun, de manière indépendante, un radical alkyle, alcoxyalkyle ou alcoxy en chaîne droite qui comporte jusqu'à 12 atomes de C ; et 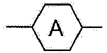 représente 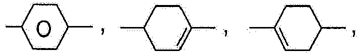 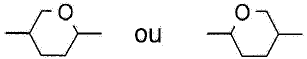
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

8. Milieu cristallin liquide selon une ou plusieurs des revendications Claims 1 à 7, **caractérisé en ce que** le milieu comprend de manière additionnelle au moins un composé des formules L-1 à L-11 : 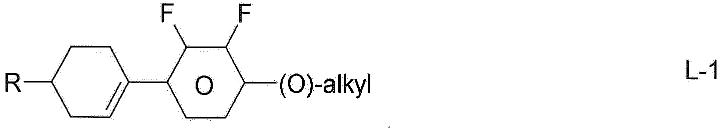 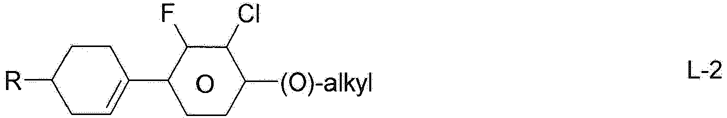 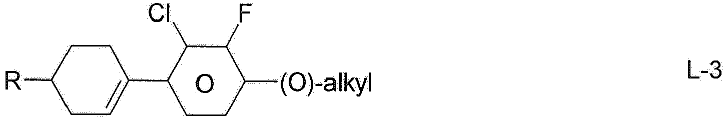 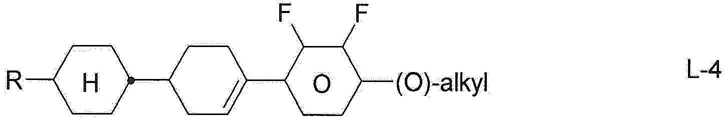 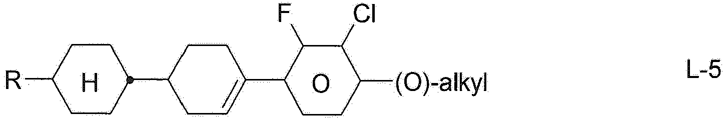 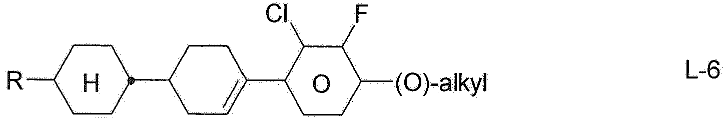 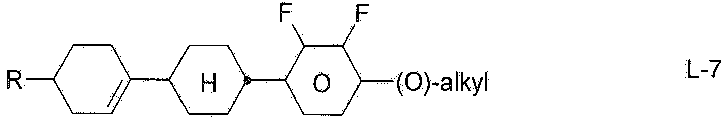 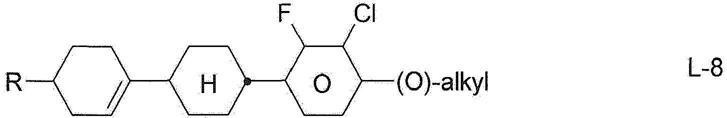 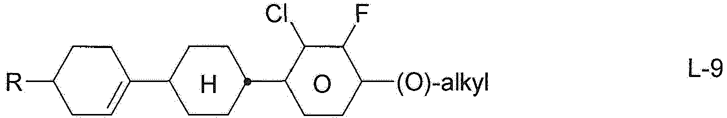 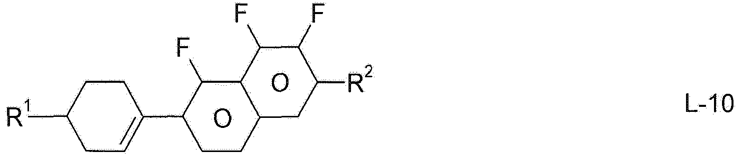 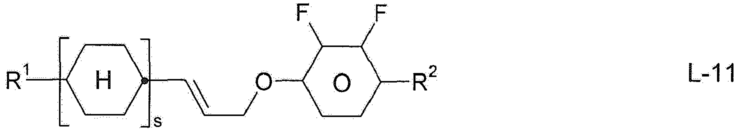 dans lesquelles :
R, R¹ et R² présentent chacun, de manière indépendante les uns des autres, les significations qui ont été indiquées pour R^{2A} selon la revendication 6, et alkyl représente un radical alkyle qui comporte de 1 à 6 atome(s) de C ; et
s représente 1 ou 2.

9. Milieu cristallin liquide selon une ou plusieurs des revendications 1 à 8, **caractérisé en ce que** le milieu comprend de manière additionnelle un ou plusieurs terphényle(s) des formules T-1 à T-21 : 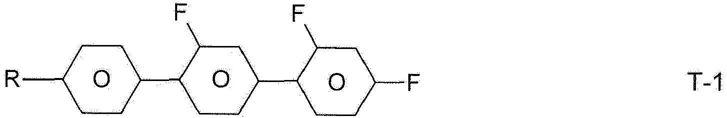 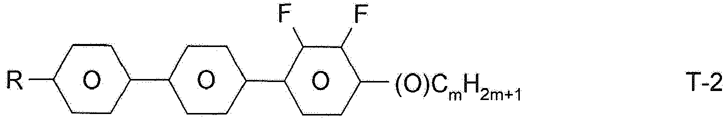 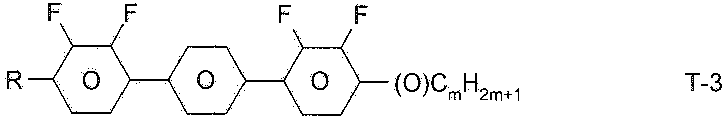 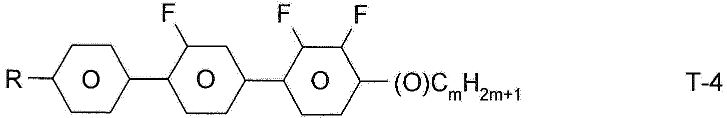 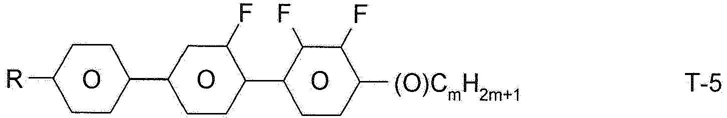 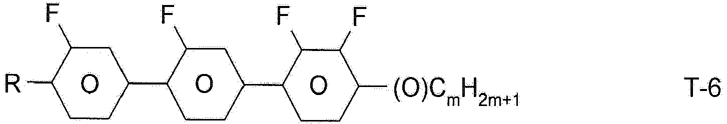 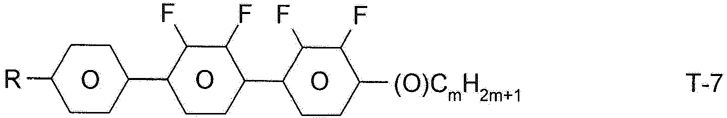 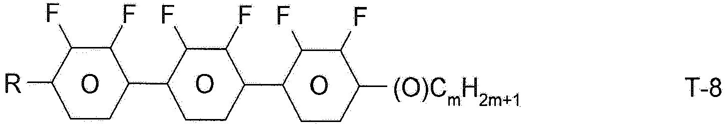 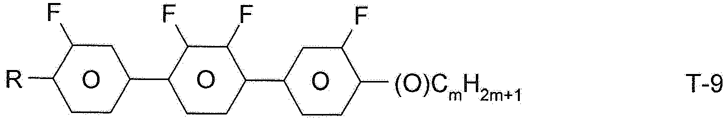 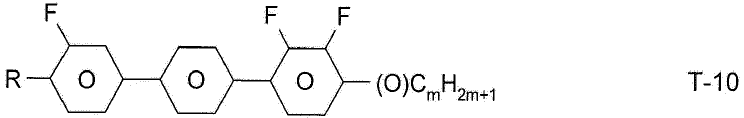 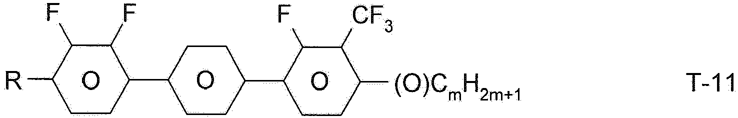 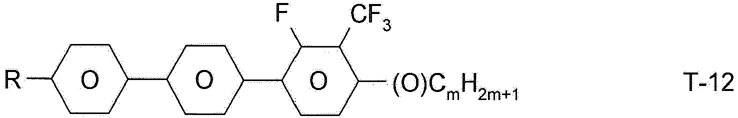 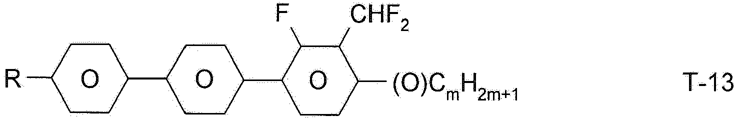 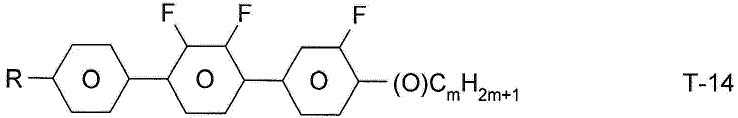 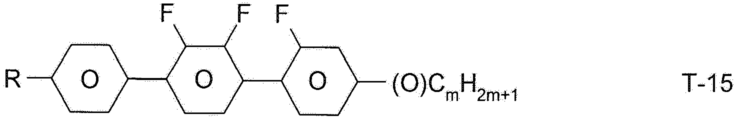 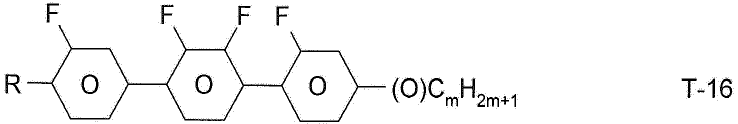 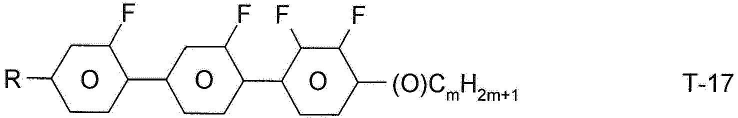 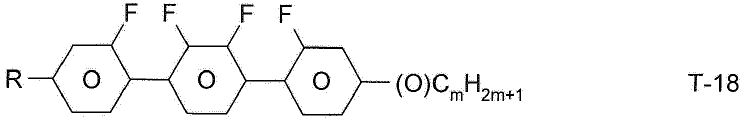 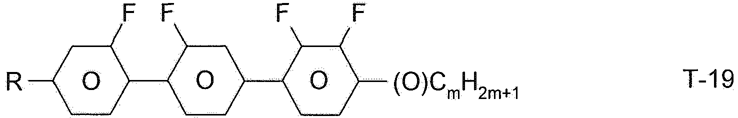 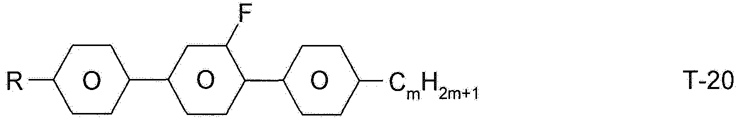 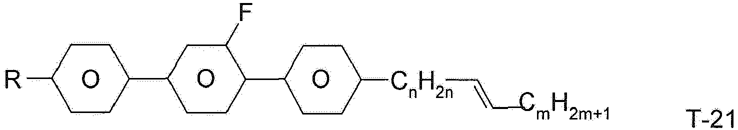 dans lesquelles :
R représente un radical alkyle ou alcoxy en chaîne droite qui comporte de 1 à 7 atome(s) de C ; et
m représente 1 à 6.

10. Milieu cristallin liquide selon une ou plusieurs des revendications 1 à 9, **caractérisé en ce que** le milieu comprend de manière additionnelle un ou plusieurs composé(s) des formules O-1 à O-16 : 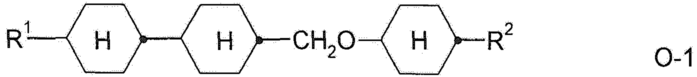 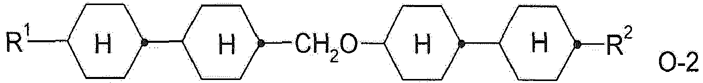 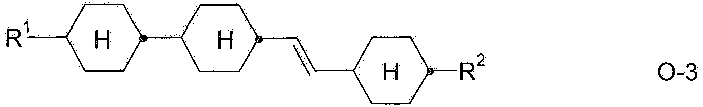 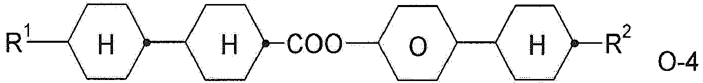 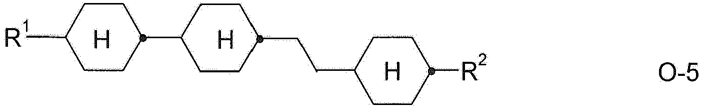 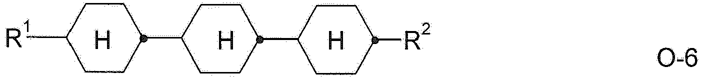 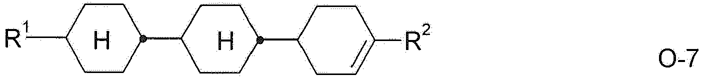 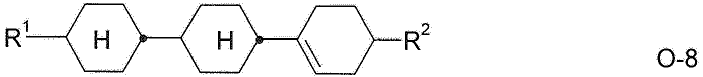 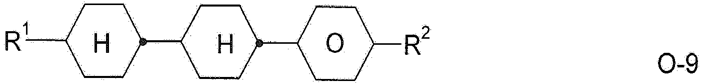 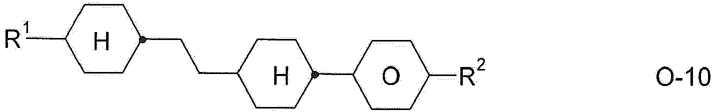 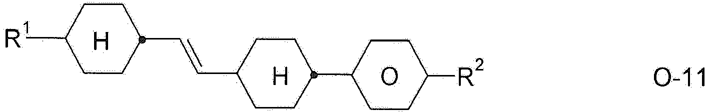 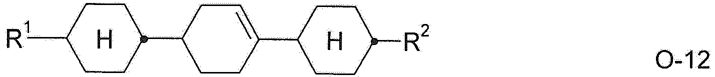 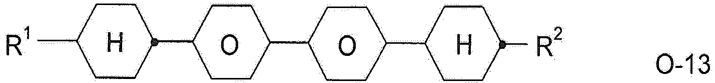 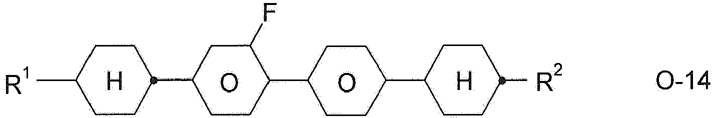 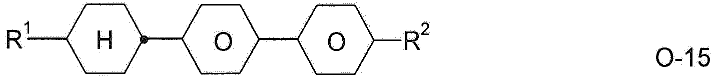 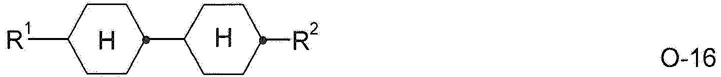 dans lesquelles :
R¹ et R² présentent chacun, de manière indépendante l'un de l'autre, les significations qui ont été indiquées pour R^{2A} selon la revendication 6.

11. Milieu cristallin liquide selon une ou plusieurs des revendications 1 à 10, **caractérisé en ce que** le milieu comprend de manière additionnelle un ou plusieurs composé(s) qui est/sont sélectionné(s) parmi le groupe qui suit de deux composés cyclique :

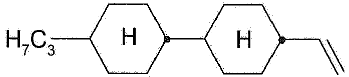

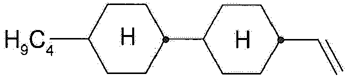

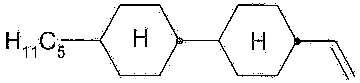

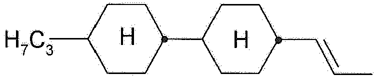

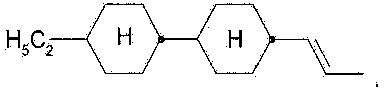

12. Milieu cristallin liquide selon une ou plusieurs des revendications 1 à 11, **caractérisé en ce que** le milieu comprend de manière additionnelle un ou plusieurs composé(s) indane de la formule In : 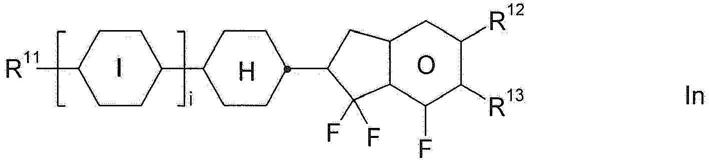 dans laquelle :
R¹¹, R¹², R¹³ représentent un radical alkyle, alcoxy, alcoxyalkyle ou alkényle en chaîne droite qui comporte de 1 à 5 atome(s) de C ;
R¹² et R¹³ représente de façon additionnelle également halogène ; 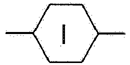 représente 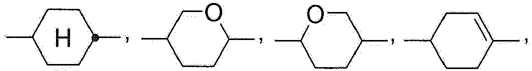 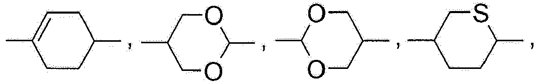 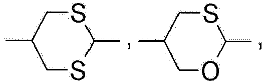
i représente 0, 1 ou 2.

13. Milieu cristallin liquide selon une ou plusieurs des revendications 1 à 12, **caractérisé en ce que** le milieu comprend un ou plusieurs composé(s) des formules BC-1 à BC-7, CR-1 à CR-5, BF-1-a à BF-1-c et BS-1 à BS-3 : 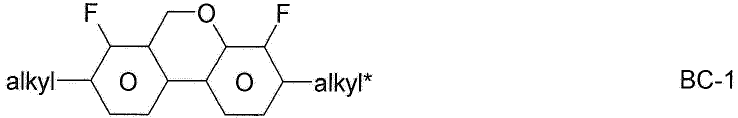 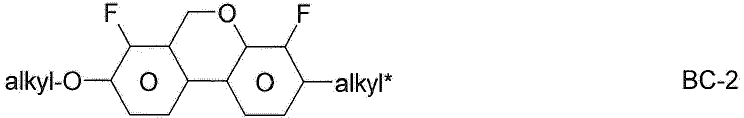 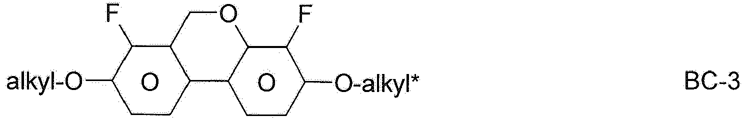 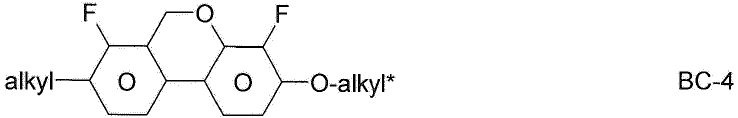 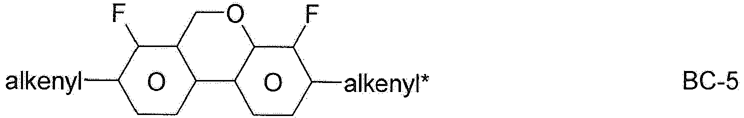 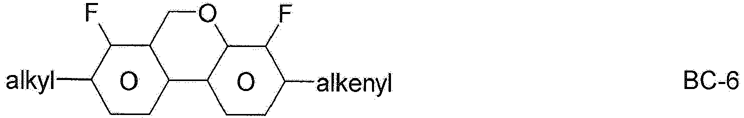 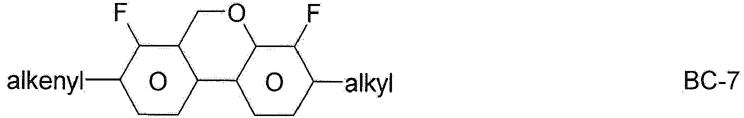 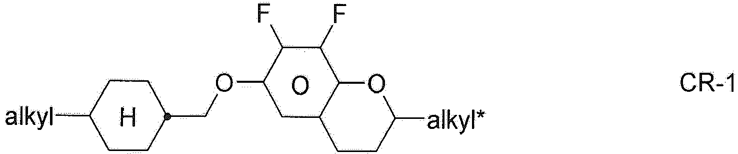 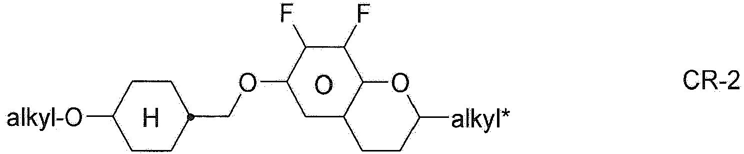 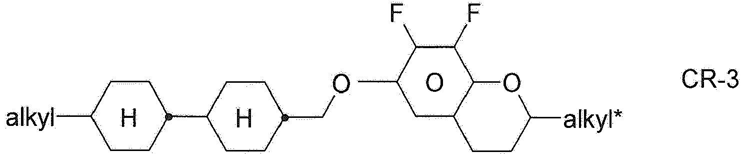 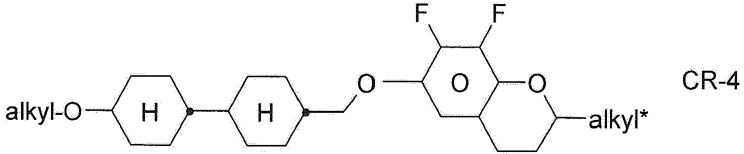 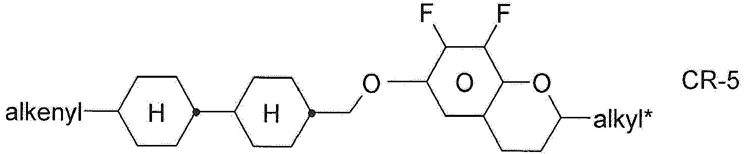 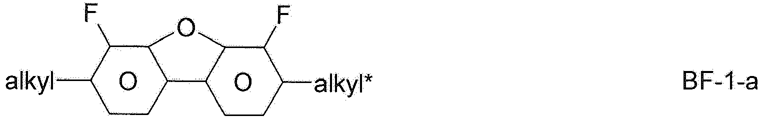 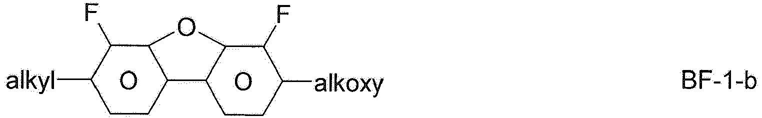 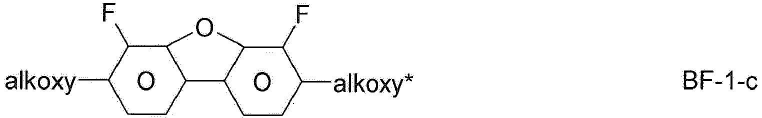 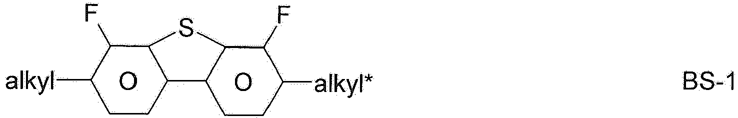 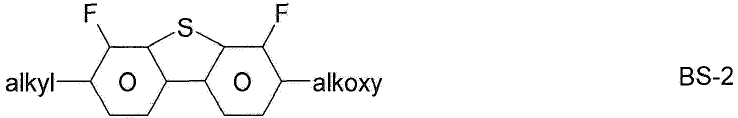 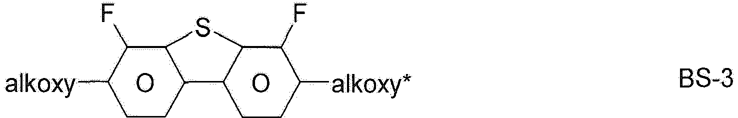 dans lesquelles :
alkyl et alkyl* représentent chacun, de manière indépendante l'un de l'autre, un radical alkyle en chaîne droite qui comporte de 1 à 6 atome(s) de C ;
alkoxy et alkoxy* représentent chacun, de manière indépendante l'un de l'autre, un radical alcoxy en chaîne droite qui comporte de 1 à 6 atome(s) de C ;
alkenyl et alkenyl* représentent chacun, de manière indépendante l'un de l'autre, un radical alkényle en chaîne droite qui comporte de 2 à 6 atomes de C.

14. Milieu cristallin liquide selon une ou plusieurs des revendications 1 à 13, **caractérisé en ce que** la proportion de composés de la formule I dans le mélange pris dans sa globalité est ≥ 1% en poids.

15. Procédé pour la préparation d'un milieu cristallin liquide selon une ou plusieurs des revendications 1 à 14, **caractérisé en ce qu'**au moins un composé de la formule I et au moins un composé de la formule IA et au moins un composé des formules BC, CR, PH-1, PH-2, BF-1, BF-2 et BS sont mélangés avec au moins un autre composé cristallin liquide, et des additifs sont en option ajoutés.

16. Utilisation du milieu cristallin liquide selon une ou plusieurs des revendications 1 à 14 dans des affichages électrooptiques.

17. Affichage électrooptique qui présente un adressage par matrice active, **caractérisé en ce qu'**il contient, en tant que diélectrique, un milieu cristallin liquide selon une ou plusieurs des revendications 1 à 14.

18. Affichage électrooptique selon la revendication 17, **caractérisé en ce qu'**il s'agit d'un affichage par matrice passive.

19. Affichage électrooptique selon la revendication 17 ou 18, **caractérisé en ce qu'**il s'agit d'un affichage VA, PSA, PS-VA, PVA, MVA, PM-VA, PALC, FFS, UB-FFS, PS-FFS, IPS ou PS-IPS.
